(19) Europäisches Patentamt
European Patent Office
Office européen des brevets

(11) EP 2 717 354 A1

(12) **EUROPEAN PATENT APPLICATION**
published in accordance with Art. 153(4) EPC

(43) Date of publication:
**09.04.2014 Bulletin 2014/15**

(21) Application number: **12793787.8**

(22) Date of filing: **29.05.2012**

(51) Int Cl.:
***H01M 4/1391*** *(2010.01)*
***H01M 4/131*** *(2010.01)*
***H01M 4/36*** *(2006.01)*
***H01M 4/525*** *(2010.01)*
***H01M 4/66*** *(2006.01)*

(86) International application number:
**PCT/JP2012/063736**

(87) International publication number:
**WO 2012/165422 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2011 JP 2011122058**
**28.09.2011 JP 2011213426**

(71) Applicant: **Zeon Corporation**
**Chiyoda-ku**
**Tokyo 100-8246 (JP)**

(72) Inventor: **WAKADA, Tsutomu**
**Tokyo 100-8246 (JP)**

(74) Representative: **Vossius & Partner**
**Siebertstrasse 4**
**81675 München (DE)**

(54) **COMPOSITE PARTICLES FOR LITHIUM SECONDARY BATTERY POSITIVE ELECTRODES, METHOD FOR PRODUCING COMPOSITE PARTICLES FOR LITHIUM SECONDARY BATTERY POSITIVE ELECTRODES, METHOD FOR PRODUCING POSITIVE ELECTRODE FOR LITHIUM SECONDARY BATTERIES, POSITIVE ELECTRODE FOR LITHIUM SECONDARY BATTERIES, AND LITHIUM SECONDARY BATTERY**

(57) A composite particle for a lithium secondary battery positive electrode including
a coated active material particle and a binder, wherein the coated active material particle includes a positive electrode active material particle and a coating material that coats a surface of the positive electrode active material particle, and the coating material contains a coating polymer having a specific SP value and optionally a conducting agent; and constituents of the secondary battery and a secondary battery using the same, and methods for producing the same.

EP 2 717 354 A1

## Description

Field

The present invention relates to a method for producing a positive electrode for a lithium secondary battery, a positive electrode for a lithium secondary battery produced by the production method, and a lithium secondary battery using the same.

The present invention also relates to composite particles for a lithium secondary battery positive electrode, a method for producing the composite particles for a lithium secondary battery positive electrode, a positive electrode for a lithium secondary battery that uses the composite particles for a lithium secondary battery positive electrode, a method for producing the positive electrode for a lithium secondary battery, and a battery including the positive electrode for a lithium secondary battery.

Background

A positive electrode constituting a lithium secondary battery such as a lithium ion secondary battery is usually produced by, e.g., applying a positive electrode slurry composition containing a binder, a positive electrode active material, and a solvent onto a current collector formed from, e.g., an aluminum foil and then removing the solvent.

Such a positive electrode slurry composition for use is generally an organic type slurry composition in which a fluorine-based polymer such as polyvinylidene fluoride (PVDF) is used as the binder and an organic solvent such as N-methyl-pyrrolidone (NMP) is used as the solvent.

However, a method using the organic type slurry composition has problems in that recycling of the organic solvent is costly and in that safety of the use of the organic solvent must be ensured. Therefore, there has been studied about use of a slurry composition in which an aqueous type binder capable of being dissolved or dispersed in water is used.

For example, Patent Literature 1 discloses an aqueous slurry composition containing, as a binder, sodium polyacrylate or a styrene-butadiene copolymer containing a carboxyl group. Patent Literature 1 also discloses that a positive electrode for a lithium secondary battery can be obtained by forming a positive electrode active material layer using the slurry composition on a surface of an aluminum foil serving as a current collector.

However, when an aqueous slurry composition is used as in Patent Literature 1, the surface of the aluminum foil serving as a current collector may be corroded due to the influence of water contained in the slurry composition, so that the positive electrode for the lithium secondary battery may not sufficiently function.

In view of the above, for example, Patent Literature 2 discloses a technique in which a protective layer is formed on an aluminum foil serving as a current collector by subjecting the aluminum foil to surface treatment using an oxalate and a compound containing at least one element selected from silicon, chromium, and phosphorus.

There is disclosed in, e.g., Patent Literature 3 a technique for preventing elution of an active material into an electrolyte solution by forming a coating layer including an ionic polymer compound containing lithium on a negative electrode active material layer.

There is also disclosed in, e.g., Patent Literature 4 a technique for preventing formation of a coating layer during charging and discharging by coating a negative electrode active material with a polymer containing an ether group.

There is further disclosed in, e.g., Patent Literature 5 a technique for preventing decomposition of an active material due to generation of an acid derived from a salt in an electrolyte solution by coating a positive electrode active material with a neutral or basic polymer.

Citation List

Patent Literature

Patent Literature 1: U.S. Patent No. 5378560

Patent Literature 2: Japanese Patent Application Laid-Open No. 2000-294252 A (corresponding U.S. Publication: U.S. Patent No. 6455202)
Patent Literature 3: Japanese Patent Application Laid-Open No. 2009-76433 A (corresponding U.S. Publication: U.S. Patent Application Laid-Open No. 2009/061325)
Patent Literature 4: Japanese Translation of PCT International Application No. 2010-534910 A (corresponding U.S. Publication: U.S. Patent Application Laid-Open No. 2011/129729)
Patent Literature 5: Japanese Patent Application Laid-Open No. 2001-146427 A (corresponding Canadian Publication: Canadian Patent Application Laid-Open No. 2320501)

## Summary

### Technical Problem

According to the technique disclosed in Patent Literature 2, the protective layer protects the surface of the aluminum foil, and corrosion of the aluminum foil can be thereby prevented. However, the formation of the protective layer causes an increase in the resistance of the aluminum foil, which then causes an increase in the internal resistance of the lithium secondary battery. This causes a problem of poor rate property and high-temperature cycle property of the lithium secondary battery.

When the technique disclosed in Patent Literature 3 is diverted to the formation of a positive electrode active material layer, the generation of a lithium salt is further facilitated, and the amount of corrosion tends to increase.

When the technique disclosed in Patent Literature 4 is diverted to a positive electrode active material, the polymer that coats the positive electrode active material is dissolved in the electrolyte solution, so that it is difficult to prevent corrosion of the current collector.

With the technique disclosed in Patent Literature 5, because of high basicity of the polymer that coats the positive electrode active material, corrosion tends to be rather promoted.

Accordingly, even with the techniques disclosed in Patent Literatures 3 to 5, it is difficult to achieve a lithium secondary battery in which corrosion of the current collector is prevented and which is excellent in rate property and high-temperature cycle property.

The present invention has been created in view of the foregoing problems, and it is an object to provide a lithium secondary battery component, a lithium secondary battery and production methods for the same that can prevent corrosion of a current collector made of aluminum or an aluminum alloy and can realize a lithium secondary battery having excellent rate property and high-temperature cycle property.

### Solution to Problem

The present inventor has conducted extensive studies to solve the aforementioned problems and found out that, in an aqueous slurry composition containing a positive electrode active material, corrosion of aluminum or an aluminum alloy is caused by elution of a component of the positive electrode active material in the aqueous medium. For example, the inventor has found out that, in an aqueous slurry composition including a positive electrode active material containing nickel, nickel or its compound contained in the positive electrode active material is eluted in the aqueous medium and this causes corrosion of the aluminum or the aluminum alloy. In view of the above, the present inventor has found out that, by coating the surface of particles of the positive electrode active material with a polymer that does not dissolve in the aqueous medium and can swell in the electrolyte solution, the polymer in the slurry composition prevents elution of nickel or its compound contained in the positive electrode active material, so that corrosion can be prevented. The present inventor has also found out that in this case the internal resistance of the lithium secondary battery can be reduced as a result of swelling of the polymer, so that a reduction in battery performance can be suppressed.

The present inventor has also found out that, by coating the surface of the particles of the positive electrode active material with a composite material of a conducting agent and a polymer that is not dissolved in the aqueous medium and can swell in the electrolyte solution, the polymer in the slurry composition prevents elution of a component contained in the positive electrode active material, so that corrosion can be prevented. The present inventor has further found out that, by forming composite particles using the positive electrode active material particles having the coated surface, the internal resistance of the lithium secondary battery can be reduced as a result of swelling of the polymer, so that a reduction in battery performance can be suppressed.

The present inventor has completed the present invention on the basis of the aforementioned findings.

That is, according to the first aspect of the present invention, the following (1) to (8) are provided. Further, according to the second aspect of the present invention, the following (9) to (16) are provided.

(1) A method for producing a positive electrode for a lithium secondary battery, the method comprising: forming a layer of a positive electrode slurry composition containing coated active material particles, a binder, and an aqueous medium on a current collector made of aluminum or an aluminum alloy; and drying the layer of the positive electrode slurry composition, wherein
the coated active material particle includes: a particle of a positive electrode active material containing nickel; and a layer of a polymer that coats a surface of the particle of the positive electrode active material and has an SP value of 8 $(cal/cm^3)^{1/2}$ to 13 $(cal/cm^3)^{1/2}$.

(2) The method for producing a positive electrode for a lithium secondary battery according to (1), wherein: the polymer includes an acidic functional group; and
an acid value of the polymer is 50 mg KOH/g or less.
(3) The method for producing a positive electrode for a lithium secondary battery according to (1) or (2), wherein the coated active material particles are obtained by: fluidizing the particles of the positive electrode active material; and spraying a liquid composition containing the polymer and an aqueous medium onto the fluidized particles of the positive electrode active material.
(4) The method for producing a positive electrode for a lithium secondary battery according to (1) or (2), wherein the coated active material particles are obtained by spraying a liquid composition containing the particles of the positive electrode active material, the polymer, and an aqueous medium.
(5) The method for producing a positive electrode for a lithium secondary battery according to (1) or (2), wherein the coated active material particles are obtained by: precipitating the polymer on the surface of the particles of the positive electrode active material in a liquid composition containing the particles of the positive electrode active material, an aqueous medium, the polymer, and a polyvalent metal compound; causing fine particles having a particle diameter of 5 nm to 500 nm to adhere to the particles of the positive electrode active material on the surface of which the polymer is precipitated; and drying the resultant particles of the positive electrode active material.
(6) The method for producing a positive electrode for a lithium secondary battery according to (1) or (2), wherein the coated active material particles are obtained by: adjusting a pH of a liquid composition containing the particles of the positive electrode active material, an aqueous medium, and the polymer to precipitate the polymer on the surface of the particles of the positive electrode active material; causing fine particles having a particle diameter of 5 nm to 500 nm to adhere to the particles of the positive electrode active material on the surface of which the polymer is precipitated; and drying the resultant particles of the positive electrode active material.
(7) A positive electrode for a lithium secondary battery, obtained by the production method according to any one of (1) to (6).
(8) A lithium secondary battery comprising the positive electrode for a lithium secondary battery according to (7), a negative electrode, a separator, and an electrolyte.
(9) A composite particle for a lithium secondary battery positive electrode, the composite particle comprising a coated active material particle and a binder, wherein
the coated active material particle includes a positive electrode active material particle and a coating material that coats a surface of the positive electrode active material particle, and
the coating material contains a coating polymer having an SP value of 9.5 to 13 $(cal/cm^3)^{1/2}$ and a conducting agent.
(10) The composite particle for a lithium secondary battery positive electrode according to (9), wherein the conducting agent is a conductive carbon material having a diameter within the range of 1 nm to 500 nm in terms of a 50% volume cumulative diameter.
(11) A method for producing the composite particle for a lithium secondary battery positive electrode according to (9) or (10), the method comprising:

the step of dispersing the coated active material particles, the binder, and the conducting agent in an aqueous medium to obtain a slurry composition; and
the step of granulating the slurry composition by spray-drying the slurry composition.

(12) A positive electrode for a lithium secondary battery, comprising: a current collector made of aluminum or an aluminum alloy; and a positive electrode active material layer that is formed on the current collector and includes the composite particles for a lithium secondary battery positive electrode according to (9) or (10).
(13) The positive electrode for a lithium secondary battery according to (12), wherein, in the positive electrode active material layer, the composite particles for a lithium secondary battery positive electrode are mutually bonded.
(14) A method for producing a positive electrode for a lithium secondary battery, the method comprising
the step of compressing the composite particles for a lithium secondary battery positive electrode according to (9) or (10) to form a positive electrode active material layer.
(15) The method for producing a positive electrode for a lithium secondary battery according to (14), wherein the compressing is roll compressing.
(16) A lithium secondary battery comprising the positive electrode for a lithium secondary battery according to (12) or (13).

## Advantageous Effects of Invention

According to the present invention, a lithium secondary battery component, a lithium secondary battery and production methods for the same that can prevent corrosion of a current collector made of aluminum or an aluminum alloy and can realize a lithium secondary battery excellent in rate property and high-temperature cycle property can be provided.

Description of Embodiments

The present invention will be described in detail by way of embodiments and exemplifications. However, the present invention is not limited to the following embodiments and exemplifications and may be embodied with any modifications within the scope of the claims and equivalents thereto.

In the present description, "(meth)acryl-" means "acryl-" or "methacryl-". A "positive electrode active material" means an electrode active material for a positive electrode, and a "negative electrode active material" means an electrode active material for a negative electrode. A "positive electrode active material layer" means an electrode active material layer provided in the positive electrode, and a "negative electrode active material layer" means an electrode active material layer provided in the negative electrode.

[A. Method for producing positive electrode for lithium secondary battery, positive electrode for lithium secondary battery, and lithium secondary battery according to first aspect of the present invention]

In the following sections [A1. Summary of method for producing positive electrode for lithium secondary battery] to [A8-4. Method for producing lithium secondary battery], description will be given of a method for producing a positive electrode for a lithium secondary battery, the positive electrode for the lithium secondary battery, and the lithium secondary battery according to a first aspect of the present invention.

In the following sections [A1. Summary of method for producing positive electrode for lithium secondary battery] to [A8-4. Method for producing lithium secondary battery], matters according to the first aspect of the present invention may be simply referred to as matters according to the present invention. For example, the method for producing a positive electrode for a lithium secondary battery, the positive electrode for a lithium secondary battery, and the lithium secondary battery according to the first aspect of the present invention may be simply referred to as the method for producing a positive electrode for a lithium secondary battery according to the present invention (or more simply the "production method according to the present invention"), the positive electrode for a lithium secondary battery according to the present invention, and the lithium secondary battery according to the present invention, respectively.

[A1. Summary of method for producing positive electrode for lithium secondary battery]

The method for producing a positive electrode for a lithium secondary battery according to the present invention includes forming a layer of a positive electrode slurry composition containing coated active material particles, a binder, and an aqueous medium on a current collector made of aluminum or an aluminum alloy and then drying the positive electrode slurry composition. The coated active material particle used therefor includes: a particle of a positive electrode active material containing nickel; and a layer of a polymer that coats the surface of the positive electrode active material particle and has an SP value of 8 $(cal/cm^3)^{1/2}$ to 13 $(cal/cm^3)^{1/2}$ (hereinafter this polymer may be appropriately referred to as a "coating polymer"). Since the coating polymer layer coats the surface of the positive electrode active material particle, the positive electrode active material contained in the particles can have low tendency to be eluted into the aqueous medium. Therefore, corrosion of the current collector can be prevented, and the rate property and high-temperature cycle property of the lithium secondary battery according to the present invention can thus be improved.

Usually, in the production method according to the present invention, the step of preparing the positive electrode slurry composition, the step of preparing the current collector, the step of applying the positive electrode slurry composition onto the current collector, and the step of drying the applied positive electrode slurry composition are performed. The order of these steps may be arbitrary determined, so long as a desired positive electrode for a lithium secondary battery can be obtained. If necessary, a step other than these steps may be performed.

[A2. Preparation of positive electrode slurry composition]

The positive electrode slurry composition contains the coated active material particles, the binder, and the aqueous medium. The positive electrode slurry composition may further contain an additional component other than the coated active material particles, the binder, and the aqueous medium, so long as the effects of the present invention are not significantly impaired.

[A2-1. Coated active material particles]

The coated active material particle is a particle including a particle of the positive electrode active material; and a layer of the coating polymer that coats the surface of the positive electrode active material particle. The coated active material particles may further include a component other than the positive electrode active material particles and the coating polymer layer, so long as the effects of the present invention are not significantly impaired. For example, the coated active material particles may further include fine particles (hereinafter appropriately referred to as "spacer fine particles").

(i) Particles of positive electrode active material

As the positive electrode active material, an active material containing nickel is used. The positive electrode active material containing nickel is preferable because of its high capacity.
Preferable examples of the positive electrode active material may include an oxide containing nickel. Preferably, the positive electrode active material is a composite oxide further containing lithium.
Examples of the composite oxide that is suitably used as the positive electrode active material may include a material represented by the following formula:

$$LiNi_{1-x}Mn_xO_2.$$

In the aforementioned formula, x represents a number satisfying $0 \leq x \leq 1$.
Usually, when particles of a positive electrode active material containing nickel are mixed with an aqueous medium, elusion of the positive electrode active material into the aqueous medium occurs. In the production method according to the present invention, the particles of the positive electrode active material are coated with the coating polymer aiming at prevention of the elution of the positive electrode active material. However, it is preferable that the positive electrode active material is such that pH of, e.g., a mixed solution obtained by mixing 10 parts by weight of the particles of the positive electrode active material with 100 parts by weight of the aqueous medium is 11 or less. This is because excessively high pH of the mixed solution obtained by mixing the particles of the positive electrode active material with the aqueous medium may possibly reduce handling ability of the positive electrode slurry composition.
The average particle diameter of the particles of the positive electrode active material is preferably 0.01 μm or more and more preferably 0.02 μm or more and is preferably 30 μm or less and more preferably 20 μm or less. When the average particle diameter of the particles of the positive electrode active material is set to be equal to or more than the lower limit of the aforementioned range, the conductivity of the particles of the positive electrode active material can be enhanced, so that the internal resistance of the lithium secondary battery according to the present invention can be reduced. When the average particle diameter is set to be equal to or less than the upper limit, the dispersibility of the coated active material particles in the positive electrode slurry composition can be increased.
As the average particle diameter of the positive electrode active material, a 50% volume cumulative diameter is used. The 50% volume cumulative diameter means a particle diameter when a cumulative volume calculated from a small-diameter side in a particle size distribution measured by a laser diffraction method reaches 50%.
The amount of the particles of the positive electrode active material contained in the positive electrode active material layer is preferably 80% by weight or more and more preferably 90% by weight or more and is preferably 99.5% by weight or less and more preferably 99% by weight or less. When the containing amount of the particles of the positive electrode active material is set to be equal to or more than the lower limit of the aforementioned range, the electric capacity of the lithium secondary battery according to the present invention can be increased. When the containing amount is set to be equal to or less than the upper limit of the aforementioned range, the ratio of the binder in the positive electrode active material layer can be increased, and the binding property between the particles of the positive electrode active material can be improved, so that the cycle property of the lithium secondary battery according to the present invention can be made favorable.

(ii) Layer of coating polymer

The coating polymer means a polymer having an SP value of usually 8 $(cal/cm^3)^{1/2}$ or more, preferably 8.5 $(cal/cm^3)^{1/2}$ or more, and more preferably 9 $(cal/cm^3)^{1/2}$ or more and is usually 13 $(cal/cm^3)^{1/2}$ or less and preferably 12 $(cal/cm^3)^{1/2}$ or less.
The SP value means a solubility parameter. The SP value may be determined in accordance with a method described in J. Brandrup and E.H. Immergut ed., "Polymer Handbook" VII Solubility Parament Values, pp519-559 (John Wiley & Sons, 3rd edition, issued in 1989).
The SP value of a polymer that is not described in the aforementioned "Polymer Handbook" document may be determined in accordance with a "molecular attraction constant method" proposed by Small. In this method, the SP value of a compound is determined from the following formula using the molecular volume of the molecule of the compound and the sum of molecular attraction constants (G), which are characteristic values of the functional groups (atomic groups) constituting the molecule of the compound:

$$\delta = \Sigma G/V = d\Sigma G/M.$$

In the aforementioned formula, δ represents the SP value, EG represents the sum of the molecular attraction constants G, V represents the specific volume, M represents the molecular weight, and d represents the specific gravity.

When a combination of two or more polymers is used to coat the surface of the particles of the positive electrode active material, the SP value of the overall coating polymers forming the layer may be determined by calculation using the SP values of respective polymers and the mixing molar ratio. More specifically, the overall SP value of the coating polymers is calculated as a weighted average of the SP values of respective polymers weighted by the molar ratio.

That the coating polymer has the aforementioned SP value means that the coating polymer is not dissolved in the aqueous medium. Therefore, in the positive electrode slurry composition, portions of the particles of the positive electrode active material that are coated with the coating polymer do not come into contact with the aqueous medium, so that elusion of the positive electrode active material from these portions into the aqueous medium does not occur. The elution of the positive electrode active material into the aqueous medium can thereby be suppressed, so that corrosion of the current collector can be prevented.

That the coating polymer has the aforementioned SP value means also that the coating polymer is swellable with the electrolyte solution in the lithium secondary battery. Therefore, in the lithium secondary battery according to the present invention, the coating polymer does not hinder migration of ions, so that the internal resistance of the positive electrode for a lithium secondary battery according to the present invention can be suppressed to a small level. Usually, the lithium secondary battery contains no water or, even if it does, contains little amount of water. Therefore, even when the coating polymer swells, corrosion of the current collector due to elution of the positive electrode active material does not easily proceed.

However, if the coating polymer is dissolved in the electrolyte solution, the dissolved coating polymer may cause an increase in the internal resistance of the lithium secondary battery. In addition, if the coating polymer is dissolved in the electrolyte solution, corrosion of the current collector of the positive electrode in the lithium secondary battery may proceed, which may then cause reduction in cycle property. Therefore, preferable swellability of the coating polymer with the electrolyte solution is such that the gel ratio of the coating polymer measured using a Soxhlet extractor is preferably 30% or more and more preferably 50% or more. The gel ratio of the coating polymer is usually evaluated using a gel ratio (an electrolyte solution Soxhlet extracted residual gel ratio) calculated by dividing the weight of the coating polymer extracted by refluxing 1.0 g of the coating polymer and 100 mL of the electrolyte solution in a Soxhlet extractor for 6 hours by the original weight of the coating polymer (i.e., 1.0 g).

Therefore, it is preferable that the SP value of the coating polymer is set within an appropriate range in which the coating polymer swells with the electrolyte solution in the lithium secondary battery but is not dissolved in the electrolyte solution. More specifically, it is preferable that the range of the SP value of the coating polymer is set in accordance with the electrolyte solution included in the lithium secondary battery. For example, the absolute value of the difference between the SP value of the coating polymer and the SP value of a solvent for the electrolyte solution in the lithium secondary battery is preferably 1.0 $(cal/cm^3)^{1/2}$ or more and is preferably 7.0 $(cal/cm^3)^{1/2}$ or less, more preferably 5.0 $(cal/cm^3)^{1/2}$ or less, and particularly preferably 3.0 $(cal/cm^3)^{1/2}$ or less.

As the solvent for the electrolyte solution of the lithium secondary battery, a mixture of a high-dielectric constant solvent that has a high dielectric constant and can easily solvate the electrolyte (e.g., ethylene carbonate or propylene carbonate) and a low-viscosity solvent for reducing the viscosity of the electrolyte solution to increase its ionic conductivity (e.g., 1,2-dimethoxyethane, diethyl carbonate, dimethyl carbonate, ethyl methyl carbonate, etc.) is generally used. The types and mixing ratio of the solvents are selected such that the electric conductivity of the electrolyte solution is increased as much as possible. Examples of the correspondence with the solvent for a typical electrolyte solution may be as follows.

For example, when the solvent for the electrolyte solution is a solvent mixture of ethylene carbonate (EC): diethyl carbonate (DEC) = 1:2, the SP value of the coating polymer is preferably 8 $(cal/cm^3)^{1/2}$ or more and more preferably 9 $(cal/cm^3)^{1/2}$ or more and is preferably 13 $(cal/cm^3)^{1/2}$ or less and more preferably 12 $(cal/cm^3)^{1/2}$ or less.

It is preferable that the coating polymer is a polymer dispersible in the aqueous medium. This is for dispersing the coated active material particles in the aqueous medium of the positive electrode slurry composition, to thereby obtain favorable application property of the positive electrode slurry composition.

It is preferable that the coating polymer includes an acidic functional group. In this case, the acid value of the coating polymer is desirably larger than 0 mg KOH/g and is preferably 60 mg KOH/g or less, more preferably 50 mg KOH/g or less, and particularly preferably 30 mg KOH/g or less. In addition, it is preferable that the base number of the coating polymer is usually 5 mg HCl/g or less, preferably 1 mg HCl/g or less, and more preferably 0. By increasing the acid value of the coating polymer (i.e., by reducing the base number), the elution of the positive electrode active material into the aqueous medium can be prevented in a more reliable manner, and corrosion of the current collector can be prevented in a more stable manner. When the acid value is set to be equal to or less than the upper limit of the aforementioned range, the stability of the positive electrode slurry composition can be improved.

Examples of the acidic functional group may include a -COOH group (carboxyl group), an -OH group (hydroxyl group), an $-SO_3H$ group (sulfonic acid group), a - $PO_3H_2$ group (phosphoric acid group), a -PO(OH)(OR) group (R represents a hydrocarbon group), and an oxyalkylene group. As the acidic functional group, one species thereof may be solely used, or two or more species thereof may be used in combination in any ratio.

Preferable examples of the coating polymer may include aqueous type acrylic polymers. The term "aqueous type" used herein means that the acrylic polymer is dispersible in water. The acrylic polymer means a polymer having a (meth)acrylic acid ester monomer unit.

The (meth)acrylic acid ester monomer unit refers to as a monomer unit obtained by polymerization of a (meth)acrylic acid ester monomer. Examples of the (meth)acrylic acid ester monomer may include: alkyl acrylates such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; alkyl methacrylates such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate; and carboxylic acid esters having at least two carbon-carbon double bonds such as ethylene glycol dimethacrylate, diethylene glycol dimethacrylate, and trimethylolpropane triacrylate. Of these, ethyl acrylate, butyl acrylate, and 2-ethylhexyl acrylate are preferable, ethyl acrylate and butyl acrylate are more preferable, and butyl acrylate is particularly preferable. As the (meth)acrylic acid ester monomer, one species thereof may be solely used, or two or more species may be used in combination in any ratio.

The containing ratio of the (meth)acrylic acid ester monomer unit in the acrylic polymer is preferably 28% by weight or more, more preferably 30% by weight or more, and particularly preferably 35% by weight or more and is preferably 78% by weight or less, more preferably 70% by weight or less, and particularly preferably 65% by weight or less. When the containing ratio of the (meth)acrylic acid ester monomer unit is set to be equal to or more than the lower limit of the aforementioned range, the acrylic polymer can be softened, so that the occurrence of cracks in the positive electrode for the lithium secondary battery can be prevented. When the containing ratio of the (meth)acrylic acid ester monomer unit is set to be equal to or less than the upper limit of the aforementioned range, the high-temperature storage property and low-temperature output property of the lithium secondary battery according to the present invention can be made favorable.

For allowing the acrylic polymer to include the aforementioned acidic functional group with the acid value falling within the aforementioned range, it is preferable that the acrylic polymer includes a monomer unit obtained by polymerizing a vinyl monomer having an acidic functional group. Examples of the vinyl monomer having an acidic functional group may include monomers having a carboxylic acid group, monomers having a hydroxyl group, monomers having a sulfonic acid group, monomers having a phosphoric acid group, monomers having a -PO(OH)(OR) group (R represents a hydrocarbon group), and monomers having a lower polyoxyalkylene group.

Examples of the monomers having a carboxylic acid group may include: monocarboxylic acids and derivatives thereof; and dicarboxylic acids, acid anhydrides thereof, and derivatives thereof. Examples of the monocarboxylic acids may include acrylic acid, methacrylic acid, and crotonic acid. Examples of the derivatives of the monocarboxylic acids may include 2-ethylacrylic acid, isocrotonic acid, α-acetoxyacrylic acid, β-trans-aryloxyacrylic acid, α-chloro-β-E-methoxyacrylic acid, and β-diaminoacrylic acid. Examples of the dicarboxylic acids may include maleic acid, fumaric acid, and itaconic acid. Examples of the acid anhydrides of the dicarboxylic acids may include maleic anhydride, acrylic anhydride, methylmaleic anhydride, and dimethylmaleic anhydride. Examples of the derivatives of the dicarboxylic acids may include methylmaleic acid, dimethylmaleic acid, phenylmaleic acid, chloromaleic acid, dichloromaleic acid, and fluoromaleic acid, and other examples thereof may include maleic acid esters such as methyl allyl maleate, diphenyl maleate, nonyl maleate, decyl maleate, dodecyl maleate, octadecyl maleate, and fluoroalkyl maleate. As the vinyl monomer having a carboxylic acid group, one species thereof may be solely used, or two or more species thereof may be used in combination in any ratio.

Examples of the monomers having a sulfonic acid group may include vinylsulfonic acid, methylvinylsulfonic acid, (meth)allylsulfonic acid, styrenesulfonic acid, (meth)acrylic acid-2-sulfonic acid ethyl ester, 2-acrylamide-2-methylpropanesulfonic acid, and 3-allyloxy-2-hydroxypropanesulfonic acid. As the monomer having a sulfonic acid group, one species thereof may be solely used, or two or more species thereof may be used in combination in any ratio.

Examples of the monomers having a phosphoric acid group or a -PO(OH)(OR) group may include phosphoric acid-2-(meth)acryloyloxy ethyl ester, methylphosphoric acid-2-(meth)acryloyloxy ethyl ester, and ethylphosphoric acid-(meth)acryloyloxy ethyl ester. As the monomer having a phosphoric acid group or a -PO(OH)(OR) group, one species thereof may be solely used, or two or more species thereof may be used in combination in any ratio.

Examples of the monomers having a lower polyoxyalkylene group may include poly(alkylene oxides) such as poly(ethylene oxide). As the monomer having a lower polyoxyalkylene group, one species thereof may be solely used, or two or more species thereof may be used in combination in any ratio.

Of these vinyl monomers having an acidic functional group, monomers having a carboxylic acid group are preferable because therewith the lithium secondary battery according to the present invention can have high output property. Particularly, monocarboxylic acids having 5 or less carbon atoms and one carboxylic acid group, such as acrylic acid and methacrylic acid, and dicarboxylic acids having 5 or less carbon atoms and two carboxylic acid groups, such as maleic acid and itaconic acid, are preferable. From the viewpoint of improving storage stability of the acrylic polymer, acrylic acid and methacrylic acid are preferable.

The containing ratio of the monomer unit obtained by polymerizing a vinyl monomer having an acidic functional group in the acrylic polymer is preferably 3% by weight or more and more preferably 10% by weight or more and is preferably 50% by weight or less, more preferably 40% by weight or less, and particularly preferably 30% by weight or less. When the containing ratio of the monomer unit obtained by polymerizing a vinyl monomer having an acidic functional group is set to be equal to or more than the lower limit of the aforementioned range, the acid value of the acrylic polymer falls within a preferable range, so that corrosion of the current collector can be effectively prevented. Therefore, the cycle property of the lithium secondary battery according to the present invention can be improved. In addition, the strength of the acrylic polymer can be increased, so that the stability of the positive electrode slurry composition can be increased. When the containing ratio of the monomer unit is set to be equal to or less than the upper limit of the aforementioned range, the flexibility of the acrylic polymer can be improved, so that the production stability and storage stability of the positive electrode slurry composition can be made favorable.

Further, it is preferable that the acrylic polymer includes a monomer unit obtained by polymerizing an $\alpha,\beta$-unsaturated nitrile monomer for improving the binding property between the coated active material particles and the current collector and for improving the binding property between the coated active material particles themselves. From the viewpoint of improving mechanical strength and binding strength, the $\alpha,\beta$-unsaturated nitrile monomer is preferably, e.g., acrylonitrile or methacrylonitrile and is particularly preferably acrylonitrile. As such a monomer unit, one species thereof may be solely used, or two or more species thereof may be used in combination in any ratio.

The containing ratio of the monomer unit obtained by polymerizing an $\alpha,\beta$-unsaturated nitrile monomer in the acrylic polymer is preferably 5% by weight or more and more preferably 10% by weight or more and is preferably 50% by weight or less and more preferably 30% by weight or less. When the amount of the monomer unit obtained by polymerizing an $\alpha,\beta$-unsaturated nitrile monomer is set to be equal to or more than the lower limit of the aforementioned range, the strength of the acrylic polymer can be improved. When the amount of the monomer unit is set to be equal to or less than the upper limit of the aforementioned range, the acrylic polymer can be softened, so that the occurrence of cracks in the positive electrode for the lithium secondary battery can be prevented.

The acrylic polymer may further include a monomer unit obtained by polymerizing a monomer having a cross-linking ability. Examples of the monomer having a cross-linking ability may include monomers having an epoxy group, monomers having a carbon-carbon double bond and an epoxy group, monomers having a halogen atom and epoxy group, monomers having an N-methylolamide group, monomers having an oxetanyl group, monomers having an oxazoline group, and polyfunctional monomers having two or more olefinic double bonds. As such a monomer unit, one species thereof may be solely used, or two or more species thereof may be used in combination in any ratio.

The containing ratio of the monomer unit obtained by polymerizing a monomer having a cross-linking ability in the acrylic polymer is preferably 0.1% by weight or more and is preferably 3.5% by weight or less, more preferably 2.0% by weight or less, and more preferably 0.8% by weight or less. When the containing ratio of the monomer unit obtained by polymerizing a monomer having a cross-linking ability is set within the aforementioned range, the acrylic polymer can have appropriate swellability with the electrolyte solution.

The acrylic polymer may further contain a monomer unit other than the aforementioned monomer units. Examples of such a monomer unit may include monomer units obtained by polymerizing vinyl monomers other than the aforementioned vinyl monomers. Specific examples thereof may include: monomers containing a halogen atom such as vinyl chloride and vinylidene chloride; vinyl esters such as vinyl acetate, vinyl propionate, and vinyl butyrate; vinyl ethers such as methyl vinyl ether, ethyl vinyl ether, and butyl vinyl ether; vinyl ketones such as methyl vinyl ketone, ethyl vinyl ketone, butyl vinyl ketone, hexyl vinyl ketone, and isopropenyl vinyl ketone; and vinyl compounds containing a heterocycle such as N-vinylpyrrolidone, vinylpyridine, and vinylimidazole. As such a monomer unit, one species thereof may be solely used, or two or more species thereof may be used in combination in any ratio.

The glass transition temperature of the coating polymer is usually 0°C or higher, preferably 10°C or higher, and more preferably 30°C or higher and is usually 100°C or lower, preferably 80°C or lower, and more preferably 70°C or lower. When the glass transition temperature of the coating polymer is set to be equal to or more than the lower limit of the aforementioned range, tendency to cause blocking can be lowered, so that the dispersibility of the coated active material particles can be increased. When the glass transition temperature is set to be equal to or less than the upper limit of the aforementioned range, the acrylic polymer can be softened, and the occurrence of cracks in the positive electrode for the lithium secondary battery can be prevented.

The thickness of the layer of the coating polymer is preferably 0.1 $\mu$m or more and more preferably 0.12 $\mu$m or more and is preferably 12 $\mu$m or less and more preferably 10 $\mu$m or less. When the thickness of the layer of the coating polymer is set to be equal to or more than the lower limit of the aforementioned range, corrosion of the current collector can be stably prevented. When the thickness is set to be equal to or less than the upper limit of the aforementioned range, the resistance due to the layer of the coating polymer can be reduced, and the output property of the lithium secondary battery according to the present invention can be increased.

The thickness of the layer of the coating polymer may be determined by dividing the weight of the layer of the coating polymer by the specific surface area of the particles of the positive electrode active material to calculate the weight of the coating polymer per unit surface area and then dividing the calculated weight of the coating polymer per unit surface area by the density of the coating polymer. In the aforementioned measurement method, the thickness of the layer of the coating polymer is determined under the assumption that the entire surface of the particles of the positive electrode active material is coated with the layer of the coating polymer. However, the entire surface of the particles of the positive electrode active material is not always coated with the layer of the coating polymer. Therefore, the value determined by the aforementioned measurement method does not directly represent the actual thickness of the layer of the coating polymer. However, the value of the thickness of the layer of the coating polymer determined by the aforementioned measurement method is a value having a significance for evaluating the effects obtained by forming the layer of the coating polymer.

The layer of the coating polymer does not necessarily coat the entire surface of the particles of the positive electrode active material. However, it is preferable that larger area of the surface of the positive electrode active material particles is coated with the layer of the coating polymer. More specifically, the covering ratio of the particles of the positive electrode active material with the layer of the coating polymer is preferably 50% or more, more preferably 80% or more, and particularly preferably 90% or more.

The covering ratio of the particles of the positive electrode active material with the layer of the coating polymer may be measured as follows. That is, the coated active material particles are dispersed in an epoxy resin, and the epoxy resin is cured. Then the cured epoxy resin is cooled to a temperature of -80°C and cut using a microtome to produce a thin piece. The layer of the coating polymer is stained with vapor of a 0.5 wt% aqueous ruthenium tetroxide solution and observed under a TEM (transmission electron microscope). The observation is performed at a magnification of 2,000 times to 6,000 times. The magnification is adjusted such that cross sections of 5 to 20 coated active material particles can be observed in an area of 28 $\mu$m x 35 $\mu$m. Then 100 particles are selected from them, and their coated states are observed. In this observation, the observed images are visually checked. A particle in which 80% or more of its cross-sectional length is coated with the layer of the coating polymer is ranked A, and a particle in which 50% to 79% of the cross-sectional length is coated is ranked B. The covering ratio is determined as "covering ratio (%) = (the number of A ranked particles) + 0.5 x (the number of B ranked particles)".

In the positive electrode slurry composition, the amount of the coating polymer is set such that the thickness of the layer of the coating polymer falls within the aforementioned range. The specific amount of the coating polymer varies depending on the type of the coating polymer. The specific amount of the coating polymer with respect to 100 parts by weight of the positive electrode active material is usually 0.1 parts by weight or more, preferably 0.3 parts by weight or more, and more preferably 0.5 parts by weight or more and is usually 10 parts by weight or less, preferably 5 parts by weight or less, and more preferably 4 parts by weight or less.

(iii) Spacer fine particles

Usually, the spacer fine particles adhere to the surface of the layer of the coating polymer. The presence of the spacer fine particles can prevent the occurrence of aggregate mass due to aggregation of the coated active material particles when the wet coated active material particles are dried. Even when the coated active material particles aggregate, the presence of the spacer fine particles increases the specific surface area, so that fine pores are formed in the aggregate mass. Therefore, the electrolyte solution can easily enter the aggregate mass, so that the resistance of the lithium secondary battery can be reduced. The spacer fine particles are different from the electrode active material and have no influence on the electrochemical reaction.

As the material of the spacer fine particles, a material that is not dissolved in the aqueous medium is usually used. Particularly, a material that does not adversely affect the battery reaction is preferable. The material of the spacer fine particles may be an inorganic material such as an inorganic oxide or an inorganic nitride or an organic material such as a resin. The spacer fine particles may be a composite material obtained by combining an organic material and an inorganic material. Particularly, silica is preferable as the material of the spacer fine particles. As the spacer fine particles, one species thereof may be solely used, or two or more species thereof may be used in combination in any ratio.

The particle diameter of the spacer fine particles is preferably 5 nm or more, more preferably 7 nm or more, and particularly preferably 10 nm or more and is preferably 500 nm or less, more preferably 100 nm or less, and particularly preferably 50 nm or less. When the particle diameter of the spacer fine particles is set to be equal to or more than the lower limit of the aforementioned range, antiblocking property can be further improved. When the particle diameter is set to be equal to or less than the upper limit of the aforementioned range, the amount of the spacer fine particles can be suppressed. As the average particle diameter of the spacer fine particles, 50% volume cumulative diameter is used.

The amount of the spacer fine particles with respect to 100 parts by weight of the positive electrode active material is usually 0.03 parts by weight or more, preferably 0.09 parts by weight or more, and more preferably 0.15 parts by weight or more and is usually 1.5 parts by weight or less, preferably 0.9 parts by weight or less, and more preferably 0.6 parts by weight or less. When the amount of the spacer fine particles is set to be equal to or more than the lower limit of the aforementioned range, blocking between the particles of the positive electrode active material can be prevented. When the amount is set to be equal to or less than the upper limit of the aforementioned range, a reduction in adhesion of the binder can be prevented.

(iv) Particle diameter of coated active material particles

The average particle diameter of the coated active material particles is preferably 1 μm or more, more preferably 3 μm or more, and particularly preferably 5 μm or more and is preferably 50 μm or less, more preferably 40 μm or less, and particularly preferably 20 μm or less. When the average particle diameter of the coated active material particles is set to be equal to or more than the lower limit of the aforementioned range, dispersion stability can be improved. When the average particle diameter is set to be equal to or less than the upper limit of the aforementioned range, initial efficiency can be improved. As the average particle diameter of the coated active material particles, 50% volume cumulative diameter is used.

(v) Method for producing coated active material particles

Examples of the method for producing the coated active material particles may include a fluidizing granulation method, a spray granulation method, a coagulant precipitation method, and a pH precipitation method.

(v-i) Fluidizing granulation method

The fluidizing granulation method is a method including: fluidizing the particles of the positive electrode active material; and spraying a liquid composition containing the coating polymer and the aqueous medium onto the fluidized particles of the positive electrode active material. More specifically, the fluidizing granulation method includes: the step of preparing the liquid composition containing the coating polymer and the aqueous medium; the step of fluidizing the particles of the positive electrode active material; the step of spraying the liquid composition onto the fluidized particles of the positive electrode active material to form coated active material particles; the step of tumbling the formed coated active material particles; and the step of subjecting the coated active material particles to heat treatment. The order of these steps may be arbitrary determined so long as the coated active material particles can be obtained.

The liquid composition containing the coating polymer and the aqueous medium is a slurry dispersion in which the coating polymer is dispersed in the aqueous medium. As the aqueous medium, water is usually used. In this liquid composition, the using amount of the aqueous medium is within the range by which the solid concentration in the liquid composition is adjusted to usually 1% by weight or more, preferably 5% by weight or more, and more preferably 10% by weight or more and to usually 50% by weight or less and preferably 30% by weight or less. By setting the amount of the aqueous medium within the aforementioned range, the coating polymer can be uniformly dispersed in the liquid composition.

Examples of the means for mixing the coating polymer and the aqueous medium may include mixers such as a ball mill, a sand mill, a bead mill, a pigment disperser, a grinder, an ultrasonic disperser, a homogenizer, and a planetary mixer. The mixing is usually performed at temperatures ranging from room temperature to 80°C for 10 minutes to several hours. The liquid composition may further contain a component other than the coating polymer and the aqueous medium, so long as the effects of the present invention are not significantly impaired.

Examples of the method for fluidizing the positive electrode active material may include a method using a fluidized bed, a method using a modified fluidized bed, and a method using a spouted bed.

The fluidizing method using a fluidized bed is a method for fluidizing the particles of the positive electrode active material using hot air. Aggregatory granulation can be performed by spraying the aforementioned liquid composition onto the fluidized particles of the positive electrode active material using, e.g., a spray.

The fluidizing method using a modified fluidized bed is a method for fluidizing the particles of the positive electrode active material using hot air, as is the method using a fluidized bed. However, the fluidizing method using a modified fluidized bed is a method in which circulating flow is given to the particles of the positive electrode active material in the modified fluidized bed, and coated active material particles that have grown to a relatively large degree are selectively collected from the modified fluidized bed by utilizing a classification effect.

The fluidizing method using a spouted bed is a granulation method in which the aforementioned liquid composition is sprayed onto coarse particles of the positive electrode active material to allow the liquid composition to adhere to the particles and simultaneously the particles are dried and granulated by utilizing the nature of the spouted bed.

Among the aforementioned methods, the method using a fluidized bed or a modified fluidized bed is preferable as the fluidizing method.

The temperature of the sprayed liquid composition is usually room temperature, but the liquid composition may be heated to a temperature equal to or higher than room temperature.

The temperature of the hot air used to fluidize the particles of the positive electrode active material is usually 70°C or higher and preferably 80°C or higher and is usually 300°C or lower and preferably 200°C or lower.

By spraying the liquid composition containing the coating polymer onto the fluidized particles of the positive electrode active material, the coating polymer adheres to the surface of the particles of the positive electrode active material, whereby the coated active material particles are obtained. In this step, the obtained coated active material particles may be completely dried. However, for improving granulation efficiency in the subsequent tumbling step, the coated active material particles are preferably in a wet state.

If necessary, the obtained coated active material particles are tumbled to perform tumbling granulation. Examples of the tumbling granulation may include a rotating pan method, a rotating drum method, and a rotating truncated cone method.

The rotating pan method is a method in which the coating polymer or the aforementioned liquid composition is sprayed as needed onto the coated active material particles supplied to the inclined rotating pan to grow the coated active material particles and then the granulated product that has grown to a relatively large degree is discharged from a rim by utilizing the classification effect of the rotating pan.

The rotating drum method is a method in which the coated active material particles in a wet state are supplied to the inclined rotating drum to tumble the supplied coated active material particles in the drum. In this method, the coating polymer or the aforementioned liquid composition is sprayed as needed to grow the coated active material particles.

The mechanism of granulation of the rotating truncated cone method is the same as that of the rotating drum method. The rotating truncated cone method is a method in which coated active material particles that have grown to a relatively large degree are selectively collected by utilizing the classification effect of the truncated cone on the aggregatory granulation product.

From the viewpoint of removal of the aqueous medium, the temperature when the coated active material particles are tumbled is usually 80°C or higher and preferably 100°C or higher and is usually 300°C or lower and preferably 200°C or lower.

If necessary, the coated active material particles may be subjected to heat treatment for curing the surface of the coated active material particles. The temperature of the heat treatment is usually 80°C to 300°C.

The coated active material particles are obtained by the aforementioned operation.

(v-ii) Spray granulation method

The spray granulation method is a method including spraying a liquid composition containing the particles of the positive electrode active material, the coating polymer, and the aqueous medium. More specifically, the method includes: the step of preparing the liquid composition containing the particles of the positive electrode active material, the coating polymer, and the aqueous medium; and the step of spraying the liquid composition to form coated active material particles. The order of these steps may be arbitrary determined so long as the coated active material particles are obtained.

The liquid composition containing the particles of the positive electrode active material, the coating polymer, and the aqueous medium is a slurry dispersion in which the particles of the positive electrode active material and the coating polymer are dispersed in the aqueous medium. As the aqueous medium, water is usually used. In the liquid composition, the using amount of the aqueous medium is within the range by which the solid concentration in the liquid composition is adjusted to usually 1% by weight or more, preferably 5% by weight or more, and more preferably 10% by weight or more and to usually 50% by weight or less, preferably 40% by weight or less, and more preferably 30% by weight or less. When the amount of the aqueous medium falls within the aforementioned range, the coating polymer can be uniformly dispersed in the liquid composition.

The particles of the positive electrode active material, the coating polymer, and the aqueous medium may be mixed using, e.g., the same means under the same conditions as those used for preparing the liquid composition in the fluidizing granulation method.

By spraying the liquid composition using a spay dryer, the liquid droplets of the sprayed liquid composition are dried inside the drying tower. By this step, coated active material particles containing the particles of the positive electrode active material and the coating polymer that are the ingredients of the liquid droplets can be obtained.

In the spray granulation method, as in the fluidizing granulation method, the step of tumbling the obtained coated active material particles and the step of subjecting the coated active material particles to heat treatment may be performed as needed.

(v-iii) Coagulant precipitation method

The coagulant precipitation method is a method including: precipitating the coating polymer on the surface of the particles of the positive electrode active material in a liquid composition containing the particles of the positive electrode active material, the aqueous medium, the coating polymer, and a polyvalent metal compound; causing the spacer fine particles to adhere to the particles of the positive electrode active material on the surface of which the coating polymer is precipitated; and drying the resultant particles. More specifically, the coagulant precipitation method includes: the step of preparing the liquid composition containing the particles of the positive electrode active material, the aqueous medium, the coating polymer, and the polyvalent metal compound; the step of precipitating the coating polymer on the surface of the particles of the positive electrode active material in the liquid composition; the step of causing the spacer fine particles to adhere to the particles of the positive electrode active material on the surface of which the coating polymer is precipitated; and the step of drying the resultant particles. The order of these steps may be arbitrary determined so long as the coated active material particles are obtained.

Usually, in the step of preparing the liquid composition, a slurry composition containing the particles of the positive electrode active material, the aqueous medium, and the polyvalent metal compound and a polymer dispersion containing the aqueous medium and the coating polymer are prepared. In the slurry composition, the particles of the positive electrode active material are dispersed in the aqueous medium, and the polyvalent metal compound is adsorbed on the surface of the positive electrode active material. In the polymer dispersion, the coating polymer is dispersed in the aqueous medium.

As the aqueous medium, water is usually used. The using amount of the aqueous medium when the slurry composition is prepared is within the range by which the solid concentration in the slurry composition is adjusted to usually 1% by weight or more, preferably 5% by weight or more, and more preferably 10% by weight or more and to usually 50% by weight or less and preferably 30% by weight or less. When the amount of the aqueous medium falls within the aforementioned range, the particles of the positive electrode active material can be uniformly dispersed in the slurry composition.

The polyvalent metal compound is a component serving as a coagulant. That is, in the presence of the polyvalent metal compound, the coating polymer dispersed in the aqueous solvent is precipitated and adheres to the surface of the particles of the positive electrode active material. Examples of such a polyvalent metal compound may include hydroxides, chlorides, sulfides, carbonates, hydrochlorides, sulfates, nitrates, and acetates of polyvalent metals. Of these, hydroxides, chlorides, and carbonates of polyvalent metals are preferable. Hydroxides and carbonates of polyvalent metals are preferable, and hydroxides of polyvalent metals are particularly preferable. The polyvalent metals are preferably divalent or trivalent metals and are preferably, e.g., magnesium, calcium, barium, aluminum, chromium, iron, copper, manganese, nickel, vanadium, zinc, and tin. Of these, alkaline earth metals are preferable, and calcium and barium are particularly preferable. As the polyvalent metal compound, one species thereof may be solely used, or two or more species thereof may be used in combination in any ratio.

The amount of the polyvalent metal compound with respect to 100 parts by weight of the particles of the positive electrode active material is usually 0.1 parts by weight or more and is usually 10 parts by weight or less and preferably 2 parts by weight or less. When the amount of the polyvalent metal compound is set to be equal to or more than the lower limit of the aforementioned range, the coating polymer can be sufficiently precipitated. When the amount is set to be equal to or less than the upper limit of the aforementioned range, the layer of the coating polymer can be prevented from being excessively thick.

The concentration of the coating polymer in the polymer dispersion is usually 1% by weight or more, preferably 3% by weight or more, and more preferably 5% by weight or more and is usually 50% by weight or less, preferably 40% by weight or less, and more preferably 30% by weight or less. When the concentration of the coating polymer is set to be equal to or more than the lower limit of the aforementioned range, corrosion can be prevented. When the concentration is set to be equal to or less than the upper limit, a reduction in initial properties can be prevented.

After the slurry composition is prepared, filtration etc. are performed as needed to collect the particles of the positive electrode active material from the slurry composition, and the particles of the positive electrode active material are mixed with the polymer dispersion to obtain a liquid composition containing the particles of the positive electrode active material, the aqueous medium, the coating polymer, and the polyvalent metal compound. Since the polyvalent metal compound is adsorbed on the surface of the particles of the positive electrode active material, precipitation of the coating polymer on the surface of the particles of the positive electrode active material occurs through the action of the polyvalent metal compound serving as the coagulant. In this step, the time for which the particles of the positive electrode active material are placed in the mixed state with the polymer dispersion is usually 1 second or longer and is usually 60 seconds or shorter and preferably 15 seconds or shorter. When the time is set to be equal to or longer than the lower limit of the aforementioned range, the thickness of the coating polymer can be made uniform. When the time is set to be equal to or shorter than the upper limit of the aforementioned range, the thickness of the layer of the coating polymer can be prevented from being excessively large.

Then the spacer fine particles are caused to adhere to the particles of the positive electrode active material with the coating polymer precipitated on their surface. As an example of a specific method, filtration etc. may be performed as needed to collect, from the polymer dispersion, the particles of the positive electrode active material with the coating polymer precipitated on their surface, and the particles of the positive electrode active material may be immersed in a dispersion in which the spacer fine particles are dispersed. In this manner, the spacer fine particles can be caused to adhere to the surface of the layer of the coating polymer.

Then filtration etc. are performed as needed, and the particles with the spacer fine particles adhering thereto are dried to obtain coated active material particles.

(v-iv) pH precipitation method

The pH precipitation method is a method including: adjusting the pH of the liquid composition containing the particles of the positive electrode active material, the aqueous medium, and the coating polymer to precipitate the coating polymer on the surface of the particles of the positive electrode active material; causing the spacer fine particles to adhere to the particles of the positive electrode active material on the surface of which the coating polymer is precipitated; and drying the resultant particles. More specifically, the pH precipitation method includes: the step of preparing the liquid composition containing the particles of the positive electrode active material, the aqueous medium, and the coating polymer; the step of adjusting the pH of the liquid composition to precipitate the coating polymer on the surface of the particles of the positive electrode active material; the step of causing the spacer fine particles to adhere to the particles of the positive electrode active material with the coating polymer precipitated on their surface; and the step of drying the resultant particles. The order of these steps may be arbitrary determined so long as the coated active material particles are obtained.

Usually, in the step of preparing the liquid composition, the particles of the positive electrode active material, the aqueous medium, and the coating polymer are mixed. In this step, water is usually used as the aqueous medium. The using amount of the aqueous medium when the liquid composition is prepared is within the range by which the solid concentration in the liquid composition is adjusted to usually 1% by weight or more, preferably 5% by weight or more, and more preferably 10% by weight or more and to usually 50% by weight or less, preferably 40% by weight or less, and more preferably 30% by weight or less. When the amount of the aqueous medium falls within the aforementioned range, the particles of the positive electrode active material can be uniformly dispersed in the liquid composition.

Then the pH of the prepared liquid composition is adjusted in the range of usually 1 to 5 and preferably 1 to 3 to precipitate the coating polymer on the surface of the particles of the positive electrode active material. As an example of the operation for adjusting the pH, the liquid composition may be mixed with an acidic compound. Examples of the acidic compound may include hydrochloric acid, phosphoric acid, sulfuric acid, carbonic acid, acetic acid, and nitric acid. Of these, acetic acid is preferable. As the acidic compound, one species thereof may be solely used, or two or more species thereof may be used in combination in any ratio.

Then the spacer fine particles are caused to adhere to the particles of the positive electrode active material with the coating polymer precipitated on their surface in the same manner as in the coagulant precipitation method. Then the resultant particles are dried to obtain coated active material particles.

[A2-2. Binder]

The binder in the positive electrode active material layer is a component that can hold the components contained in the positive electrode active material layer such that they do not drop out of the positive electrode active material layer. In the present invention, as the binder, a binder that can be dissolved or dispersed in the aqueous medium (hereinafter such a binder may be referred to as a "aqueous type binder") is usually used. Particularly, it is preferable to use an aqueous type binder dispersible in the aqueous medium. As the binder, one species thereof may be solely used, or two or more species thereof may be used in combination in any ratio. As the aqueous medium, water is usually used.

Preferable examples of the aqueous type binder may include a polymer that can be dispersed in water to form a water dispersion such as a latex. Examples of such a polymer may include diene polymers, acrylic polymers, fluorine polymers, and silicon polymers. Of these, acrylic polymers are preferable.

The acrylic polymer is a polymer including a (meth)acrylic acid ester monomer. Particularly, a polymer containing a (meth)acrylic acid ester monomer unit, a monomer unit obtained by polymerizing a vinyl monomer having an acid component, and a monomer unit obtained by polymerizing an $\alpha,\beta$-unsaturated nitrile monomer is preferable.

Examples of the (meth)acrylic acid ester monomer may include those exemplified in the description of the coating polymer. Particularly, (meth)acrylic acid ester monomers having 6 or more carbon atoms are preferable, and those having 7 or more carbon atoms are more preferable; whereas (meth)acrylic acid ester monomers having 15 or less carbon atoms are preferable, and those having 13 or less carbon atoms are more preferable. This is because such (meth)acrylic acid ester monomers are not eluted in the electrolyte solution but swell with the electrolyte solution to a proper extent in the lithium secondary battery according to the present invention, to provide good ionic conductivity and to realize an extended battery life. Of these, 2-ethylhexyl acrylate is particularly preferable. As the (meth)acrylic acid ester monomer, one species thereof may be solely used, or two or more species thereof may be used in combination in any ratio.

The containing ratio of the monomer unit obtained by polymerizing a (meth)acrylic acid ester monomer in the acrylic polymer is preferably 50% by weight or more and more preferably 60% by weight or more and is preferably 95% by weight or less and more preferably 90% by weight or less. When the containing ratio of the monomer unit obtained hy polymerizing the (meth)acrylic acid ester monomer is set to be equal to or more than the lower limit of the aforementioned range, the flexibility of the binder can be increased, so that the positive electrode for the lithium secondary battery can resist cracking. When the containing ratio is set to be equal to or less than the upper limit of the aforementioned range, the mechanical strength of the binder can be improved, and the binding strength can be increased.

Examples of the vinyl monomer having an acid component may include those exemplified for the vinyl monomer having an acidic functional group in the description of the coating polymer. Of these, monomers having a carboxylic acid group are preferable because of high adhesion to the current collector. Particularly, monocarboxylic acids having 5 or less carbon atoms and one carboxylic acid group, such as acrylic acid and methacrylic acid, and dicarboxylic acids having 5 or less carbon atoms and two carboxylic acid groups, such as maleic acid and itaconic acid, are preferable. From the viewpoint that the storage stability of the acrylic polymer can be improved, acrylic acid and methacrylic acid are preferable. As such a vinyl monomer, one species thereof may be solely used, or two or more species thereof may be used in combination in any ratio.

The containing ratio of the monomer unit obtained by polymerizing a vinyl monomer having an acid component in the acrylic polymer is preferably 1.0% by weight or more and more preferably 1.5% by weight or more and is preferably 5.0% by weight or less and more preferably 4.0% by weight or less. When the containing ratio of the monomer unit obtained by polymerizing the vinyl monomer having an acid component is set to be equal to or more than the lower limit of the aforementioned range, the binding property of the binder can be increased, so that cycle property can be improved. When the containing ratio is set to be equal to or less than the upper limit of the aforementioned range, the production stability and storage stability of the acrylic polymer can be made favorable.

From the viewpoint of improvement in mechanical strength and binding strength, the $\alpha,\beta$-unsaturated nitrile monomer is preferably, e.g., acrylonitrile or methacrylonitrile and is particularly preferably acrylonitrile. As the $\alpha,\beta$-unsaturated nitrile monomer, one species thereof may be solely used, or two or more species thereof may be used in combination in any ratio.

The containing ratio of the monomer unit obtained by polymerizing an $\alpha,\beta$-unsaturated nitrile monomer in the acrylic polymer is preferably 3% by weight or more and more preferably 5% by weight or more and is preferably 40% by weight or less and more preferably 30% by weight or less. When the containing ratio of the monomer unit obtained by polymerizing the $\alpha,\beta$-unsaturated nitrile monomer is set to be equal to or more than the lower limit of the aforementioned range, the mechanical strength of the binder can be improved, so that the binding strength can be increased. When the containing ratio is set to be equal to or less than the upper limit of the aforementioned range, the flexibility of the binder can be increased, so that the positive electrode for the lithium secondary battery can resist cracking.

The acrylic polymer may further contain a monomer unit obtained by polymerizing a monomer having a cross-linking ability. Examples of the monomer having a cross-linking ability may include those exemplified in the description of the coating polymer. As such a monomer unit, one species thereof may be solely used, or two or more species thereof may be used in combination in any ratio.

The containing ratio of the monomer unit obtained by polymerizing a monomer having a cross-linking ability in the acrylic polymer is preferably 0.01% by weight or more and more preferably 0.05% by weight or more and is preferably 0.5% by weight or less and more preferably 0.3% by weight or less. When the containing ratio of the monomer unit obtained by polymerizing the monomer having a cross-linking ability falls within the aforementioned range, the acrylic polymer swells with the electrolyte solution to a proper extent, and the rate property and the cycle property can be further improved.

The acrylic polymer may further contain a monomer unit obtained by polymerizing a monomer other than the aforementioned monomers. Examples of such a monomer may include those exemplified in the description of the coating polymer. As such a monomer, one species thereof may be solely used, or two or more species thereof may be used in combination in any ratio.

The binder is usually produced as a dispersion in which the binder is dispersed in a particle form in the aqueous medium. The binder is included in the positive electrode slurry composition also as a dispersion in which the binder is dispersed in a particle form in the aqueous medium.

When the binder is dispersed in a particle form in the aqueous medium, the volume average particle diameter of the binder particles is preferably 50 nm or more, more preferably 60 nm or more, and still more preferably 70 nm or more and is preferably 200 nm or less, more preferably 185 nm or less, and still more preferably 160 nm or less. When the volume average particle diameter of the binder particles is set to be equal to or more than the lower limit of the aforementioned range, the stability of the positive electrode slurry composition can be improved. When the volume average particle diameter is set to be equal to or less than the upper limit of the aforementioned range, the binding strength between the coated active material and the current collector or the binding strength between the coated active materials themselves can be increased.

The glass transition temperature (Tg) of the binder is preferably -50°C or higher, more preferably -45°C or higher, and particularly preferably -40°C or higher and is preferably 25°C or lower, more preferably 15°C or lower, and particularly preferably 5°C or lower. When the glass transition temperature of the binder falls within the aforementioned range, the strength and flexibility of the positive electrode for the lithium secondary battery according to the present invention can be improved, and high output property can be achieved. The glass transition temperature of the binder can be controlled by, e.g., changing a combination of the monomers constituting the monomer units.

The amount of the binder with respect to 100 parts by weight of the coated active material particles is preferably 0.1 parts by weight or more, more preferably 0.5 parts by weight or more, and still more preferably 0.8 parts by weight or more and is preferably 10 parts by weight or less, more preferably 5 parts by weight or less, and still more preferably 3 parts by weight or less. When the amount of the binder is set to be equal to or more than the lower limit of the aforementioned range, the binding property between the coated active material particles can be increased, and the cycle property can be increased. When the amount is set to be equal to or less than the upper limit of the aforementioned range, migration of lithium ions in the lithium secondary battery according to the present invention can be prevented from being inhibited by the binder, so that battery resistance can be reduced.

No particular limitation is imposed on the method for producing the binder. For example, any of a solution polymerization method, a suspension polymerization method, a bulk polymerization method, an emulsion polymerization method, etc. may be used. As the polymerization method, any of, e.g., ionic polymerization, radical polymerization, and living radical polymerization may be used.

When the binder is produced, a polymerization initiator is usually used. Examples of the polymerization initiator may include: organic peroxides such as lauroyl peroxide, diisopropyl peroxydicarbonate, di-2-ethylhexyl peroxydicarbonate, t-butyl peroxypivalate, and 3,3,5-trimethylhexanoyl peroxide; azo compounds such as $\alpha,\alpha'$-azobisisobutyronitrile; ammonium persulfate; and potassium persulfate. As the polymerization initiator, one species thereof may be solely used, or two or more species thereof may be used in combination in any ratio.

When the binder is produced, a dispersant is usually used. Examples of the dispersant may include: benzenesulfonates such as sodium dodecylbenzenesulfonate and sodium dodecyl phenyl ether sulfonate; alkyl sulfates such as sodium laurylsulfate and sodium tetradodecylsulfate; sulfosuccinates such as sodium dioctylsulfosuccinate and sodium dihexylsulfosuccinate; fatty acid salts such as sodium laurate; ethoxy sulfates such as sodium polyoxyethylene lauryl ether sulfate and sodium polyoxyethylene nonylphenyl ether sulfate; alkane sulfonates; sodium alkyl ether phosphates; nonionic surfactants such as polyoxyethylene nonylphenyl ether, polyoxyethylene sorbitan lauryl ester, polyvinyl alcohol, and a polyoxyethylene-polyoxypropylene block copolymer; and water-soluble polymers such as gelatin, a maleic anhydride-styrene copolymer, polyvinylpyrrolidone, sodium polyacrylate, and polyvinyl alcohol having a degree of polymerization of 700 or more and a degree of saponification of 75% or more. Of these, nonionic surfactants are preferable because therewith no precipitation occurs when the coated active material particles contain a polyvalent metal compound, and polyvinyl alcohol is particularly preferable. As the dispersant, one species thereof may be solely used, or two or more species thereof may be used in combination in any ratio.

The using amount of the dispersant with respect to 100 parts by weight of the total of the monomers used for polymerization is usually 0.01 parts by weight to 10 parts by weight.

Usually, the binder is obtained as particles contained in a dispersion and is stored and carried in the form of dispersion. The solid concentration in such a dispersion is usually 15% by weight or more, preferably 20% by weight or more, and more preferably 30% by weight or more and is usually 70% by weight or less, preferably 65% by weight or less, and more preferably 60% by weight or less. When the solid concentration in the dispersion falls within the aforementioned range, workability when the positive electrode slurry composition is produced is favorable.

The pH of the dispersion containing the binder is preferably 5 or more and more preferably 10 or more and is preferably 13 or less and more preferably 12 or less. When the pH of the dispersion falls within the aforementioned range, the storage stability of the binder is improved, and, furthermore, the mechanical stability of the positive electrode for the lithium secondary battery according to the present invention can be improved.

[A2-3. Aqueous medium]

The positive electrode slurry composition contains the aqueous medium. The aqueous medium serves as a dispersion medium, and the coated active material particles and the binder are usually dispersed in the aqueous medium.

The aqueous medium is dried in the process of producing the positive electrode for the lithium secondary battery according to the present invention. Therefore, the positive electrode for the lithium secondary battery according to the present invention usually does not contain the aqueous medium or, even if it does, contains little amount of the aqueous medium. As the aqueous medium, water is usually used.

Usually, no particular limitation is imposed on the amount of the aqueous medium, so long as the positive electrode slurry composition has a viscosity that provides flowability enabling application of the positive electrode slurry composition onto the current collector or enabling immersion of the current collector in the positive electrode slurry composition. Preferably, the amount of the aqueous medium is adjusted such that the solid concentration in the positive electrode slurry composition is 10% by weight to 80% by weight.

[A2-4. Additional component]

The positive electrode slurry composition may further contain an additional component other than the coated active material particles, the binder, and the aqueous medium, so long as the effects of the present invention are not significantly impaired. As such a component, one species thereof may be solely used, or two or more species thereof may be used in combination in any ratio. Examples of such a component may include a conducting material (also referred to as a conductivity-imparting material), a reinforcing material, a dispersant, a leveling agent, an antioxidant, a thickener, and an electrolyte solution additive having a function of suppressing decomposition of the electrolyte solution.

Examples of the conducting material may include: conductive carbon such as acetylene black, Ketjen black, carbon black, and graphite; and fibers and foils of a variety of metals. Use of the conducting material can improve electric contact between the positive electrode active materials, and the discharge load property of the lithium secondary battery according to the present invention can be improved. Therefore, the rate property of the lithium secondary battery can be improved.

The amount of the conducting material with respect to 100 parts by weight of the coated active material particles is usually 0.01 parts by weight or more and preferably 1 part by weight or more and is usually 20 parts by weight or less and preferably 10 parts by weight or less. When the amount of the conducting material is set to be equal to or more than the lower limit of the aforementioned range, the stability of the positive electrode slurry composition and the plate density of the positive electrode for a lithium secondary battery according to the present invention can be improved. When the amount is set to be equal to or less than the upper limit of the aforementioned range, a conducting path can be stably formed by the conducting material, and the output property of the lithium secondary battery according to the present invention can be improved.

The reinforcing material for use may be, e.g., any of a variety of inorganic and organic spherical, plate-shaped, or rod-shaped fillers. Use of the reinforcing material allows the positive electrode for the lithium secondary battery according to the present invention to be stiff and flexible, and the cycle property can thereby be further improved. The amount of the reinforcing material with respect to 100 parts by weight of the coated active material particles is usually 0.01 parts by weight or more and preferably 1 part by weight or more and is usually 20 parts by weight or less and preferably 10 parts by weight or less.

Examples of the dispersant may include anionic compounds, cationic compounds, nonionic compounds, and polymer compounds. The dispersant may be selected, e.g., in accordance with the coated active material particles and the conducting material. Use of the dispersant can improve the stability of the positive electrode slurry composition. Therefore, the surface smoothness of the positive electrode for the lithium secondary battery according to the present invention can be improved, and its capacity can thereby be increased. The amount of the dispersant with respect to 100 parts by weight of the coated active material particles is preferably 0.01 parts by weight to 10 parts by weight.

Examples of the leveling agent may include surfactants such as alkyl-based surfactants, silicon-based surfactants, fluorine-based surfactants, and metal-based surfactants. Use of the leveling agent can prevent the positive electrode slurry composition from being repelled when it is applied onto the current collector, so that the surface smoothness of the positive electrode for the lithium secondary battery according to the present invention can be improved. The amount of the leveling agent with respect to 100 parts by weight of the coated active material particles is preferably 0.01 parts by weight to 10 parts by weight.

Examples of the antioxidant may include phenol compounds, hydroquinone compounds, organophosphorus compounds, sulfur compounds, phenylenediamine compounds, and polymer-type phenol compounds. The polymer-type phenol compound is a polymer having a phenol structure in its molecule, and its weight average molecular weight is preferably 200 or more and more preferably 600 or more and is preferably 1,000 or less and more preferably 700 or less. Use of the antioxidant can improve the stability of the positive electrode slurry composition, and the battery capacity and cycle property of the lithium secondary battery according to the present invention can be improved. The amount of the antioxidant with respect to 100 parts by weight of the coated active material particles is preferably 0.01 parts by weight or more and more preferably 0.05 parts by weight or more and is preferably 10 parts by weight or less and more preferably 5 parts by weight or less.

Examples of the thickener may include: cellulose-based polymers such as carboxymethyl cellulose, methyl cellulose, and hydroxypropyl cellulose and ammonium salts and alkali metal salts thereof; modified and unmodified poly(meth)acrylic acids and ammonium salts and alkali metal salts thereof; polyvinyl alcohols such as modified and unmodified polyvinyl alcohols, copolymers of acrylic acid or an acrylic acid salt with vinyl alcohol, and copolymers of maleic anhydride, maleic acid, or fumaric acid with vinyl alcohol; polyethylene glycol; polyethylene oxide; polyvinylpyrrolidone; modified polyacrylic acid; oxidized starch; starch phosphate; casein; a variety of modified starches; and hydrides of acrylonitrile-butadiene copolymers. Use of the thickener gives favorable viscosity of the positive electrode slurry composition, and the application property to the current collector can thereby be improved. The amount of the thickener with respect to 100 parts by weight of the coated active material particles is preferably 0.01 parts by weight to 10 parts by weight.

Examples of the electrolyte solution additive may include vinylene carbonate. Use of the electrolyte solution additive can improve the cycle property and high-temperature property of the lithium secondary battery according to the present invention. The amount of the electrolyte solution additive with respect to 100 parts by weight of the coated active material particles is preferably 0.01 parts by weight to 10 parts by weight.

In addition to the aforementioned components, the positive electrode slurry composition may further contain, e.g.: nanoparticles such as fumed silica and fumed alumina; and surfactants such as alkyl-based surfactants, silicon-based surfactants, fluorine-based surfactants, and metal-based surfactants.

[A2-5. Properties etc. of positive electrode slurry composition]

From the viewpoint of application uniformity and the stability of the slurry over the lapse of time, the viscosity of the positive electrode slurry composition is preferably 10 mPa·s or more and more preferably 100 mPa·s or more and is preferably 100,000 mPa·s or less and more preferably 50,000 mPa·s or less. The viscosity is a value when it is measured using a B-type viscometer at 25°C and a rotation speed of 60 rpm.

The pH of the positive electrode slurry composition is preferably 7 or more, more preferably 8 or more, and still more preferably 10 or more and is preferably 13.2 or less, more preferably 13 or less, and still more preferably 12.5 or less. When the pH falls within the aforementioned range, the dispersion stability of the positive electrode slurry composition is improved, and the effects of the present invention are significantly achieved. If the pH is less than 7, the dispersion of the coated active material particles may become unstable, so that aggregate mass may be formed in the positive electrode slurry composition.

[A2-6. Method for producing positive electrode slurry composition]

No particular limitation is imposed on the method for producing the positive electrode slurry composition. Usually, components constituting the positive electrode slurry composition, specifically, the binder and the aqueous medium, are mixed to obtain a binder composition. Then the binder composition, the coated active material particles, and other components used as needed are mixed to thereby obtain the positive electrode slurry composition.

When the binder is an acrylic polymer, the binder is usually used in the form of dispersion in which the binder is dispersed in a particle form in the aqueous medium. Therefore, in the binder composition and the positive electrode slurry composition, the acrylic polymer is contained in the form of dispersion in the aqueous medium serving as the dispersion medium.

Examples of a mixer may include a bead mill, a ball mill, a roll mill, a sand mill, a pigment disperser, a grinder, an ultrasonic disperser, a homogenizer, a planetary mixer, and a FILMIX. Of these, a ball mill, a roll mill, a pigment disperser, a grinder, and a planetary mixer are preferable because a high-density dispersion can be obtained.

[A3. Preparation of current collector]

As the current collector, a current collector made of aluminum or an aluminum alloy is used. In this case, a combination of aluminum and an aluminum alloy may be used, and a combination of different aluminum alloys may also be used. In general, a material that has electric conductivity and is electrochemically durable is used for the current collector. Particularly, aluminum and an aluminum alloy have heat resistance and are electrochemically stable. Therefore, they are good current collector materials.

Examples of the aluminum alloy may include alloys of aluminum and at least one element selected from the group consisting of iron, magnesium, zinc, manganese, and silicon.

Although no particular limitation is imposed on the shape of the current collector, a sheet-shaped current collector having a thickness of 0.001 mm to 0.5 mm is preferable.

The current collector may be preliminary subjected to surface roughening treatment for increasing the bonding strength of the positive electrode active material layer. Examples of the surface roughening method may include a mechanical polishing method, an electrolytic polishing method, and a chemical polishing method. In the mechanical polishing method, e.g., a coated abrasive including abrasive particles adhering to cloth or paper, a grindstone, an emery wheel, a wire brush provided with steel wires, etc. is used.

[A4. Formation of layer of positive electrode slurry composition]

After the positive electrode slurry composition and the current collector are prepared, a layer of the positive electrode slurry composition is formed on the surface of the current collector. The layer of the positive electrode slurry composition is formed on at least one side of the current collector and preferably on both sides. In the conventional techniques, the current collector is easily corroded when the positive electrode slurry composition is brought into contact with the current collector in this manner. However, with the positive electrode slurry composition according to the present invention, the current collector is less likely to be corroded. Therefore, with the production method according to the present invention, a positive electrode for a lithium secondary battery that can realize high rate property and cycle property can be obtained.

The formation of the layer of the positive electrode slurry composition may be performed by, e.g., a method in which the current collector is immersed in the positive electrode slurry composition. However, usually, a method in which the positive electrode slurry composition is applied onto the surface of the current collector is used. Examples of the application method may include a doctor blade method, a dipping method, a reverse roll method, a direct roll method, a gravure method, an extrusion method, and a brush coating method.

[A5. Drying step]

After the layer of the positive electrode slurry composition is formed on the current collector, the layer is dried. By the drying, the aqueous medium is removed, and the particles of the positive electrode active material etc. contained in the coated active material particles are bound to the current collector, whereby the positive electrode active material layer is obtained. Examples of the drying method may include: a drying method using warm air, hot air, or low-moisture air; a vacuum drying method; and a drying method by irradiation with infrared rays, far-infrared rays, or an electron beam.

[A6. Other steps]

In the production method according to the present invention, if necessary, steps other than the aforementioned steps may be performed.

For example, the step of subjecting the positive electrode active material layer to pressure treatment using a metal mold press, a roll press, etc. may be performed. By subjecting the positive electrode active material layer to pressure treatment, the porosity of the positive electrode active material layer can be reduced. The range of the porosity of the positive electrode active material layer is preferably 5% or more and more preferably 7% or more and is preferably 15% or less and more preferably 13% or less. When the porosity of the positive electrode active material layer is set to be equal to or more than the lower limit of the aforementioned range, a high volume capacity can be obtained, and the positive electrode active material layer can have low tendency to be peeled off the current collector. When the porosity is set to be equal to or less than the upper limit of the aforementioned range, high charge efficiency and high discharge efficiency can be obtained.

[A7. Positive electrode for lithium secondary battery]

With the production method according to the present invention, the positive electrode for the lithium secondary battery according to the present invention is obtained. The positive electrode for the lithium secondary battery includes the current collector made of aluminum or an aluminum alloy and the positive electrode active material layer. The positive electrode active material layer contains the coated active material particles, the binder, and, if necessary, components such as the conducting material. Usually, the positive electrode active material layer is formed on the surface of the current collector. In the production method according to the present invention, since the coated active material particles are used, the positive electrode slurry composition has low tendency to cause corrosion of the current collector. Therefore, with the positive electrode for the lithium secondary battery according to the present invention, a reduction in rate property and cycle property due to corrosion of the current collector can be prevented, so that an excellent lithium secondary battery can be achieved.

The thickness of the positive electrode for the lithium secondary battery according to the present invention, as the total thickness of the current collector and the positive electrode active material layer, is usually 5 $\mu$m or more and preferably 10 $\mu$m or more and is usually 150 $\mu$m or less and preferably 100 $\mu$m or less. When the thickness of the positive electrode for the lithium secondary battery according to the present invention falls within the aforementioned range, both the load property and the energy density can be made favorable.

[A8. Lithium secondary battery]

The lithium secondary battery according to the present invention includes the positive electrode for the lithium secondary battery according to the present invention, a negative electrode, a separator, and an electrolyte. Usually, a lithium secondary battery has high long-term cycle property and high output property. Particularly, in the positive electrode for the lithium secondary battery according to the present invention, corrosion of the current collector is suppressed. Therefore, the lithium secondary battery according to the present invention has high rate property and high cycle property and usually also has a high initial capacity. In the positive electrode for the lithium secondary battery according to the present invention, since the surface of the particles of the positive electrode active material is coated with the coating polymer, corrosion of the current collector over the lapse of time can also be suppressed. This also contributes to improvement in the cycle property of the lithium secondary battery according to the present invention.

[A8-1. Negative electrode]

Usually, the negative electrode includes a current collector and a negative electrode active material layer formed on the surface of the current collector.

As the current collector for the negative electrode, those made of a metal material such as iron, copper, aluminum, nickel, stainless steel, titanium, tantalum, gold, and platinum are used. Of these, copper is particularly preferable from the viewpoint of its high electric conductivity and electrochemical stability.

The negative electrode active material layer is a layer including the negative electrode active material and a binder.

Examples of the negative electrode active material may include: carbonaceous materials such as amorphous carbon, graphite, natural graphite, mesocarbon microbeads, and pitch-based carbon fibers; conductive polymers such as polyacene; metals such as silicon, tin, zinc, manganese, iron, and nickel and alloys thereof; oxides and sulfates of the aforementioned metals and alloys; metal lithium; lithium alloys such as Li-Al, Li-Bi-Cd, and Li-Sn-Cd; and lithium-transition metal nitrides. The negative electrode active material for use may be particles of the negative electrode active material to the surface of which a conducting material is caused to adhere using a mechanical modification method. As the negative electrode active material, one species thereof may be solely used, or two or more species thereof may be used in combination in any ratio.

Usually, the particle diameter of the negative electrode active material is appropriately selected in consideration of compatibility with other components of the lithium secondary battery according to the present invention. Particularly, from the viewpoint of improvement in battery properties such as initial efficiency, load property, and cycle property, the 50% volume cumulative diameter of the negative electrode active material is preferably 1 $\mu$m or more and more preferably 15 $\mu$m or more and is preferably 50 $\mu$m or less and more preferably 30 $\mu$m or less.

The containing ratio of the negative electrode active material in the negative electrode active material layer is preferably 90% by weight or more and more preferably 95% by weight or more and is preferably 99.9% by weight or less and more preferably 99% by weight or less. When the containing amount of the negative electrode active material is within the aforementioned range, the capacity of the lithium secondary battery according to the present invention can be increased, and the flexibility of the negative electrode and the binding property between the current collector and the negative electrode active material layer can be improved.

No particular limitation is imposed on the binder used for the negative electrode active material layer, and any known binder may be used. Preferable examples of the binder may include: polymers such as polyethylene, polytetrafluoroethylene (PTFE), polyvinylidene fluoride (PVDF), a tetrafluoroethylene-hexafluoropropylene copolymer (FEP), polyacrylic acid derivatives, and polyacrylonitrile derivatives; and soft polymers such as acrylic-based soft polymers, diene-based soft polymers, olefin-based soft polymers, and vinyl-based soft polymers. As the binder, one species thereof may be solely used, or two or more species thereof may be used in combination in any ratio.

If necessary, the negative electrode active material layer may further contain components other than the negative electrode active material and the binder. Examples of such components may include those that may be contained in the positive electrode active material layer in the positive electrode for the lithium secondary battery according to the present invention. As such a component, one species thereof may be solely used, or two or more species thereof may be used in combination in any ratio.

The thickness of the negative electrode, as the total thickness of the current collector and the negative electrode active material layer, is usually 5 $\mu$m or more and preferably 10 $\mu$m or more and is usually 300 $\mu$m or less and preferably 250 $\mu$m or less. When the thickness of the negative electrode falls within the aforementioned range, both the load property and the energy density can be made favorable.

The negative electrode may be produced by, e.g., preparing a negative electrode slurry composition containing the negative electrode active material, the binder, and the aqueous medium, forming the layer of the negative electrode slurry composition on the current collector, and then drying the layer, in the similar manner as for the positive electrode for the lithium secondary battery according to the present invention.

[A8-2. Electrolyte]

As the electrolyte solution for use in the lithium secondary battery according to the present invention, an organic electrolyte solution obtained by dissolving a supporting electrolyte in an organic solvent is usually used.

As the supporting electrolyte, a lithium salt is usually used. Examples of the lithium salt may include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, $(C_2F_5SO_2)NLi$, and LiI. Of these, $LiPF_6$, $LiClO_4$, and $CF_3SO_3Li$ are preferable because they are easily dissolved in the organic solvent and have a high degree of dissociation. The higher the degree of dissociation of the supporting electrolyte used is, the higher the conductivity of lithium ions can be made. As the supporting electrolyte, one species thereof may be solely used, or two or more species thereof may be used in combination in any ratio.

As the organic solvent, those which can dissolve the supporting electrolyte is used. Since the solubility of the supporting electrolyte tends to be determined in accordance with the relative dielectric constant of the organic solvent, the relative dielectric constant $\varepsilon_\gamma$ of the organic solvent is preferably 20 or higher and more preferably 25 or higher and is preferably 100 or less and more preferably 90 or less. Use of the organic solvent having the aforementioned relative dielectric constant enables favorable dissolution of the supporting electrolyte, so that the migration of lithium ions can be facilitated.

In the lithium secondary battery according to the present invention, it is preferable to use an organic solvent having a proper SP value as the organic solvent for the electrolyte solution, for allowing the coating polymer contained in the positive electrode for a lithium secondary battery according to the present invention to be swelled with the electrolyte solution. The specific SP value of the organic solvent varies depending on the type of the coating polymer but is usually 7.0 $(cal/cm^3)^{1/2}$ or more, preferably 7.5 $(cal/cm^3)^{1/2}$ or more, and more preferably 8.0 $(cal/cm^3)^{1/2}$ or more and is usually 16 $(cal/cm^3)^{1/2}$ or less, preferably 15.0 $(cal/cm^3)^{1/2}$ or less, and more preferably 12.0 $(cal/cm^3)^{1/2}$ or less.

The viscosity of the electrolyte solution is preferably 0.1 cp or more and is preferably 3 cp or less and more preferably 2 cp or less. When the viscosity of the electrolyte solution is set to such a low degree, the occurrence of unevenness in concentration of lithium ions in the organic solvent can be prevented, and the internal resistance of the lithium secondary battery according to the present invention can be reduced.

Preferable examples of the organic solvent for use may include: carbonates such as dimethyl carbonate (DMC), ethylene carbonate (EC), diethyl carbonate (DEC), propylene carbonate (PC), butylene carbonate (BC), and methyl ethyl carbonate (MEC); esters such as $\gamma$-butyrolactone, gamma butyrolactone (GBL), methyl formate, methyl acetate (MA), and methyl propionate (MP); ethers such as 1,2-dimethoxyethane, tetrahydrofuran, 2-methyltetrahydrofuran (2-MeTHF), and 1,3-dioxolane (DOL); and sulfur-containing compounds such as sulfolane and dimethyl sulfoxide. Of these, carbonates are preferable because of their high relative dielectric constant and wide stable potential region. As the organic solvent, one species thereof may be solely used, or two or more species thereof may be used in combination in any ratio. One particularly preferable example is a solvent mixture prepared by mixing EC:DEC = 1:2 (volume ratio at 20°C).

The electrolyte solution may further contain an additive. Examples of the additive may include carbonate-based compounds such as vinylene carbonate (VC). As the additive, one species thereof may be solely used, or two or more species thereof may be used in combination in any ratio.

The concentration of the supporting electrolyte in the electrolyte solution is usually 1% by weight or more and preferably 5% by weight or more and is usually 30% by weight or less and preferably 20% by weight or less. For some types of supporting electrolytes, the concentration may be usually 0.5 mol/L to 2.5 mol/L. By appropriately setting the concentration of the supporting electrolyte, the ionic conductivity can be increased.

As the electrolyte, in place of the aforementioned electrolyte solution, a polymer electrolyte such as polyethylene oxide or polyacrylonitrile, a gel polymer electrolyte prepared by impregnating any of the aforementioned polymer electrolytes with an electrolyte solution, or an inorganic solid electrolyte such as LiI or $Li_3N$ may also be used.

[A8-3. Separator]

Examples of the separator may include: fine porous films formed of resins such as polyolefin-based resins (e.g., polyethylene, polypropylene, polybutene, and polyvinyl chloride), mixtures thereof, and copolymers thereof; fine porous films formed of resins such as polyethylene terephthalate, polycycloolefins, polyether sulfone, polyamides, polyimides, polyimideamides, polyaramides, polycycloolefins, nylon, and polytetrafluoroethylene; woven products obtained by weaving fibers of the aforementioned resins; nonwoven fabrics of the fibers of the aforementioned resins; aggregates of insulating material particles such as inorganic ceramic powders; and porous resin coatings containing these fine insulating material particles. Of these, fine porous films formed of polyolefin-based resins are preferable because therewith the overall thickness of the separator can be reduced and the ratio of the electrode active materials in the lithium secondary battery can thereby be increased to increase the capacity per unit volume.

The thickness of the separator is usually 0.5 μm or more and preferably 1 μm or more and is usually 40 μm or less, preferably 30 μm or less, and more preferably 10 μm or less. When the thickness falls within the aforementioned range, the resistance caused by the separator in the lithium secondary battery becomes small, and good workability upon production of the lithium secondary battery can be obtained.

[A8-4. Method for producing lithium secondary battery]

The lithium secondary battery according to the present invention may be produced by, e.g., stacking the aforementioned positive electrode for the lithium secondary battery according to the present invention and the negative electrode via the separator; placing the stacked product in a battery container after the product is wound or folded as needed in conformity with the battery shape; pouring the electrolyte solution into the battery container; and sealing the battery container. If necessary, an overcurrent protective element such as a fuse or a PTC element, an expanded metal, a lead plate, etc. may be provide to prevent an increase in the pressure inside the lithium secondary battery and the occurrence of overcharging/overdischarging etc. The shape of the lithium secondary battery may be any of a coin type, a button type, a sheet type, a cylinder type, a rectangular shape, an oblate type, etc.

[B. Composite particles for lithium secondary battery positive electrode, positive electrode for lithium secondary battery, and lithium secondary battery according to second aspect of the present invention]

In the following sections [B1. Composite particles for lithium secondary battery positive electrode] to [B4-4. Method for producing lithium secondary battery], description will be given of the composite particles for a lithium secondary battery positive electrode, the positive electrode for a lithium secondary battery, and the lithium secondary battery according to a second aspect of the present invention.

In the following sections [B1. Composite particles for lithium secondary battery positive electrode] to [B4-4. Method for producing lithium secondary battery], matters according to the second aspect of the present invention may be simply referred to as matters according to the present invention. For example, the composite particles for a lithium secondary battery positive electrode, the positive electrode for a lithium secondary battery, and the lithium secondary battery according to the second aspect of the present invention may be simply referred to as the composite particles for a lithium secondary battery positive electrode according to the present invention, the positive electrode for a lithium secondary battery according to the present invention, and the lithium secondary battery according to the present invention, respectively.

[B1. Composite particles for lithium secondary battery positive electrode]

The composite particle for a lithium secondary battery positive electrode according to the present invention includes a coated active material particle and a binder.

[B1-1. Coated active material particle]

The coated active material particle includes positive electrode active material particle and a coating material that coats the surface of the positive electrode active material particle.

[B1-1-1. Positive electrode active material particles]

As the positive electrode active material constituting the positive electrode active material particle, any electrode active material that is used for usual lithium secondary batteries may be used without any particular limitation. Examples of the positive electrode active material may include lithium-containing complex metal oxides such as $LiCoO_2$, $LiNiO_2$, $LiMnO_2$, $LiMn_2O_4$, $LiFePO_4$, and $LiFeVO_4$; as well as $TiS_2$, $TiS_3$, amorphous $MoS_3$, $Cu_2V_2O_3$, amorphous $V_2O$-$P_2O_5$, $MoO_3$, $V_2O_5$, $V_6O_{13}$, and complex metal oxides represented by AxMyNzOp (wherein A represents Li, M represents at least one selected from Co, Ni, Fe, and Mn, N represents at least one selected from Al and Sn, O represents an oxygen atom, and x, y, z, and p are numbers in the ranges of $1.10 \geq x \geq 0.05$, $4.00 \geq y \geq 0.85$, $2.00 \geq z \geq 0$, and $5.00 \geq p \geq 1.50$). Particularly, from the viewpoint of preventing corrosion of a positive electrode current collector, $LiCoO_2$ is preferable.

Usually, when particles of a positive electrode active material are mixed with an aqueous medium, elusion of the positive electrode active material into the aqueous medium occurs. In the composite particles for a lithium secondary battery positive electrode according to the present invention, since the particles of the positive electrode active material are coated with the coating material containing a coating polymer, the aforementioned elution of the positive electrode active material can be prevented. However, it is preferable that the positive electrode active material is such that pH of, e.g., a mixed solution obtained by mixing 10 parts by weight of the particles of the positive electrode active material with 100 parts by weight of the aqueous medium is 11 or less. This is because excessively high pH of the mixed solution obtained by mixing the particles of the positive electrode active material with the aqueous medium may possibly reduce handling ability of the slurry composition.

The average particle diameter of the particles of the positive electrode active material is preferably 0.01 μm or more and more preferably 0.02 μm or more and is preferably 30 μm or less and more preferably 20 μm or less. When the average particle diameter of the particles of the positive electrode active material is set to be equal to or more than the lower limit of the aforementioned range, the conductivity of the particles of the positive electrode active material can be enhanced, so that the internal resistance of the lithium secondary battery according to the present invention can be reduced. When the average particle diameter is set to be equal to or less than the upper limit, the dispersibility of the coated active material particles in the slurry composition can be increased.

As the average particle diameter of the positive electrode active material, a 50% volume cumulative diameter is used. The 50% volume cumulative diameter means a particle diameter when a cumulative volume calculated from a small-diameter side in a particle size distribution measured by a laser diffraction method reaches 50%.

[B1-1-2. Coating material]

The coating material contains a coating polymer having a specific SP value and a conducting agent.

(i) Coating polymer

In the present invention, the SP value of the coating polymer constituting the coating material of the coated active material particles is 9.5 $(cal/cm^3)^{1/2}$ or more and preferably 10 $(cal/cm^3)^{1/2}$ or more and is 13 $(cal/cm^3)^{1/2}$ or less, preferably 12 $(cal/cm^3)^{1/2}$ or less, and more preferably 11 $(cal/cm^3)^{1/2}$ or less.

The meaning of the SP value and the method for determining the SP value are as described in the description of the first aspect of the present invention.

That the coating polymer has the aforementioned SP value means that the coating polymer is not dissolved in the aqueous medium. Therefore, in the slurry composition used to produce the composite particles for a lithium secondary battery positive electrode according to the present invention, portions of the positive electrode active material particles that are coated with the coating polymer do not come into contact with the aqueous medium, so that elusion of the positive electrode active material from these portions into the aqueous medium does not occur. The elution of the positive electrode active material into the aqueous medium can thereby be suppressed, so that corrosion of the current collector can be prevented.

That the coating polymer has the aforementioned SP value means also that the coating polymer is swellable with the electrolyte solution in the lithium secondary battery. Therefore, in the lithium secondary battery according to the present invention, the coating polymer does not hinder migration of ions, so that the internal resistance of the positive electrode for the lithium secondary battery according to the present invention can be suppressed to a small level. Usually, the lithium secondary battery contains no water or, even if it does, contains little amount of water. Therefore, even when the coating polymer swells, corrosion of the current collector due to elution of the positive electrode active material does not easily proceed.

However, if the coating polymer is dissolved in the electrolyte solution, the dissolved coating polymer may cause an increase in the internal resistance of the lithium secondary battery. In addition, if the coating polymer is dissolved in the electrolyte solution, corrosion of the current collector of the positive electrode in the lithium secondary battery may proceed, which may then cause reduction in cycle property. Therefore, preferable swellability of the coating polymer with the electrolyte solution is such that the gel ratio of the coating polymer measured using a Soxhlet extractor is preferably 30% or more and more preferably 50% or more. The gel ratio of the coating polymer is usually evaluated using a gel ratio (an electrolyte solution Soxhlet extracted residual gel ratio) calculated by dividing the weight of the coating polymer extracted by refluxing 1.0 g of the coating polymer and 100 mL of the electrolyte solution in a Soxhlet extractor for 6 hours by the original weight of the coating polymer (i.e., 1.0 g).

Therefore, it is preferable that the SP value of the coating polymer is set within an appropriate range in which the coating polymer swells with the electrolyte solution in the lithium secondary battery but is not dissolved in the electrolyte solution. More specifically, it is preferable that the range of the SP value of the coating polymer is set in accordance with the electrolyte solution included in the lithium secondary battery. For example, the absolute value of the difference between the SP value of the coating polymer and the SP value of a solvent for the electrolyte solution in the lithium secondary battery is preferably 0 $(cal/cm^3)^{1/2}$ or more and is preferably 2 $(cal/cm^3)^{1/2}$ or less.

As the solvent for the electrolyte solution of the lithium secondary battery, a mixture of a high-dielectric constant solvent that has a high dielectric constant and can easily solvate the electrolyte (e.g., ethylene carbonate or propylene carbonate) and a low-viscosity solvent for reducing the viscosity of the electrolyte solution to increase its ionic conductivity (e.g., 1,2-dimethoxyethane, diethyl carbonate, dimethyl carbonate, ethyl methyl carbonate, etc.) is usually used. The types and mixing ratio of the solvents are selected such that the electric conductivity of the electrolyte solution is increased as much as possible. Examples of the correspondence with the solvent for a typical electrolyte solution may be as follows.

For example, when the solvent for the electrolyte solution is a solvent mixture of ethylene carbonate (EA): diethyl carbonate (DEC) = 1:2, the SP value of the coating polymer is preferably 9.5 $(cal/cm^3)^{1/2}$ or more and more preferably 10.0 $(cal/cm^3)^{1/2}$ or more and is preferably 11.5 $(cal/cm^3)^{1/2}$ or less and more preferably 11 $(cal/cm^3)^{1/2}$ or less.

It is preferable that the coating polymer is a polymer dispersible in the aqueous medium. This is for dispersing the coated active material particles in the aqueous medium of the slurry composition, to thereby obtain favorable application property of the slurry composition.

It is preferable that the coating polymer includes an acidic functional group. In this case, the acid value of the coating polymer is desirably larger than 0 mg KOH/g and is preferably 60 mg KOH/g or less, more preferably 50 mg KOH/g or less, and particularly preferably 30 mg KOH/g or less. In addition, it is preferable that the base number of the coating polymer is usually 5 mg HCl/g or less, preferably 1 mg HCl/g or less, and more preferably 0. By increasing the acid value of the coating polymer (i.e., by reducing the base number), the elution of the positive electrode active material into the aqueous medium can be prevented in a more reliable manner, and corrosion of the current collector can be prevented in a more stable manner. When the acid value is set to be equal to or less than the upper limit of the aforementioned range, the stability of the slurry composition can be improved.

Examples the acidic functional group in the coating polymer may include those exemplified in the description of the first aspect of the present invention.

Preferable examples of the coating polymer may include aqueous type acrylic polymers. The term "aqueous type" used herein means that the acrylic polymer is dispersible in water. The acrylic polymer means a polymer having a (meth)acrylic acid ester monomer unit.

The (meth)acrylic acid ester monomer unit refers to as a monomer unit obtained by polymerization of a (meth)acrylic acid ester monomer. Examples of the (meth)acrylic acid ester monomer may include those exemplified in the description of the first aspect of the present invention.

The containing ratio of the (meth)acrylic acid ester monomer unit in the acrylic polymer is preferably 50% by weight or more, more preferably 55% by weight or more, and particularly preferably 60% by weight or more and is preferably 90% by weight or less. When the containing ratio of the (meth)acrylic acid ester monomer unit is set to be equal to or more than the lower limit of the aforementioned range, the acrylic polymer can be softened, so that the occurrence of cracks in the positive electrode for the lithium secondary battery can be prevented. When the containing ratio of the (meth)acrylic acid ester monomer unit is set to be equal to or less than the upper limit of the aforementioned range, the high-temperature storage property and low-temperature output property of the lithium secondary battery according to the present invention can be made favorable. Particularly, it is preferable that the acrylic polymer contains butyl acrylate in a ratio of 25 to 30% by weight.

For allowing the acrylic polymer to include the aforementioned acidic functional group with the acid value falling within the aforementioned range, it is preferable that the acrylic polymer includes a monomer unit obtained by polymerizing a vinyl monomer having an acidic functional group. Examples of the vinyl monomer having an acidic functional group may include monomers having a carboxylic acid group, monomers having a hydroxyl group, monomers having a sulfonic acid group, monomers having a phosphoric acid group, monomers having a -PO(OH)(OR) group (R represents a hydrocarbon group), and monomers having a lower polyoxyalkylene group.

Examples of the monomers having a carboxylic acid group, the monomers having a sulfonic acid group, the monomers having a phosphoric acid group or a -PO(OH)(OR) group, and the monomers having a lower polyoxyalkylene group that may be used as the vinyl monomers having an acidic functional group may include those exemplified in the description of the first aspect of the present invention.

Of these vinyl monomers having acidic functional groups, monomers having a carboxylic acid group are preferable because therewith the lithium secondary battery according to the present invention can have high output property. Particularly, monocarboxylic acids having 5 or less carbon atoms and one carboxylic acid group, such as acrylic acid and methacrylic acid, and dicarboxylic acids having 5 or less carbon atoms and two carboxylic acid groups, such as maleic acid and itaconic acid, are preferable. From the viewpoint of improving storage stability of the acrylic polymer, acrylic acid and methacrylic acid are preferable.

The containing ratio of the monomer unit obtained by polymerizing a vinyl monomer having an acidic functional group in the acrylic polymer is preferably 1% by weight or more and more preferably 1.5% by weight or more and is preferably 5% by weight or less and more preferably 4% by weight or less. When the containing ratio of the monomer unit obtained by polymerizing a vinyl monomer having an acidic functional group is set to be equal to or more than the lower limit of the aforementioned range, the acid value of the acrylic polymer falls within a preferable range, so that corrosion of the current collector can be effectively prevented. Therefore, the cycle property of the lithium secondary battery according to the present invention can be improved. In addition, the strength of the acrylic polymer can be increased, so that the stability of the slurry composition can be increased. When the containing ratio of the monomer unit is set to be equal to or less than the upper limit of the aforementioned range, the flexibility of the acrylic polymer can be improved, so that the production stability and storage stability of the slurry composition can be made favorable.

Further, it is preferable that the acrylic polymer includes a monomer unit obtained by polymerizing an α,β-unsaturated nitrile monomer for improving the binding property between the coated active material particles and the current collector and for improving the binding property between the coated active material particles themselves. From the viewpoint of improving mechanical strength and binding strength, the α,β-unsaturated nitrile monomer is preferably, e.g., acrylonitrile or methacrylonitrile and is particularly preferably acrylonitrile. As such a monomer, one species thereof may be solely used, or two or more species thereof may be used in combination in any ratio.

The containing ratio of the monomer unit obtained by polymerizing an α,β-unsaturated nitrile monomer in the acrylic polymer is preferably 5% by weight or more and more preferably 10% by weight or more and is preferably 20% by weight or less. When the amount of the monomer unit obtained by polymerizing an α,β-unsaturated nitrile monomer is set to be equal to or more than the lower limit of the aforementioned range, the strength of the acrylic polymer can be improved. When the amount of the monomer unit is set to be equal to or less than the upper limit of the aforementioned range, the acrylic polymer can be softened, so that the occurrence of cracks in the positive electrode for the lithium secondary battery can be prevented.

The acrylic polymer may further include a monomer unit other than the aforementioned monomer units. Examples of such a monomer unit may include monomer units obtained by polymerizing vinyl monomers other than the aforementioned vinyl monomers. Specific examples thereof may include: monomers containing a halogen atom such as vinyl chloride and vinylidene chloride; vinyl esters such as vinyl acetate, vinyl propionate, and vinyl butyrate; vinyl ethers such as methyl vinyl ether, ethyl vinyl ether, and butyl vinyl ether; vinyl ketones such as methyl vinyl ketone, ethyl vinyl ketone, butyl vinyl ketone, hexyl vinyl ketone, and isopropenyl vinyl ketone; and vinyl compounds containing a heterocycle such as N-vinylpyrrolidone, vinylpyridine, and vinylimidazole. As such a monomer, one species thereof may be solely used, or two or more species thereof may be used in combination in any ratio.

The glass transition temperature of the coating polymer is usually -30°C or higher, preferably -10°C or higher, and more preferably 0°C or higher and is usually 100°C or lower, preferably 80°C or lower, and more preferably 70°C or lower. When the glass transition temperature of the coating polymer is set to be equal to or more than the lower limit of the aforementioned range, tendency to cause blocking can be lowered, so that the dispersibility of the coated active material particles can be increased. When the glass transition temperature is set to be equal to or less than the upper limit of the aforementioned range, the acrylic polymer can be softened, and the occurrence of cracks in the positive electrode for the lithium secondary battery can be prevented.

The amount of the coating polymer in the coated active material particles with respect to 100 parts by weight of the positive electrode active material particles is usually 0.5 parts by weight or more and preferably 1 part by weight or more and is usually 5 parts by weight or less and preferably 3 parts by weight or less. When the amount of the coating polymer is set to be equal to or less than the aforementioned limit, the amount of the coating polymer dissolved in the electrolyte solution can be equal to or less than an appropriate upper limit. Therefore, an excessive increase in the viscosity of the electrolyte solution can be suppressed, and unnecessary suppression of the flow of lithium ions can be prevented. In addition, the occurrence of unevenness in concentration can be suppressed, and an increase in resistance can be suppressed.

(ii) Conducting agent

In the present invention, the coating material that coats the positive electrode active material particle in the coated active material particle may contain a conducting agent in addition to the coating polymer.

Examples of the conducting agent may include: conductive carbon such as acetylene black, Ketjen black, carbon black, and graphite; and fibers and foils of a variety of metals, and acetylene black is particularly preferable. When the coating material contains the conducting agent, electric contact between the positive electrode active materials can be improved, and the discharge load property of the lithium secondary battery according to the present invention can be improved. Therefore, the rate property and other properties of the lithium secondary battery can be improved.

It is preferable that the conducting agent has a particle shape, and the diameter of the particles is preferably 1 nm or more and more preferably 5 nm or more and is preferably 500 nm or less and more preferably 100 nm or less. As the average particle diameter of the conducting agent particles, 50% volume cumulative diameter is used in the same manner as the particle diameter of the positive electrode active material particles. When the particle diameter of the conducting agent is set to be equal to or more than the aforementioned lower limit, the dispersibility of the conducting agent can be maintained in a favorable state. When the particle diameter of the conducting agent is set to be equal to or less than the aforementioned upper limit, specific surface area thereof can be adjusted to a desired large value, and therefore the effects of the conducting agent can be favorably exerted, so that the resistance can be made equal to or smaller than the desired value.

The amount of the conducting agent in the coated active material particles with respect to 100 parts by weight of the positive electrode active material particles is usually 0.01 parts by weight or more and preferably 1 part by weight or more and is usually 20 parts by weight or less and preferably 10 parts by weight or less. When the amount of the conducting agent is set to be equal to or more than the lower limit of the aforementioned range, the stability of the slurry composition and the plate density of the positive electrode for the lithium secondary battery according to the present invention can be improved. When the amount is set to be equal to or less than the upper limit of the aforementioned range, a conducting path can be stably formed by the conducting agent, and the output property of the lithium secondary battery according to the present invention can be improved.

[B-1-3. Coating material layer]

The thickness of the layer of the coating material (coating material layer) in the coated active material is preferably 0.2 μm or more and more preferably 0.3 μm or more and is preferably 2 μm or less and more preferably 1 μm or less. When the thickness of the coating material layer is set to be equal to or more than the lower limit of the aforementioned range, corrosion of the current collector can be stably prevented. When the thickness is set to be equal to or less than the upper limit of the aforementioned range, the resistance due to the coating material layer can be reduced, and the output property of the lithium secondary battery according to the present invention can be increased.

The thickness of the coating material layer may be determined by dividing the weight of the coating material layer by the specific surface area of the particles of the positive electrode active material to calculate the weight of the coating material per unit surface area and then dividing the calculated weight of the coating material per unit surface area by the density of the coating material. In the aforementioned measurement method, the thickness of the coating material layer is determined under the assumption that the entire surface of the particles of the positive electrode active material is coated with the coating material layer. However, the entire surface of the positive electrode active material particles is not always coated with the coating material layer. Therefore, the value determined by the aforementioned measurement method does not directly represent the actual thickness of the coating material layer. However, the value of the thickness of the coating material layer determined by the aforementioned measurement method is a value having a significance for evaluating the effects obtained by forming the coating material layer.

The coating material layer does not necessarily coat the entire surface of the positive electrode active material particles. However, it is preferable that larger area of the surface of the positive electrode active material particles is coated with the coating material layer. More specifically, the covering ratio of the positive electrode active material particles with the coating material layer is preferably 80% or more and more preferably 90% or more.

The covering ratio of the positive electrode active material particles with the coating material layer may be measured as follows. That is, the coated active material particles are dispersed in an epoxy resin, and the epoxy resin is cured. Then the cured epoxy resin is cooled to a temperature of -80°C and cut using a microtome to produce a thin piece. The coating material layer is stained with vapor of a 0.5 wt% aqueous ruthenium tetroxide solution and observed under a TEM (transmission electron microscope). The observation is performed at a magnification of 2,000 times to 6,000 times. The magnification is adjusted such that cross sections of 5 to 20 coated active material particles can be observed in an area of 28 μm × 35 μm. Then 100 particles are selected from them, and their coated states are observed. In this observation, the observed images are visually checked. A particle in which 80% or more of its cross-sectional length is coated with the coating material layer is ranked A, and a particle in which 50% to 79% of the cross-sectional length is coated is ranked B. The covering ratio is determined as "covering ratio (%) = (the number of A ranked particles) + 0.5 × (the number of B ranked particles)".

In the composite particles for the lithium secondary battery positive electrode according to the present invention, the amount of the coating material is set such that the thickness of the coating material layer falls within the aforementioned range. The specific amount of the coating material varies depending on the type of the coating material. However, the specific amount of the coating material with respect to 100 parts by weight of the positive electrode active material is usually 0.5 parts by weight or more and preferably 1 part by weight or more and is usually 5 parts by weight or less and preferably 3 parts by weight or less.

[B1-1-4. Properties of coated active material particles]

The average particle diameter of the coated active material particles is preferably 0.01 μm or more and more preferably 0.02 μm or more and is preferably 30 μm or less and more preferably 20 μm or less. When the average particle diameter of the coated active material particles is set to be equal to or more than the lower limit of the aforementioned range, dispersion stability can be improved. When the average particle diameter is set to be equal to or less than the upper limit of the aforementioned range, initial efficiency can be improved. As the average particle diameter of the coated active material particles, 50% volume cumulative diameter is used.

[B1-1-5. Method for producing coated active material particles]

Examples of the method for producing the coated active material particle may include a fluidizing granulation method, a spray granulation method, a coagulant precipitation method, and a pH precipitation method. Of these, the fluidizing granulation method and the spray granulation method are preferable, and the spray granulation method is particularly preferable.

(B1-1-5.i) Fluidizing granulation method

The fluidizing granulation method is a method including: fluidizing the positive electrode active material particles; and spraying a liquid composition containing the coating material and the aqueous medium onto the fluidized positive electrode active material particles. More specifically, the fluidizing granulation method includes: the step of preparing the liquid composition containing the coating polymer, the conducting agent, and the aqueous medium; the step of fluidizing the positive electrode active material particles; the step of spraying the liquid composition onto the fluidized positive electrode active material particles to form coated active material particles; the step of tumbling the formed coated active material particles; and the step of subjecting the coated active material particles to heat treatment. The order of these steps may be arbitrary determined so long as the coated active material particles can be obtained.

The liquid composition containing the coating material and the aqueous medium is a slurry dispersion in which the coating polymer and the conducting agent are dispersed in the aqueous medium. As the aqueous medium, water is usually used. In this liquid composition, the using amount of the aqueous medium is within the range by which the solid concentration in the liquid composition is adjusted to usually 1% by weight or more, preferably 5% by weight or more, and more preferably 10% by weight or more and to usually 50% by weight or less and preferably 30% by weight or less. By setting the amount of the aqueous medium within the aforementioned range, the coating polymer and the conducting agent can be uniformly dispersed in the liquid composition.

Examples of the means for mixing the coating material and the aqueous medium may include mixers such as a ball mill, a sand mill, a bead mill, a pigment disperser, a grinder, an ultrasonic disperser, a homogenizer, and a planetary mixer. The mixing is usually performed at temperatures ranging from room temperature to 80°C for 10 minutes to several hours. The liquid composition may further contain a component other than the coating polymer and the aqueous medium, so long as the effects of the present invention are not significantly impaired.

Examples of the method for fluidizing the positive electrode active material particles may include a method using a fluidized bed, a method using a modified fluidized bed, and a method using a spouted bed.

The fluidizing method using a fluidized bed is a method for fluidizing the positive electrode active material particles using hot air. Aggregatory granulation can be performed by spraying the aforementioned liquid composition onto the fluidized positive electrode active material particles using, e.g., a spray.

The fluidizing method using a modified fluidized bed is a method for fluidizing the positive electrode active material particles using hot air, as is the method using a fluidized bed. However, the fluidizing method using a modified fluidized bed is a method in which circulating flow is given to the positive electrode active material particles in the modified fluidized bed, and coated active material particles that have grown to a relatively large degree are selectively collected from the modified fluidized bed by utilizing a classification effect.

The fluidizing method using a spouted bed is a granulation method in which the aforementioned liquid composition is sprayed onto coarse particles of the positive electrode active material to allow the liquid composition to adhere to the particles and simultaneously the particles are dried by utilizing the nature of the spouted bed.

Among the aforementioned methods, the method using a fluidized bed or a modified fluidized bed is preferable as the fluidizing method.

The temperature of the sprayed liquid composition is usually room temperature, but the liquid composition may be heated to a temperature equal to or higher than room temperature.

The temperature of the hot air used to fluidize the positive electrode active material particles is usually 70°C or higher and preferably 80°C or higher and is usually 300°C or lower and preferably 200°C or lower.

By spraying the liquid composition containing the coating material onto the fluidized positive electrode active material particles, the coating material adheres to the surface of the particles of the positive electrode active material, whereby the coated active material particles are obtained. In this step, the obtained coated active material particles may be completely dried. However, for improving granulation efficiency in the subsequent tumbling step, the coated active material particles are preferably in a wet state.

If necessary, the obtained coated active material particles are tumbled to perform tumbling granulation. Examples of the tumbling granulation may include a rotating pan method, a rotating drum method, and a rotating truncated cone method.

The rotating pan method is a method in which the coating material or the aforementioned liquid composition is sprayed as needed onto the coated active material particles supplied to the inclined rotating pan to grow the coated active material particles and then the granulated product that has grown to a relatively large degree is discharged from a rim by utilizing the classification effect of the rotating pan.

The rotating drum method is a method in which the coated active material particles in a wet state are supplied to the inclined rotating drum to tumble the supplied coated active material particles in the drum. In this method, the coating material or the aforementioned liquid composition is sprayed as needed to grow the coated active material particles.

The mechanism of granulation of the rotating truncated cone method is the same as that of the rotating drum method. The rotating truncated cone method is a method in which coated active material particles that have grown to a relatively large degree are selectively collected by utilizing the classification effect of the truncated cone on the aggregatory granulation product.

From the viewpoint of removal of the aqueous medium, the temperature when the coated active material particles are tumbled is usually 80°C or higher and preferably 100°C or higher and is usually 300°C or lower and preferably 200°C or lower.

If necessary, the coated active material particles may be subjected to heat treatment for curing the surface of the coated active material particles. The temperature of the heat treatment is usually 80°C to 300°C.

The coated active material particles are obtained by the aforementioned operation.

(B1-1-5.ii) Spray granulation method

The spray granulation method is a method including spraying a liquid composition containing the positive electrode active material particles, the coating material, and the aqueous medium. More specifically, the method includes: the step of preparing the liquid composition containing the positive electrode active material particles, the coating material, and the aqueous medium; and the step of spraying the liquid composition to form coated active material particles. The order of these steps may be arbitrary determined so long as the coated active material particles are obtained.

The liquid composition containing the positive electrode active material particles, the coating material, and the aqueous medium is a slurry dispersion in which the positive electrode active material particles and the coating material are dispersed in the aqueous medium. As the aqueous medium, water is usually used. In the liquid composition, the using amount of the aqueous medium is within the range by which the solid concentration in the liquid composition is adjusted to usually 1% by weight or more, preferably 5% by weight or more, and more preferably 10% by weight or more and to usually 50% by weight or less, preferably 40% by weight or less, and more preferably 30% by weight or less. When the amount of the aqueous medium falls within the aforementioned range, the coating material can be uniformly dispersed in the liquid composition.

The positive electrode active material particles, the coating material, and the aqueous medium may be mixed using, e.g., the same means under the same conditions as those used for preparing the liquid composition in the fluidizing granulation method.

By spraying the liquid composition using a spay dryer, the liquid droplets of the sprayed liquid composition are dried inside the drying tower. By this step, coated active material particles containing the positive electrode active material particles and the coating material that are the ingredients of the liquid droplets can be obtained. The temperature of the sprayed liquid composition is usually room temperature, but the liquid composition may be heated to a temperature higher than room temperature. The temperature of hot air during spray drying is usually 80 to 250°C and preferably 100 to 200°C.

In the spray granulation method, as in the fluidizing granulation method, the step of tumbling the obtained coated active material particles and the step of subjecting the coated active material particles to heat treatment may be performed as needed.

[B1-2. Binder]

The composite particle for the lithium secondary battery positive electrode according to the present invention includes a binder in addition to the coated active material particle.

The binder in a positive electrode active material layer is a component that can hold the components contained in the positive electrode active material layer such that they do not drop out of the positive electrode active material layer. Generally, the binder in an active material layer absorbs the electrolyte solution when the active material layer is immersed in the electrolyte solution, and swells. However the binder nevertheless maintains the shape of the particles, and binds the active material particles to each other to prevent the active material particles from dropping out of the current collector. On the other hand, the coating polymer is dissolved when immersed in the electrolyte solution, so that voids are formed in the coating material layer. In the present invention, the composite particle for the lithium secondary battery positive electrode contains the binder in the composite particle, whereby it is possible to realize a structure in which voids are present and the positive electrode active material particles are uniformly bound via the binder in the electrolyte solution, so that the aforementioned electrode performance and the aforementioned battery performance can be favorably maintained.

In the present invention, as the binder, a binder that can be dissolved or dispersed in the aqueous medium (hereinafter such a binder may be referred to as a "aqueous type binder") is usually used. Particularly, it is preferable to use an aqueous type binder dispersible in the aqueous medium. As the binder, one species thereof may be solely used, or two or more species thereof may be used in combination in any ratio. As the aqueous medium, water is usually used

Preferable examples of the aqueous type binder material may include a polymer that can be dispersed in water to form a water dispersion such as a latex. Examples of such a polymer may include diene polymers, acrylic polymers, fluorine polymers, and silicon polymers. Of these, acrylic polymers are preferable.

The acrylic polymer is a polymer including a (meth)acrylic acid ester monomer. Particularly, a polymer containing a (meth)acrylic acid ester monomer unit, a monomer unit obtained by polymerizing a vinyl monomer having an acid component, and a monomer unit obtained by polymerizing an α,β-unsaturated nitrile monomer is preferable.

Examples of the (meth)acrylic acid ester monomer may include those exemplified in the description of the coating polymer. Particularly, (meth)acrylic acid ester monomers having 6 or more carbon atoms are preferable, and those having 7 or more carbon atoms are more preferable; whereas (meth)acrylic acid ester monomers having 15 or less carbon atoms are preferable, and those having 13 or less carbon atoms are more preferable. This is because such (meth)acrylic acid ester monomers are not eluted in the electrolyte solution but swell with the electrolyte solution to a proper extent in the lithium secondary battery according to the present invention, to provide good ionic conductivity and to realize an extended battery life. Of these, 2-ethylhexyl acrylate is particularly preferable. As the (meth)acrylic acid ester monomer, one species thereof may be solely used, or two or more species thereof may be used in combination in any ratio.

The containing ratio of the monomer unit obtained by polymerizing a (meth)acrylic acid ester monomer in the acrylic polymer is preferably 50% by weight or more and more preferably 60% by weight or more and is preferably 95% by weight or less and more preferably 90% by weight or less. When the containing ratio of the monomer unit obtained by polymerizing the (meth)acrylic acid ester monomer is set to be equal to or more than the lower limit of the aforementioned range, the flexibility of the binder can be increased, so that the positive electrode for the lithium secondary battery can resist cracking. When the containing ratio is set to be equal to or less than the upper limit of the aforementioned range, the mechanical strength of the binder can be improved, and the binding strength can be increased.

Examples of the vinyl monomer having an acid component may include those exemplified for the vinyl monomer having an acidic functional group in the description of the coating polymer. Of these, monomers having a carboxylic acid group are preferable because of high adhesion to the current collector. Particularly, monocarboxylic acids having 5 or less carbon atoms and one carboxylic acid group, such as acrylic acid and methacrylic acid, and dicarboxylic acids having 5 or less carbon atoms and two carboxylic acid groups, such as maleic acid and itaconic acid, are preferable. From the viewpoint that the storage stability of the acrylic polymer can be improved, acrylic acid and methacrylic acid are preferable. As such a vinyl monomer, one species thereof may be solely used, or two or more species thereof may be used in combination in any ratio.

The containing ratio of the monomer unit obtained by polymerizing a vinyl monomer having an acid component in the acrylic polymer is preferably 1.0% by weight or more and more preferably 1.5% by weight or more and is preferably 5.0% by weight or less and more preferably 4.0% by weight or less. When the containing ratio of the monomer unit obtained by polymerizing the vinyl monomer having an acid component is set to be equal to or more than the lower limit of the aforementioned range, the binding property of the binder can be increased, so that cycle property can be improved. When the containing ratio is set to be equal to or less than the upper limit of the aforementioned range, the production stability and storage stability of the acrylic polymer can be made favorable.

From the viewpoint of improvement in mechanical strength and binding strength, the α,β-unsaturated nitrile monomer is preferably, e.g., acrylonitrile or methacrylonitrile and is particularly preferably acrylonitrile. As the α,β-unsaturated nitrile monomer, one species thereof may be solely used, or two or more species thereof may be used in combination in any ratio.

The containing ratio of the monomer unit obtained by polymerizing an α,β-unsaturated nitrile monomer in the acrylic polymer is preferably 3% by weight or more and more preferably 5% by weight or more and is preferably 40% by weight or less and more preferably 30% by weight or less. When the containing ratio of the monomer unit obtained by polymerizing the α,β-unsaturated nitrile monomer is set to be equal to or more than the lower limit of the aforementioned range, the mechanical strength of the binder can be improved, so that the binding strength can be increased. When the containing ratio is set to be equal to or less than the upper limit of the aforementioned range, the flexibility of the binder can be increased, so that the positive electrode for the lithium secondary battery can resist cracking.

The acrylic polymer may further contain a monomer unit obtained by polymerizing a monomer having a cross-linking ability. Examples of the monomer having a cross-linking ability may include those exemplified in the description of the coating polymer. As such a monomer unit, one species thereof may be solely used, or two or more species thereof may be used in combination in any ratio.

The containing ratio of the monomer unit obtained by polymerizing a monomer having a cross-linking ability in the acrylic polymer is preferably 0.01% by weight or more and more preferably 0.05% by weight or more and is preferably 0.5% by weight or less and more preferably 0.3% by weight or less. When the containing ratio of the monomer unit obtained by polymerizing the monomer having a cross-linking ability falls within the aforementioned range, the acrylic polymer swells with the electrolyte solution to a proper extent, and the rate property and the cycle property can be further improved.

The acrylic polymer may further contain a monomer unit obtained by polymerizing a monomer other than the aforementioned monomers. Examples of such a monomer may include those exemplified in the description of the coating polymer. As such a monomer, one species thereof may be solely used, or two or more species thereof may be used in combination in any ratio.

The binder is usually produced as a dispersion in which the binder is dispersed in a particle form in the aqueous medium. The binder is included in the slurry composition for producing the composite particles for the lithium secondary battery positive electrode also as a dispersion in which the binder is dispersed in a particle form in the aqueous medium.

When the binder is dispersed in a particle form in the aqueous medium, the volume average particle diameter of the binder particles is preferably 50 nm or more, more preferably 60 nm or more, and still more preferably 70 nm or more and is preferably 200 nm or less, more preferably 185 nm or less, and still more preferably 160 nm or less. When the volume average particle diameter of the binder particles is set to be equal to or more than the lower limit of the aforementioned range, the stability of the slurry composition can be improved. When the volume average particle diameter is set to be equal to or less than the upper limit of the aforementioned range, the binding strength between the coated active material and the current collector or the binding strength between the coating active materials themselves can be increased.

The glass transition temperature (Tg) of the binder is preferably -50°C or higher, more preferably -45°C or higher, and particularly preferably -40°C or higher and is preferably 25°C or lower, more preferably 15°C or lower, and particularly preferably 5°C or lower. When the glass transition temperature of the binder falls within the aforementioned range, the strength and flexibility of the positive electrode for the lithium secondary battery according to the present invention can be improved, and high output property can be achieved. The glass transition temperature of the binder can be controlled by, e.g., changing a combination of the monomers constituting the monomer units.

The amount of the binder with respect to 100 parts by weight of the coated active material particles is preferably 0.1 parts by weight or more, more preferably 0.5 parts by weight or more, and still more preferably 0.8 parts by weight or more and is preferably 10 parts by weight or less, more preferably 5 parts by weight or less, and still more preferably 3 parts by weight or less. When the amount of the binder is set to be equal to or more than the lower limit of the aforementioned range, the binding property between the coated active material particles can be increased, and the cycle property can be increased. When the amount is set to be equal to or less than the upper limit of the aforementioned range, migration of lithium ions in the lithium secondary battery according to the present invention can be prevented from being inhibited by the binder, so that battery resistance can be reduced.

No particular limitation is imposed on the method for producing the binder. For example, any of a solution polymerization method, a suspension polymerization method, a bulk polymerization method, an emulsion polymerization method, etc. may be used. As the polymerization method, any of, e.g., ionic polymerization, radical polymerization, and living radical polymerization may be used.

When the binder is produced, a polymerization initiator is usually used. Examples of the polymerization initiator may include: organic peroxides such as lauroyl peroxide, diisopropyl peroxydicarbonate, di-2-ethylhexyl peroxydicarbonate, t-butyl peroxy pivalate, and 3,3,5-trimethylhexanoyl peroxide; azo compounds such as $\alpha,\alpha'$-azobisisobutyronitrile; ammonium persulfate; and potassium persulfate. As the polymerization initiator, one species thereof may be solely used, or two or more species thereof may be used in combination in any ratio.

When the binder is produced, a dispersant is usually used. Examples of the dispersant may include: benzenesulfonates such as sodium dodecylbenzenesulfonate and sodium dodecyl phenyl ether sulfonate; alkyl sulfates such as sodium laurylsulfate and sodium tetradodecylsulfate; sulfosuccinates such as sodium dioctylsulfosuccinate and sodium dihexylsulfosuccinate; fatty acid salts such as sodium laurate; ethoxy sulfates such as sodium polyoxyethylene lauryl ether sulfate and sodium polyoxyethylene nonylphenyl ether sulfate; alkane sulfonates; sodium alkyl ether phosphates; nonionic surfactants such as polyoxyethylene nonylphenyl ether, polyoxyethylene sorbitan lauryl ester, polyvinyl alcohol, and a polyoxyethylene-polyoxypropylene block copolymer; and water-soluble polymers such as gelatin, a maleic anhydride-styrene copolymer, polyvinylpyrrolidone, sodium polyacrylate, and polyvinyl alcohol having a degree of polymerization of 700 or more and a degree of saponification of 75% or more. Of these, nonionic surfactants are preferable because therewith no precipitation occurs when the coated active material particles contain a polyvalent metal compound, and polyvinyl alcohol is particularly preferable. As the dispersant, one species thereof may be solely used, or two or more species thereof may be used in combination in any ratio.

The using amount of the dispersant with respect to 100 parts by weight of the total of the monomers used for polymerization is usually 0.01 parts by weight to 10 parts by weight.

Usually, the binder is obtained as particles contained in a dispersion and is stored and carried in the form of dispersion. The solid concentration in such a dispersion is usually 15% by weight or more, preferably 20% by weight or more, and more preferably 30% by weight or more and is usually 70% by weight or less, preferably 65% by weight or less, and more preferably 60% by weight or less. When the solid concentration in the dispersion falls within the aforementioned range, workability when the slurry composition is produced is favorable.

The pH of the dispersion containing the binder is preferably 5 or more and more preferably 10 or more and is preferably 13 or less and more preferably 12 or less. When the pH of the dispersion falls within the aforementioned range, the storage stability of the binder is improved, and, furthermore, the mechanical stability of the positive electrode for the lithium secondary battery according to the present invention can be improved.

[B1-3. Properties of composite particles for lithium secondary battery positive electrode]

The average particle diameter of the composite particles for the lithium secondary battery positive electrode according to the present invention is preferably 30 μm or more and is preferably 1,000 μm or less, more preferably 200 μm or less, and particularly preferably 150 μm or less. When the average particle diameter of the composite particles for the lithium secondary battery positive electrode is set to be equal to or more than the lower limit of the aforementioned range, decomposition of the electrolyte solution caused by an excessive increase in the specific surface area of the composite particles can be prevented. When the average particle diameter is set to be equal to or less than the upper limit of the aforementioned range, the filling factor per unit volume is improved, and a sufficient battery capacity can thereby be obtained. As the average particle diameter of the composite particles for the lithium secondary battery positive electrode, 50% volume cumulative diameter is used.

Usually, each of the composite particles for the lithium secondary battery positive electrode has a structure in which the coated active material particles are bound via the binder. In addition to the conducting agent contained in the coating material, between the coated active material particles, another conducting agent may be present together with the binder. With such a structure, the conducting agent can form a continuous structure to thereby form a conducting path, so that the resistance can be reduced.

[B2. Method for producing composite particles for lithium secondary battery positive electrode: spray granulation method]

The composite particle for the lithium secondary battery electrode according to the present invention may be produced by a production method including: the step of dispersing the coated active material particles, the binder, and a conducting agent in the aqueous medium to obtain a slurry composition; and the step of granulating the slurry composition by spray-drying the slurry composition.

[B2-1. Step of obtaining slurry composition]

Examples of the conducting agent for adding to the slurry composition may include those for the conducting agent included in the aforementioned coating material. The conducting agent for adding to the slurry composition may be the same as or different from the conducting agent included in the coating material. The amount of the conducting agent to be added at this stage to the slurry composition (the amount of the conducting agent contained in the coating material layer is not included in this amount) is preferably 0.01 parts by weight or more and more preferably 1 part by weight or more and is preferably 20 parts by weight or less and more preferably 10 parts by weight or less, with respect to 100 parts by weight of the coated active material particles. When the adding amount of the conducting agent falls within the aforementioned range, sufficient rate property and a sufficient capacity can be ensured. Particularly, when the amount of the conducting agent is equal to or more than the lower limit, the electric resistance of the battery can be maintained at a desired low value, and the rate property can be improved. When the amount of the conducting agent is equal to or less than the upper limit, the capacity of the battery can be increased.

As the aqueous medium for use in the preparation of the slurry composition, water is usually used. In the slurry composition, the using amount of the aqueous medium is within the range by which the solid concentration in the slurry composition is adjusted to usually 1% by weight or more, preferably 5% by weight or more, and more preferably 10% by weight or more and to usually 50% by weight or less, preferably 40% by weight or less, and more preferably 30% by weight or less. When the amount of the aqueous medium falls within the aforementioned range, the coating polymer can be uniformly dispersed in the slurry composition.

The slurry composition may further contain an optional component other than the coated active material particles, the binder, the conducting agent, and the aqueous medium, so long as the effects of the present invention are not significantly impaired. As the optional component, one species thereof may be solely used, or two or more species thereof may be used in combination in any ratio. Examples of the optional component may include a reinforcing material, a dispersant, an antioxidant, a thickener, and an electrolyte solution additive having a function of suppressing decomposition of the electrolyte solution.

The reinforcing material for use may be, e.g., any of a variety of inorganic and organic spherical, plate-shaped, or rod-shaped fillers. Use of the reinforcing material allows the positive electrode for the lithium secondary battery according to the present invention to be stiff and flexible, and the cycle property can thereby be further improved. The amount of the reinforcing material with respect to 100 parts by weight of the coated active material particles is usually 0.01 parts by weight or more and preferably 1 part by weight or more and is usually 20 parts by weight or less and preferably 10 parts by weight or less.

Examples of the dispersant may include anionic compounds, cationic compounds, nonionic compounds, and polymer compounds. The dispersant may be selected, e.g., in accordance with the coated active material particles and the conducting agent. Use of the dispersant can improve the stability of the slurry composition. Therefore, the surface smoothness of the positive electrode for the lithium secondary battery according to the present invention can be improved, and its capacity can thereby be increased. The amount of the dispersant with respect to 100 parts by weight of the coated active material particles is preferably 0.01 parts by weight to 10 parts by weight.

Examples of the antioxidant may include phenol compounds, hydroquinone compounds, organophosphorus compounds, sulfur compounds, phenylenediamine compounds, and polymer-type phenol compounds. The polymer-type phenol compound is a polymer having a phenol structure in its molecule, and its weight average molecular weight is preferably 200 or more and more preferably 600 or more and is preferably 1,000 or less and more preferably 700 or less. Use of the antioxidant can improve the stability of the slurry composition, and the battery capacity and cycle property of the lithium secondary battery according to the present invention can be improved. The amount of the antioxidant with respect to 100 parts by weight of the coated active material particles is preferably 0.01 parts by weight or more and more preferably 0.05 parts by weight or more and is preferably 10 parts by weight or less and more preferably 5 parts by weight or less.

Examples of the thickener may include: cellulose-based polymers such as carboxymethyl cellulose, methyl cellulose, and hydroxypropyl cellulose and ammonium salts and alkali metal salts thereof; modified and unmodified poly(meth)acrylic acids and ammonium salts and alkali metal salts thereof; polyvinyl alcohols such as modified and unmodified polyvinyl alcohols, copolymers of acrylic acid or an acrylic acid salt with vinyl alcohol, and copolymers of maleic anhydride, maleic acid, or fumaric acid with vinyl alcohol; polyethylene glycol; polyethylene oxide; polyvinylpyrrolidone; modified polyacrylic acid; oxidized starch; starch phosphate; casein; a variety of modified starches; and hydrides of acrylonitrile-butadiene copolymers. Use of the thickener gives favorable viscosity of the slurry composition, and the particle diameter etc. of the composite particles can thus be adjusted within desirable ranges. The amount of the thickener with respect to 100 parts by weight of the coated active material particles is preferably 0.01 parts by weight to 10 parts by weight.

Examples of the electrolyte solution additive may include vinylene carbonate. Use of the electrolyte solution additive can improve the cycle property and high-temperature property of the lithium secondary battery according to the present invention. The amount of the electrolyte solution additive with respect to 100 parts by weight of the coated active material particles is preferably 0.01 parts by weight to 10 parts by weight.

In addition to the aforementioned components, the slurry composition may further contain, e.g: nanoparticles such as fumed silica and fumed alumina; and surfactants such as alkyl-based surfactants, silicon-based surfactants, fluorine-based surfactants, and metal-based surfactants.

From the viewpoint of application uniformity and the stability of the slurry over the lapse of time, the viscosity of the slurry composition is preferably 10 mPa·s or more and more preferably 100 mPa·s or more and is preferably 100,000 mPa·s or less and more preferably 50,000 mPa·s or less. The viscosity is a value when it is measured using a B-type viscometer at 25°C and a rotation speed of 60 rpm.

The pH of the slurry composition is preferably 7 or more, more preferably 8 or more, and still more preferably 10 or more and is preferably 13.2 or less, more preferably 13 or less, and still more preferably 12.5 or less. When the pH falls within the aforementioned range, the dispersion stability of the slurry composition is improved, and the effects of the present invention are significantly achieved. If the pH is less than 7, the dispersion of the coated active material particles may become unstable, so that aggregate mass may be formed in the slurry composition.

The slurry composition may be obtained by mixing the components of the slurry composition. Examples of the means for mixing may include mixers such as a ball mill, a sand mill, a bead mill, a pigment disperser, a grinder, an ultrasonic disperser, a homogenizer, and a planetary mixer. The mixing is usually performed at a temperature ranging from room temperature to 80°C for 10 minutes to several hours.

[B2-2. Granulation step]

The step of spay-drying the slurry composition to granulate the composition may be performed, e.g., in the same manner as in the spray granulation method for the coated active material particles. More specifically, granulation may be performed by, in the spray granulation method described in (B1-1-5.ii) above, using the aforementioned slurry composition in place of the liquid composition containing the positive electrode active material particles, the coating material, and the aqueous medium.

[B3. Positive electrode for lithium secondary battery and method for producing positive electrode]

The positive electrode for the lithium secondary battery according to the present invention includes a current collector made of aluminum or an aluminum alloy and a positive electrode active material layer formed on the current collector and containing the composite particles for the lithium secondary battery positive electrode according to the present invention.

Usually, the positive electrode active material layer is formed on the surface of the current collector. Since the positive electrode active material layer contains the coated active material particles, it has low tendency to cause corrosion of the current collector. Therefore, in the positive electrode for the lithium secondary battery according to the present invention, a reduction in rate property and cycle property due to corrosion of the current collector is prevented, so that an excellent lithium secondary battery can be achieved.

[B3-1. Current collector]

As the current collector, a current collector made of aluminum or an aluminum alloy is used. In this case, a combination of aluminum and an aluminum alloy may be used, and a combination of different aluminum alloys may also be used. In general, material that has electric conductivity and is electrochemically durable is used for the current collector. Particularly, aluminum and an aluminum alloy have heat resistance and are electrochemically stable. Therefore, they are good current collector materials.

Examples of the aluminum alloy may include alloys of aluminum and at least one element selected from the group consisting of iron, magnesium, zinc, manganese, and silicon.

Although no particular limitation is imposed on the shape of the current collector, a sheet-shaped current collector having a thickness of 0.001 mm to 0.5 mm is preferable.

The current collector may be preliminary subjected to surface roughening treatment for increasing the bonding strength of the positive electrode active material layer. Examples of the surface roughening method may include a mechanical polishing method, an electrolytic polishing method, and a chemical polishing method. In the mechanical polishing method, e.g., a coated abrasive including abrasive particles adhering to cloth or paper, a grindstone, an emery wheel, a wire brush provided with steel wires, etc. is used.

[B3-2. Formation of positive electrode active material layer]

The positive electrode active material layer in the positive electrode for the lithium secondary battery may be formed by compressing the aforementioned composite particles for the lithium secondary battery positive electrode according to the present invention. The compressing method is a method for forming the positive electrode active material layer by applying pressure onto the composite particles for the lithium secondary battery positive electrode according to the present invention to rearrange and deform the composite particles for the positive electrode, to thereby constitute close packing. The compressing method may be performed using a simple facility.

Examples of the compressing method may include: a method including supplying the composite particles for the lithium secondary battery positive electrode to a compressing apparatus using a feeding device such as a screw feeder and forming a positive electrode active material layer on the current collector or a substrate; a method including spaying the composite particles for the lithium secondary battery positive electrode onto the current collector or a substrate, leveling the composite particles for the lithium secondary battery positive electrode with, e.g., a blade to adjust thickness, and then performing forming using a compressing apparatus; and a method including filling a metal mold with the composite particles for the lithium secondary battery positive electrode and then applying pressure onto the metal mold to perform molding. The pressurization may be performed using, e.g., a metal mold press, roll pressing, etc., and roll pressing is particularly preferable from the viewpoint of production efficiency.

As the method for producing the positive electrode for the lithium secondary battery according to the present invention, the method including supplying the composite particles for the lithium secondary battery positive electrode to a roll-type compressing apparatus using a feeding device such as a screw feeder and then forming a positive electrode active material layer on the current collector or a substrate is preferable because of high productivity. In this method, by supplying the current collector or the substrate, which will be described later, to the rolls simultaneously with the supply of the composite particles for the lithium secondary battery positive electrode, the positive electrode active material layer can be directly stacked on the current collector or the substrate, whereby the current collector with the positive electrode active material layer adhering thereto or the substrate with the positive electrode active material layer adhering thereto can be obtained. The temperature of the rolls during forming is usually 25 to 200°C, preferably 70 to 150°C, and more preferably 50 to 120°C. The pressing linear pressure of the rolls during forming is usually 10 to 1,000 kN/m, preferably 200 to 900 kN/m, and particularly preferably 300 to 600 kN/m. When the temperature and pressing linear pressure of the rolls during forming are within the aforementioned ranges, the positive electrode active material layer can be uniformly laminated onto the current collector or the substrate, so that a positive electrode with high strength can be obtained.

In the method for producing the positive electrode for the lithium secondary battery according to the present invention, the positive electrode active material layer may be formed on a substrate but is preferably formed directly on a current collector. When the positive electrode active material layer is formed on the current collector, a positive electrode active material layer that is more uniform and has higher adhesion can be formed. As a result, the internal resistance of the battery can be suppressed, and charge-discharge cycle property can be improved. When the positive electrode active material layer is formed on a substrate, the positive electrode active material layer formed on the substrate is later transferred to the current collector, whereby the positive electrode is formed.

The substrate used in the method for producing the positive electrode for the lithium secondary battery according to the present invention is used for supporting the positive electrode active material layer and laminating the positive electrode active material layer onto the current collector. The surface of the substrate that comes into contact with the positive electrode active material layer may be roughened. As the material for constituting the substrate, any of inorganic materials, organic materials, etc. may be used with no limitation, so long as the positive electrode active material layer can be formed on the substrate. Examples of such a material may include: metal foils such as aluminum foil and copper foil; plastic films; paper; and thermoplastic resin films. A film with a multi-layer structure obtained by laminating, e.g., any of the aforementioned films may also be used. Of these, paper and thermoplastic resin films are preferable from the viewpoint of general versatility and handling ability. Particularly, among the paper and thermoplastic resin films, PET (polyethylene terephthalate) films, polyolefin-based films, PVA (polyvinyl alcohol) films, PVB (polyvinyl butyral films), and PVC (polyvinyl chloride) films are preferable. The substrate in the present invention does not include the current collector used for the positive electrode.

Although no particular limitation is imposed on the thickness of the substrate, the thickness is preferably 10 to 200 μm, more preferably 20 to 150 μm, and particularly preferably 20 to 100 μm.

Preferably, the method for producing the positive electrode for the lithium secondary battery according to the present invention further includes the step of performing post-pressurization to integrate the positive electrode active material layer and the current collector, in order to eliminate unevenness in thickness of the formed positive electrode active material layer and to increase the density of the positive electrode active material layer to thereby obtain a high capacity.

A hot pressing method is generally used as the post-pressurization method. Specific examples of the hot pressing method may include batch hot pressing and continuous hot roll pressing, and the continuous hot roll pressing is preferable because of its ability to increase productivity. In the continuous hot roll pressing, two cylindrical rolls are arranged in parallel at a higher and lower position with a small gap therebetween and rotated in opposite directions, and the positive electrode active material layer and the current collector are introduced between the rolls to press them. The temperature of hot pressing is usually 25 to 200°C, preferably 70 to 150°C, and more preferably 50 to 120°C. The linear pressure during hot pressing is usually 10 to 1,000 kN/m, preferably 200 to 900 kN/m, and particularly preferably 300 to 600 kN/m. When the temperature and linear pressure during hot pressing are within the aforementioned ranges, the positive electrode active material layer can be uniformly laminated onto the current collector, so that a positive electrode with high strength can be obtained.

When the positive electrode active material layer is formed on the substrate, it is preferable to stack the positive electrode active material layer on the current collector, perform hot-pressing to laminate and integrate the positive electrode active material layer and the current collector, and then remove the substrate. No particular limitation is imposed on the method for removing the substrate from the positive electrode active material layer. For example, after the positive electrode active material layer is laminated onto the current collector, winding of the current collector with the positive electrode active material layer laminated thereonto, and winding of the substrate are performed on different rolls. In this manner, the substrate can be easily removed. The positive electrode active material layer and the current collector are thereby integrated.

Further, an electrode with electrode active material layers formed on both surfaces of the current collector may also be produced by, after a positive electrode active material layer is formed on one surface of the current collector, laminating a substrate having a positive electrode active material layer formed thereon onto the other surface by hot pressing.

[B3-3. Properties of positive electrode]

The thickness of the positive electrode for the lithium secondary battery according to the present invention, as the thickness of the positive electrode active material layer, is usually 5 μm or more and preferably 10 μm or more and is usually 150 μm or less and preferably 100 μm or less. When the thickness of the positive electrode for the lithium secondary battery according to the present invention falls within the aforementioned range, both the load property and the energy density can be made favorable.

In the positive electrode active material layer in the positive electrode for the lithium secondary battery according to the present invention, it is preferable that the composite particles for the lithium secondary battery positive electrode are mutually bonded. More specifically, in the positive electrode active material layer, it is preferable that the composite particles for the lithium secondary battery positive electrode maintain their structure, that the coated active material particles in each of the composite particles are bound via the binder, and that each of the coated active material particles has a structure in which the positive electrode active material particles are coated with the coating material (including the coating polymer and the conducting agent). With such a structure, migration of materials in the positive electrode active material layer can be eliminated to realize a positive electrode in which the respective components are uniformly dispersed, so that the aforementioned various properties of the battery can be improved. The dispersion uniformity of the respective components may be evaluated by, e.g., observing a cross section using an electron probe micro-analyzer (EPMA) to quantify the degree of uneven distribution of carbon content.

[B4. Lithium secondary battery]

The lithium secondary battery according to the present invention includes the positive electrode for the lithium secondary battery according to the present invention. Preferably, the lithium secondary battery according to the present invention may include the positive electrode for the secondary battery according to the present invention, a negative electrode, a separator, and an electrolyte. Usually, a lithium secondary battery has high long-term cycle property and high output property. Particularly, in the positive electrode for the lithium secondary battery according to the present invention, corrosion of the current collector is suppressed. Therefore, the lithium secondary battery according to the present invention has high rate property and high cycle property and usually also has a high initial capacity. In the positive electrode for the lithium secondary battery according to the present invention, since the surface of the particles of the positive electrode active material is coated with the coating polymer, corrosion of the current collector over the lapse of time can also be suppressed. This also contributes to improvement in the cycle property of the lithium secondary battery according to the present invention.

[B4-1. Negative electrode]

As the negative electrode, any of a variety of negative electrodes that are usually used for lithium ion secondary batteries may be used. For example, a thin plate of metal lithium may be used. For example, an electrode including a current collector and a negative electrode active material layer formed on the current collector may also be used.

Regarding the second aspect of the present invention, examples of the negative electrode for the lithium secondary battery, example of the production method for the negative electrode, and examples of particularly preferable ones thereof may include those exemplified in the description of the first aspect of the present invention.

[B4-2. Electrolyte]

Regarding the second aspect of the present invention, examples of the electrolyte (electrolyte solution or solid electrolyte) in the lithium secondary battery, examples of the production method for the electrolyte, and examples of particularly preferable ones thereof may include those exemplified in the description of the first aspect of the present invention.

[B4-3. Separator]

Regarding the second aspect of the present invention, examples of the separator for the lithium secondary battery, and examples of particularly preferable ones thereof may include those exemplified in the description of the first aspect of the present invention.

[B4-4. Method for producing lithium secondary battery]

The lithium secondary battery according to the present invention may be produced by, e.g., stacking the aforementioned positive electrode for the lithium secondary battery according to the present invention and the negative electrode via the separator; placing the stacked product in a battery container after the product is wound or folded as needed in conformity with the battery shape; pouring the electrolyte solution into the battery container; and sealing the battery container. If necessary, an overcurrent protective element such as a fuse or a PTC element, an expanded metal, a lead plate, etc. may be provide to prevent an increase in the pressure inside the lithium secondary battery and the occurrence of overcharging/overdischarging etc. The shape of the lithium secondary battery may be any of a coin type, a button type, a sheet type, a cylinder type, a rectangular shape, an oblate type, etc.

[Examples]

The present invention will be specifically described by way of Examples. However, the present invention is not limited to the following Examples and may be implemented with any modifications within the scope of the claims and equivalents thereto.

In the following description, "%" and "part" representing an amount are based on weight, unless otherwise specified. The operations described in the following were performed in the environment of room temperature and normal pressure, unless otherwise specified.

[Evaluation methods]

In the following Examples 1-1 to 1-23 and Comparative Examples 1-1 and 1-2, properties were evaluated as follows.

[Method for measuring thickness of layer of coating polymer]

Coated active material particles were dried, and the weight of the coating polymer was measured. The measured weight of the coating polymer was divided by the specific surface area of the particles of the positive electrode active material that had been measured in advance (0.8 $m^2/g$) to calculate the weight of the coating polymer per unit surface area. The weight of the coating polymer per unit surface area was divided by the density of the coating polymer to calculate the thickness of the layer of the coating polymer.

[Method for measuring covering ratio with layer of coating polymer]

Coated active material particles were dispersed in an epoxy resin, and the epoxy resin was cured. Then the epoxy resin was cooled to a temperature of -80°C and cut using a microtome to produce a thin piece. Vapor of an aqueous ruthenium tetroxide solution of a concentration of 0.5% by weight was sprayed onto the thin piece for 5 minutes to stain the layer of the coating polymer, and the section was observed under a TEM (transmission electron microscope). The observation was performed at a magnification of 2,000 times to 6,000 times. The magnification was adjusted such that cross sections of 5 to 20 coated active material particles were observable in an area of 28 μm × 35 μm. Then 100 particles were selected from them, and their coated states were observed. In this operation, the observed images were visually checked. A coated active material particle in which 80% or more of its cross-sectional length was coated was ranked A, and a coated active material particle in which 50% to 79% of the cross-sectional length was coated was ranked B. The covering ratio was determined as:

$$\text{covering ratio (\%)} = \text{(the number of A ranked particles)} + 0.5 \times \text{(the number of B ranked particles)}$$

[Method for measuring acid value of coating polymer]

20 g of N-methyl-2-pyrrolidone (manufactured be Mitsubishi Chemical Corporation) was added to 2 g of a water dispersion of a coating polymer to dissolve the coating polymer, whereby a sample solution was prepared. Neutralization titration with 0.1M KOH was performed on the sample solution. The amount of acid per unit weight of the coating polymer was determined from the difference between the amount of KOH consumed by the acid present in the coating polymer and the amount of KOH consumed by a blank, and the amount was used as the acid value (mg KOH). An automatic titration apparatus COM-1700 (manufactured by Hiranuma Kagaku Corporation) was used for titration.

[Method for evaluating swellability of coating polymer with electrolyte solution]

An electrolyte solution was produced by dissolving $LiPF_6$ at a concentration of 1 mole/litter in a solvent mixture prepared by mixing ethylene carbonate (EC) and diethyl carbonate (DEC) at EC:DEC = 1:2 (volume ratio at 20°C). Then 1.0 g of the coating polymer and 100 mL of the aforementioned electrolyte solution were placed in a Soxhlet extractor with a cylindrical paper filter (No. 86R, manufactured by Toyo Roshi Kaisha, Ltd.) placed therein, and the mixture was refluxed under normal pressure for 6 hours to obtain an extract. The solvent was evaporated from the remaining extract, and the solids were vacuum-dried at a temperature of 50°C for 1 hour and then weighed. The weighed value was divided by the firstly weighed value of the coating polymer (1.0 g) to calculate a gel ratio (electrolyte solution Soxhlet extracted residual gel ratio). Higher value of this gel ratio is indicative of smaller tendency of elusion of the coating polymer into the electrolyte solution, and of better swellability.

[Method for evaluating corrosion suppressing effect]

The positive electrode slurry composition obtained in Examples and Comparative Examples was applied onto the surface of a 20 μm-thick aluminum foil so that dry thickness became about 70 μm and dried at 50°C for 20 minutes. Then the number of faulty coating portions having a diameter of 0.5 mm or more in a 10 cm × 10 cm region on the surface of the aluminum foil coated with the positive electrode slurry composition was visually evaluated. The evaluation criteria are as follows.

A: No faulty coating, and the region was smooth.
B: One or more faulty coating portions.
C: Five or more faulty coating portions.
D: Ten or more faulty coating portions.

[Method for evaluating initial capacity of battery]

The secondary battery obtained in Examples and Comparative Examples was charged to 4.3 V using a 0.1 C constant current method and then discharged to 3.0 V at 0.1 C to determine a 0.1 C discharge capacity. The capacity of the positive electrode per unit weight was calculated from the determined 0.1 C discharge capacity using the area of the positive electrode, and this value was used as an initial discharge capacity. Higher value is indicative of better initial capacity. The entire measurement of the initial capacity was performed in an environment of a temperature of 25°C. The specific evaluation criteria are as follows.

A: 170 mAh/g or higher.
B: Less than 170 mAh/g and 150 mAh/g or higher.
C: Less than 150 mAh/g and 130 mAh/g or higher.
D: Less than 130 mAh/g and 100 mAh/g or higher.
E: Less than 100 mAh/g.

[Method for evaluating rate property of battery]

The secondary battery obtained in Examples and Comparative Examples was charged to 4.3 V using a 0.1 C constant current method and then discharged to 3.0 V at 0.1 C to determine a 0.1 C discharge capacity. Then the secondary battery was charged to 4.3 V at 0.1 C and then discharged to 3.0 V at 2 C to determine a 2 C discharge capacity. This measurement was performed on 10 secondary battery cells, and the averages of the measurement values were used as a 0.1 C discharge capacity "a" and a 2 C discharge capacity "b". A capacity retention ratio represented by the ratio of the 2 C discharge capacity "b" relative to the 0.1 C discharge capacity "a" ((b/a)×100, unit:%) was determined, and this value was used as the evaluation criteria for the rate property. Higher value is indicative of higher rate property. The entire measurement of the rate property was performed in an environment of a temperature of 25°C. The evaluation criteria are as follows.

A: 95% or more.
B: Less than 95% and 85% or more.
C: Less than 85% and 75% or more.
D: Less than 75% and 60% or more.
E: Less than 60%.

[Method for evaluating high-temperature cycle property of battery]

The secondary battery obtained in Examples and Comparative Examples was charged to 4.3 V using a 0.1 C constant current method and then discharged to 3.0 V at 0.1 C, and this procedure was repeated 100 times. The capacity retention ratio of the capacity at the 100th charging-discharging relative to the capacity at the first charging-discharging (initial capacity) was determined, and this value was used as the evaluation criterion for the high-temperature cycle property. Higher value is indicative of higher high-temperature cycle property. The entire measurement of the high-temperature cycle property was performed at an environment of a temperature of 60°C. The evaluation criteria are as follows.

A: 95% or more
B: Less than 95% and 85% or more.
C: Less than 85% and 75% or more.
D: Less than 75% and 60% or more.
E: Less than 60%.

[Example 1-1]

(A) Production of coating polymer

A SUS-made separable flask of 1 L capacity equipped with a stirrer, a reflux cooling tube, and a thermometer was prepared. The separable flask was pre-charged with 300 parts of desalted water, and the desalted water was sufficiently stirred. Then the temperature of the desalted water was adjusted to 70°C, and 0.2 parts of an aqueous potassium persulfate solution was added thereto.
A separate 5 MPa pressure resistant vessel equipped with a stirrer was charged with 50 parts of ion exchanged water, 0.4 parts of sodium hydrogencarbonate, 0.115 parts of sodium dodecyl diphenyl ether sulfonate of a concentration of 30% as an emulsifier, 20 parts of methacrylic acid as an ethylene-based unsaturated carboxylic acid monomer that is a vinyl monomer having an acidic functional group, 25 parts of ethyl acrylate and 30 parts of butyl acrylate as (meth)acrylic acid ester monomers, 25 parts of acrylonitrile as an $\alpha,\beta$-unsaturated nitrile monomer, and 0.2 parts of allyl methacrylate as a monomer having a cross-linking ability. The mixture was sufficiently stirred to prepare an emulsion.
The obtained emulsion was continuously added dropwise to the aforementioned separable flask over 4 hours. When the polymerization conversion rate reached 90%, the reaction temperature was adjusted to 80°C, and the reaction was further continued for 2 hours. Then the mixture was cooled to terminate the reaction, whereby a water dispersion (A) of the coating polymer was obtained. The polymerization conversion rate was 99%.

(B) Production of binder

A polymerization tank A was charged with 130 parts of ion exchanged water and further charged with 0.8 parts of ammonium persulfate as a polymerization initiator and 10 parts of ion exchanged water, and the mixture was heated to 80°C.
Then a polymerization tank B was charged with 78 parts of 2-ethylhexyl acrylate as a (meth)acrylic acid ester monomer, 20 parts of acrylonitrile as an $\alpha,\beta$-unsaturated nitrile monomer, 2.0 parts of methacrylic acid as an ethylene-based unsaturated carboxylic acid monomer that is a vinyl monomer having an acidic functional group,18 parts of polyvinyl alcohol having a hydrophobic group at its terminal and as a surfactant, and 377 parts of ion exchanged water. The mixture was stirred to prepare an emulsion.
The emulsion in the polymerization tank B was successively added to the polymerization tank A over about 240 minutes, and the mixture was stirred for about 30 minutes. When the amount consumed of the monomers reached 95%, the mixture was cooled to terminate the reaction, whereby a water dispersion (B) of the binder was obtained. The pH of the obtained water dispersion (B) of the binder was 2.5, the glass transition temperature of the binder was -32°C, and the volume average particle diameter of the binder was 150 nm.

(C) Production of coated active material particles

1 Part of calcium acetate as a coagulant was added to 100 parts of positive electrode active material particles composed of $LiNiO_2$ having an average particle diameter of 10.5 $\mu$m, and then 1,000 parts of water was added to prepare a suspension. Then, the suspension was stirred at a temperature of 30°C for 3 hours for effecting adsorption of the calcium acetate on the surface of the particles of the positive electrode active material. The resultant suspension was filtrated, and the residue was immersed in the water dispersion (A) of the coating polymer for 10 seconds. By this operation, the coating polymer was solidified on the surface of the particles of the positive electrode active material, and the surface of the particles of the positive electrode active material was coated with the coating polymer. Then the coated particles of the positive electrode active material were immersed in a 1% water dispersion of silica fine particles having an average particle diameter of 40 nm (the silica fine particles were AEROSIL OX50, manufactured by Toshin Chemicals Co., Ltd.) and then filtrated. Then the product was vacuum-dried at 25°C to obtain coated active material particles (C) including the particles of the positive electrode active material and the layer of the coating polymer formed on the surface of the particles of the positive electrode active material. The average particle diameter of the obtained coated active material particles (C) was 11.0 $\mu$m.

(D) Production of positive electrode slurry composition and positive electrode

100 Parts of the coated active material particles (C), 2.0 parts of acetylene black (HS-100: DENKI KAGAKU KOGYO KABUSHIKI KAISHA) as a conducting material, 2.5 parts of the water dispersion (B) of the binder (solid concentration: 40%), 40 parts of an aqueous carboxymethyl cellulose solution (solid concentration: 2%) having a degree of etherification of 0.8 and as a thickener, and a proper amount of water were stirred in a planetary mixer to prepare a positive electrode slurry composition.

The positive electrode slurry composition was applied onto the surface of a 20 μm-thick aluminum foil as a current collector using a comma coater so that the thickness after drying would become about 70 μm. The applied positive electrode slurry composition was dried at 60°C for 20 minutes and then subjected to heat treatment at 150°C for 2 hours to form a positive electrode active material layer, whereby a raw material electrode sheet was obtained. The raw material electrode sheet was rolled using a roll press to obtain a positive electrode plate composed of the aluminum foil and the electrode active material layer and having a density of 2.1 g/$cm^3$ with the thickness being controlled to 65 μm.

(E) Production of secondary battery

The positive electrode plate was cut into a disk shape with a diameter of 16 mm to produce a positive electrode. A disk-shaped porous film separator made of polypropylene and having a diameter of 18 mm and a thickness of 25 μm, metal lithium to be used as a negative electrode, and an expanded metal were stacked in that order on the positive electrode active material layer side of the positive electrode. The stack was stored in a stainless steel-made coin-type outer container (diameter: 20 mm, height: 1.8 mm, thickness of stainless steel: 0.25 mm) equipped with a polypropylene-made packing. An electrolyte solution was poured into the outer container such that no air bubbles remained, and a stainless steel cap having a thickness of 0.2 mm was put on and secured to the outer container via the polypropylene-made packing to seal the battery can, whereby a lithium ion coin battery having a diameter of 20 mm and a thickness of about 2 mm was produced.

The electrolyte solution used was a solution prepared by dissolving $LiPF_6$ at a concentration of 1 mole/L in a solvent mixture prepared by mixing ethylene carbonate (EC) and diethyl carbonate (DEC) at EC:DEC = 1:2 (volume ratio at 20°C). The solubility parameter (SP value) of the electrolyte solution was 10.6 $(cal/cm^3)^{1/2}$, its relative dielectric constant was 29.0, and its viscosity was 1.1 cp.

With this battery, initial capacity, output property, and high-temperature cycle property were evaluated. The results are shown in Table 1.

[Example 1-2]

A positive electrode slurry composition, a positive electrode, and a secondary battery were produced and evaluated in the same manner as in Example 1-1 except that, in the section "(A) Production of coating polymer", the amount of methacrylic acid was changed to 30 parts, the amount of ethyl acrylate was changed to 10 parts, the amount of butyl acrylate was changed to 40 parts, and the amount of acrylonitrile was changed to 20 parts. The results are shown in Table 1. The average particle diameter of the obtained coated active material particles was 11.0 μm.

[Example 1-3]

A positive electrode slurry composition, a positive electrode, and a secondary battery were produced and evaluated in the same manner as in Example 1-1 except that, in the section "(A) Production of coating polymer", the amount of methacrylic acid was changed to 10 parts, the amount of ethyl acrylate was changed to 35 parts, and the amount of butyl acrylate was changed to 30 parts. The results are shown in Table 1. The average particle diameter of the obtained coated active material particles was 11.0 μm.

[Example 1-4]

A positive electrode slurry composition, a positive electrode, and a secondary battery were produced and evaluated in the same manner as in Example 1-1 except that, in the section "(A) Production of coating polymer", acrylic acid was used in place of methacrylic acid. The results are shown in Table 1. The average particle diameter of the obtained coated active material particles was 11.0 μm.

[Example 1-5]

A positive electrode slurry composition, a positive electrode, and a secondary battery were produced and evaluated in the same manner as in Example 1-1 except that, in the section "(A) Production of coating polymer", 2-acrylamide-2-methylpropanesulfonic acid was used in place of methacrylic acid. The results are shown in Table 1. The average particle diameter of the obtained coated active material particles was 11.0 μm.

[Example 1-6]

A positive electrode slurry composition, a positive electrode, and a secondary battery were produced and evaluated in the same manner as in Example 1-1 except that, in the section "(A) Production of coating polymer", the amount of methacrylic acid was changed to 1 part, the amount of ethyl acrylate was changed to 29 parts, and the amount of butyl acrylate was changed to 45 parts. The results are shown in Table 2. The average particle diameter of the obtained coated active material particles was 11.0 μm.

[Example 1-7]

A positive electrode slurry composition, a positive electrode, and a secondary battery were produced and evaluated in the same manner as in Example 1-1 except that the amount of desalted water used when the coating polymer was produced was changed to 400 parts. The results are shown in Table 2. The average particle diameter of the obtained coated active material particles was 10.7 μm.

[Example 1-8]

A positive electrode slurry composition, a positive electrode, and a secondary battery were produced and evaluated in the same manner as in Example 1-1 except that the amount of desalted water used when the coating polymer was produced was changed to 350 parts. The results are shown in Table 2. The average particle diameter of the obtained coated active material particles was 10.8 μm.

[Example 1-9]

A positive electrode slurry composition, a positive electrode, and a secondary battery were produced and evaluated in the same manner as in Example 1-1 except that the amount of desalted water used when the coating polymer was produced was changed to 250 parts. The results are shown in Table 2. The average particle diameter of the obtained coated active material particles was 11.3 μm.

[Example 1-10]

A positive electrode slurry composition, a positive electrode, and a secondary battery were produced and evaluated in the same manner as in Example 1-1 except that the amount of desalted water used when the coating polymer was produced was changed to 100 parts. The results are shown in Table 2. The average particle diameter of the obtained coated active material particles was 11.5 μm.

[Example 1-11]

A positive electrode slurry composition, a positive electrode, and a secondary battery were produced and evaluated in the same manner as in Example 1-1 except that, in place of adding acetylene black to the coated active material particles upon production of the positive electrode slurry composition, acetylene black was added to the positive electrode active material upon production of the coated active material particles. The results are shown in Table 3. The average particle diameter of the obtained coated active material particles was 11.0 μm.

[Example 1-12]

A positive electrode slurry composition, a positive electrode, and a secondary battery were produced and evaluated in the same manner as in Example 1-1 except that, in the section "(A) Production of coating polymer", ethylene phosphate methacrylate was used in place of methacrylic acid. The results are shown in Table 3. The average particle diameter of the obtained coated active material particles was 11.0 μm.

[Example 1-13]

A positive electrode slurry composition, a positive electrode, and a secondary battery were produced and evaluated in the same manner as in Example 1-1 except that, in the section "(A) Production of coating polymer", the amount of allyl methacrylate was changed to 0.05 parts. The results are shown in Table 3. The average particle diameter of the obtained coated active material particles was 11.0 μm.

[Example 1-14]

A positive electrode slurry composition, a positive electrode, and a secondary battery were produced and evaluated in the same manner as in Example 1-1 except that, in the section "(A) Production of coating polymer", no methacrylic acid was used and the amount of acrylonitrile was changed to 45 parts. The results are shown in Table 3. The average particle diameter of the obtained coated active material particles was 11.0 μm.

[Example 1-15]

A positive electrode slurry composition, a positive electrode, and a secondary battery were produced and evaluated in the same manner as in Example 1-1 except that, in the section "(A) Production of coating polymer", the amount of methacrylic acid was changed to 50 parts, the amount of ethyl acrylate was changed to 10 parts, the amount of butyl acrylate was changed to 25 parts, and the amount of acrylonitrile was changed to 15 parts and that the amount of desalted water used when the coating polymer was produced was changed to 350 parts. The results are shown in Table 3. The average particle diameter of the obtained coated active material particles was 11.0 μm.

[Example 1-16]

A positive electrode slurry composition, a positive electrode, and a secondary battery were produced and evaluated in the same manner as in Example 1-1 except that, in the section "(A) Production of coating polymer", the amount of methacrylic acid was changed to 50 parts, the amount of ethyl acrylate was changed to 10 parts, the amount of butyl acrylate was changed to 25 parts, the amount of acrylonitrile was changed to 15 parts, and no allyl methacrylate was used. The results are shown in Table 4. The average particle diameter of the obtained coated active material particles was 11.0 μm.

[Example 1-17]

A positive electrode slurry composition, a positive electrode, and a secondary battery were produced and evaluated in the same manner as in Example 1-1 except that, in the section "(A) Production of coating polymer", no allyl methacrylate was used. The results are shown in Table 4. The average particle diameter of the obtained coated active material particles was 11.0 μm.

[Example 1-18]

A positive electrode slurry composition, a positive electrode, and a secondary battery were produced and evaluated in the same manner as in Example 1-1 except that, in the section "(A) Production of coating polymer", 2.5 parts of ethylene glycol dimethacrylate was used in place of allyl methacrylate. The results are shown in Table 4. The average particle diameter of the obtained coated active material particles was 11..0 μm.

[Example 1-19]

A positive electrode slurry composition, a positive electrode, and a secondary battery were produced and evaluated in the same manner as in Example 1-1 except that, in the section "(A) Production of coating polymer", 2.5 parts of ethylene glycol dimethacrylate was used in place of allyl methacrylate and that, in the section "(C) Production of coated active material particles", aluminum acetate was used in place of calcium acetate. The results are shown in Table 4. The average particle diameter of the obtained coated active material particles was 11.0 μm.

[Example 1-20]

A positive electrode slurry composition, a positive electrode, and a secondary battery were produced and evaluated in the same manner as in Example 1-1 except that, in the section "(C) Production of coated active material particles", the method for producing the coated active material particles (C) was changed to the following pH precipitation method. The results are shown in Table 5.

pH precipitation method

100 Parts of positive electrode active material particles composed of $LiNiO_2$ and having an average particle diameter of 10.5 μm, 10 parts of the water dispersion (A) of the coating polymer, and 100 parts of water were mixed to prepare a suspension. Sulfuric acid was added dropwise to the suspension to adjust the pH of the suspension to 2. The coating polymer was thereby solidified on the surface of the particles of the positive electrode active material, and the surface of the particles of the positive electrode active material was coated with the coating polymer. The coated particles of the positive electrode active material were immersed in a 1% water dispersion of silica fine particles with an average particle diameter of 40 nm and then filtrated. Then the product was vacuum-dried at 25°C to obtain coated active material particles (C) as particles including the particles of the positive electrode active material and the layer of the coating polymer formed on the surface of the particles of the positive electrode active material. The average particle diameter of the obtained coated active material particles was 11.0 μm.

[Example 1-21]

A positive electrode slurry composition, a positive electrode, and a secondary battery were produced and evaluated in the same manner as in Example 1-20 except that, in the section "(C) Production of coated active material particles", acetic acid was used in place of sulfuric acid to adjust the pH to 5 and that, in the section "(D) Production of positive electrode slurry composition and positive electrode", acetylene black (HS-101: DENKI KAGAKU KOGYO KABUSHIKI KAISHA) was used in place of acetylene black (HS-100: DENKI KAGAKU KOGYO KABUSHIKI KAISHA). The results are shown in Table 5. The average particle diameter of the obtained coated active material particles was 11.0 μm.

[Example 1-22]

A positive electrode slurry composition, a positive electrode, and a secondary battery were produced and evaluated in the same manner as in Example 1-1 except that, in the section "(C) Production of coated active material particles", the method for producing the coated active material particles (C) was changed to the following spray granulation method. The results are shown in Table 5. The average particle diameter of the obtained coated active material particles was 11.0 μm.

Spray granulation method

100 Parts of positive electrode active material particles composed of $LiNiO_2$ and having an average particle diameter of 10.5 μm, 2 parts, in terms of solid content, of the water dispersion (A) of the coating polymer in which the concentration of the coating polymer was adjusted to 28% with water, and 338.7 parts of ion exchanged water were mixed. The mixture was stirred in a disperser (TK homomixer, manufactured by PRIMIX Corporation) to obtain a slurry (active material slurry) with a solid concentration of 20%. This slurry was granulated by spray drying using a spray dryer (OC-16, manufactured by OHKAWARA KAKOHKI Co., Ltd.) under the conditions of a rotation speed of a rotating disk-type atomizer (diameter: 65 mm) of 25,000 rpm, a hot-air temperature of 150°C, and a temperature of a particle collection outlet port of 90°C to thereby obtain coated active material particles (C). The average particle diameter of the obtained coated active material particles was 11.0 μm.

[Example 1-23]

A positive electrode slurry composition, a positive electrode, and a secondary battery were produced and evaluated in the same manner as in Example 1-1 except that, in the section "(C) Production of coated active material particles", the method for producing the coated active material particles (C) was changed to the following fluidizing granulation method. The results are shown in Table 5. The average particle diameter of the obtained coated active material particles was 11.0 μm.

Fluidizing granulation method

100 Parts of positive electrode active material particles composed of $LiNiO_2$ and having an average particle diameter of 10.5 μm were prepared, and the prepared particles of the positive electrode active material were fluidized using hot air. The water dispersion (A) of the coating polymer in which the concentration of the coating polymer was adjusted to 28% with water was sprayed in an amount of 2 parts in terms of solid content onto the particles of the positive electrode active material in a fluidized state and was then dried. The spraying was performed using a spray dryer (OC-16, manufactured by OHKAWARA KAKOHKI Co., Ltd.) under the conditions of a rotation speed of a rotating disk-type atomizer (diameter: 65 mm) of 25,000 rpm, a hot-air temperature of 150°C, and a temperature of a particle collection outlet port of 90°C. Coated active material particles (C) were thereby obtained. The average particle diameter of the obtained coated active material particles was 11.0 μm.

[Comparative Example 1-1]

A positive electrode slurry composition, a positive electrode, and a secondary battery were produced and evaluated in the same manner as in Example 1-1 except that positive electrode active material particles not coated with the coating polymer were used in place of the coated active material particles (C). The results are shown in Table 6.

[Comparative Example 1-2]

A positive electrode slurry composition, a positive electrode, and a secondary battery were produced and evaluated in the same manner as in Example 1-1 except that, in the section "(A) Production of coating polymer", 100 parts of lithium acrylate was used in place of methacrylic acid and no ethyl acrylate, no butyl acrylate, no acrylonitrile, and no allyl methacrylate were used. The results are shown in Table 6. The average particle diameter of the obtained coated active material particles was 10.8 μm.

[Table 1]

[Table 1. Results of Examples 1-1 to 1-5]

| | | | Ex. 1-1 | Ex. 1-2 | Ex. 1-3 | Ex. 1-4 | Ex. 1-5 |
|---|---|---|---|---|---|---|---|
| Coating polymer | (Meth)acrylic acid ester monomer | Type | Ethyl acrylate/ butyl acrylate | Ethyl acrylate/ butyl acrylate | Ethyl acrylate/ butyl acrylate | Ethyl acrylate/ butyl acrylate | Ethyl acrylate/ butyl acrylate |
| | | Amount (parts) | 55 | 50 | 65 | 55 | 55 |
| | α,β-unsaturated nitrile monomer | Type | Acrylonitrile | Acrylonitrile | Acrylonitrile | Acrylonitrile | Acrylonitrile |
| | | Amount (parts) | 25 | 20 | 25 | 25 | 25 |
| | Vinyl monomer having an acidic functional group | Type | Methacrylic acid | Methacrylic acid | Methacrylic acid | Acrylic acid | AMPS |
| | | Amount (parts) | 20 | 30 | 10 | 20 | 20 |
| | Cross-linking agent | Type | Allyl methacrylate | Allyl methacrylate | Allyl methacrylate | Allyl methacrylate | Allyl methacrylate |
| | | Amount (parts) | 0.2 | 0.2 | 0.2 | 0.2 | 0.2 |
| | Acid value of coating polymer (mgKOH/g) | | 20 | 25 | 10 | 20 | 20 |
| | Tg of coating polymer (°C) | | 34.5 | 47.7 | 11.0 | 5.7 | 45.0 |
| | SP value of coating polymer $(cal/cm^3)^{1/2}$ | | 10.2 | 10.4 | 9.9 | 9.9 | 10.2 |
| | Gel ratio of coating polymer | | 96.0 | 96.0 | 96.0 | 96.0 | 96.0 |
| Coating polymer layer | Coating method | | Coagulant precipitation method | Coagulant precipitation method | Coagulant precipitation method | Coagulant precipitation method | Coagulant precipitation method |
| | Coagulant | | Calcium acetate | Calcium acetate | Calcium acetate | Calcium acetate | Calcium acetate |
| | pH at coagulation | | - | - | - | - | - |
| | Fine particles | | Aerosil OX50 | Aerosil OX50 | Aerosil OX50 | Aerosil OX50 | Aerosil OX50 |
| | Thickness | | 0.5μm | 0.5μm | 0.5μm | 0.5μm | 0.5μm |
| | Covering ratio(%) | | 80 | 80 | 80 | 80 | 80 |
| Corrosion suppression effect | | | A | A | B | B | B |
| Rate property | | | A | A | B | C | C |
| Initial capacity | | | A | B | A | B | C |
| High temperature cycle property | | | A | B | B | B | B |

[Table 2]

[Table 2. Results of Examples 1-6 to 1-10]

| | | | Ex. 1-6 | Ex. 1-7 | Ex. 1-8 | Ex. 1-9 | Ex. 1-10 |
|---|---|---|---|---|---|---|---|
| Coating polymer | (Meth)acrylic acid ester monomer | Type | Ethyl acrylate/ butyl acrylate | Ethyl acrylate/ butyl acrylate | Ethyl acrylate/ butyl acrylate | Ethyl acrylate/ butyl acrylate | Ethyl acrylate/ butyl acrylate |
| | | Amount (parts) | 74 | 55 | 55 | 55 | 55 |
| | α,β-unsaturated nitrile monomer | Type | Acrylonitrile | Acrylonitrile | Acrylonitrile | Acrylonitrile | Acrylonitrile |
| | | Amount (parts) | 25 | 25 | 25 | 25 | 25 |
| | Vinyl monomer having an acidic functional group | Type | Methacrylic acid | Methacrylic acid | Methacrylic acid | Methacrylic acid | Methacrylic acid |
| | | Amount (parts) | 1 | 20 | 20 | 20 | 20 |
| | Cross-linking agent | Type | Allyl methacrylate | Allyl methacrylate | Allyl methacrylate | Allyl methacrylate | Allyl methacrylate |
| | | Amount (parts) | 0.2 | 0.2 | 0.2 | 0.2 | 0.2 |
| | Acid value of coating polymer (mgKOH/g) | | 1 | 7 | 10 | 40 | 60 |
| | Tg of coating polymer (°C) | | -13.4 | 34.5 | 34.5 | 34.5 | 34.5 |
| | SP value of coating polymer $(cal/cm^3)^{1/2}$ | | 10.0 | 10.2 | 10.2 | 10.2 | 10.2 |
| | Gel ratio of coating polymer | | 96.0 | 96.0 | 96.0 | 96.0 | 96.0 |
| Coating polymer layer | Coating method | | Coagulant precipitation method | Coagulant precipitation method | Coagulant precipitation method | Coagulant precipitation method | Coagulant precipitation method |
| | Coagulant | | Calcium acetate | Calcium acetate | Calcium acetate | Calcium acetate | Calcium acetate |
| | pH at coagulation | | - | - | - | - | - |
| | Fine particles | | Aerosil OX50 | Aerosil OX50 | Aerosil OX50 | Aerosil OX50 | Aerosil OX50 |
| | Thickness | | 0.5μm | 0.2μm | 0.3μm | 0.8μm | 1μm |
| | Covering ratio(%) | | 80 | 75 | 70 | 85 | 95 |
| Corrosion suppression effect | | | C | C | B | A | A |
| Rate property | | | B | B | D | B | C |
| Initial capacity | | | B | D | B | B | C |
| High temperature cycle property | | | D | C | B | C | D |

[Table 3]

[Table 3. Results of Examples 1-11 to 1-15]

| | | | Ex. 1-11 | Ex. 1-12 | Ex. 1-13 | Ex. 1-14 | Ex. 1-15 |
|---|---|---|---|---|---|---|---|
| Coating polymer | (Meth)acrylic acid ester monomer | Type | Ethyl acrylate/ butyl acrylate | Ethyl acrylate/ butyl acrylate | Ethyl acrylate/ butyl acrylate | Ethyl acrylate/ butyl acrylate | Ethyl acrylate/ butyl acrylate |
| | | Amount (parts) | 55 | 55 | 55 | 55 | 35 |
| | α,β-unsaturated nitrile monomer | Type | Acrylonitrile | Acrylonitrile | Acrylonitrile | Acrylonitrile | Acrylonitrile |
| | | Amount (parts) | 25 | 25 | 25 | 45 | 15 |
| | Vinyl monomer having an acidic functional group | Type | Methacrylic acid | Ethylene phosphate methacrylate | Methacrylic acid | - | Methacrylic acid |
| | | Amount (parts) | 20 | 20 | 20 | 0 | 50 |
| | Cross-linking agent | Type | Allyl methacrylate | Allyl methacrylate | Allyl methacrylate | Allyl methacrylate | Allyl methacrylate |
| | | Amount (parts) | 0.2 | 0.2 | 0.05 | 0.2 | 0.2 |
| | Acid value of coating polymer (mgKOH/g) | | 20 | 20 | 20 | 0 | 50 |
| | Tg of coating polymer (°C) | | 34.5 | 25.0 | 34.5 | 18.2 | 116.9 |
| | SP value of coating polymer (cal/cm$^3$)$^{1/2}$ | | 10.2 | 9.9 | 10.2 | 9.4 | 11.3 |
| | Gel ratio of coating polymer | | 96.0 | 96.0 | 50.0 | 96.0 | 96.0 |
| Coating polymer layer | Coating method | | Coagulant precipitation method | Coagulant precipitation method | Coagulant precipitation method | Coagulant precipitation method | Coagulant precipitation method |
| | Coagulant | | Calcium acetate | Calcium acetate | Calcium acetate | Calcium acetate | Calcium acetate |
| | pH at coagulation | | - | - | - | - | - |
| | Fine particles | | Aerosil OX50 | Aerosil OX50 | Aerosil OX50 | Aerosil OX50 | Aerosil OX50 |
| | Thickness | | 0.5μm | 0.5μm | 0.5μm | 0.5μm | 0.4μm |
| | Covering ratio(%) | | 80 | 80 | 80 | 80 | 80 |
| Corrosion suppression effect | | | A | B | C | D | C |
| Rate property | | | A | C | C | C | B |
| Initial capacity | | | B | A | C | C | D |
| High temperature cycle property | | | B | B | C | D | C |

[Table 4]

[Table 4. Results of Examples 1-16 to 1-20]

| | | | Ex. 1-16 | Ex. 1-17 | Ex. 1-18 | Ex. 1-19 |
|---|---|---|---|---|---|---|
| Coating polymer | (Meth)acrylic acid ester monomer | Type | Ethyl acrylate/butyl acrylate | Ethyl acrylate/butyl acrylate | Ethyl acrylate/butyl acrylate | Ethyl acrylate/butyl acrylate |
| | | Amount (parts) | 35 | 55 | 55 | 55 |
| | α,β-unsaturated nitrile monomer | Type | Acrylonitrile | Acrylonitrile | Acrylonitrile | Acrylonitrile |
| | | Amount (parts) | 15 | 25 | 25 | 25 |
| | Vinyl monomer having an acidic functional group | Type | Methacrylic acid | Methacrylic acid | Methacrylic acid | Methacrylic acid |
| | | Amount (parts) | 50 | 20 | 20 | 20 |
| | Cross-linking agent | Type | None | None | Ethylene glycol dimethacrylate | Ethylene glycol dimethacrylate |
| | | Amount (parts) | 0.0 | 0.0 | 2.5 | 2.5 |
| | Acid value of coating polymer (mgKOH/g) | | 50 | 20 | 20 | 20 |
| | Tg of coating polymer (°C) | | 116.9 | 34.5 | 34.5 | 34.5 |
| | SP value of coating polymer $(cal/cm^3)^{1/2}$ | | 11.3 | 10.2 | 10.2 | 10.2 |
| | Gel ratio of coating polymer | | 1.0 | 1.0 | 96.0 | 97.0 |
| Coating polymer layer | Coating method | | Coagulant precipitation method | Coagulant precipitation method | Coagulant precipitation method | Coagulant precipitation method |
| | Coagulant | | Calcium acetate | Calcium acetate | Calcium acetate | Aluminum acetate |
| | pH at coagulation | | - | - | - | - |
| | Fine particles | | Aerosil OX50 | Aerosil OX50 | Aerosil OX50 | Aerosil OX50 |
| | Thickness | | 0.5μm | 0.5μm | 0.5μm | 0.5μm |
| | Covering ratio(%) | | 80 | 80 | 80 | 80 |
| Corrosion suppression effect | | | B | C | A | B |
| Rate property | | | D | C | C | C |
| Initial capacity | | | C | C | B | B |
| High temperature cycle property | | | D | C | A | B |

[Table 5]

[Table 5. Results of Examples 1-21 to 1-24]

| | | | Ex. 1-20 | Ex. 1-21 | Ex. 1-22 | Ex. 1-23 |
|---|---|---|---|---|---|---|
| Coating polymer | (Meth)acrylic acid ester monomer | Type | Ethyl acrylate/butyl acrylate | Ethyl acrylate/butyl acrylate | Ethyl acrylate/butyl acrylate | Ethyl acrylate/butyl acrylate |
| | | Amount (parts) | 55 | 55 | 55 | 55 |
| | α,β-unsaturated nitrile monomer | Type | Acrylonitrile | Acrylonitrile | Acrylonitrile | Acrylonitrile |
| | | Amount (parts) | 25 | 25 | 25 | 25 |
| | Vinyl monomer having an acidic functional group | Type | Methacrylic acid | Methacrylic acid | Methacrylic acid | Methacrylic acid |
| | | Amount (parts) | 20 | 20 | 20 | 20 |
| | Cross-linking agent | Type | Allyl methacrylate | Allyl methacrylate | Allyl methacrylate | Allyl methacrylate |
| | | Amount (parts) | 0.2 | 0.2 | 0.2 | 0.2 |
| | Acid value of coating polymer (mgKOH/g) | | 25 | 25 | 20 | 20 |
| | Tg of coating polymer (°C) | | 34.5 | 34.5 | 34.5 | 34.5 |
| | SP value of coating polymer $(cal/cm^3)^{1/2}$ | | 10.2 | 10.2 | 10.2 | 10.2 |
| | Swellability of the coating polymer with the electrolyte solution | | 96.0 | 97.0 | 96.0 | 96.0 |
| Coating polymer layer | Coating method | | pH precipitation method | pH precipitation method | Spray dry (spray granulation method) | Spray dry (fluidizing granulation method) |
| | Coagulant | | Sulfuric acid | Acetic acid | - | - |
| | pH at coagulation | | 2 | 5 | - | - |
| | Fine particles | | Aerosil OX50 | Aerosil OX50 | - | - |
| | Thickness | | 0.5μm | 0.5μm | 0.5μm | 0.5μm |
| | Covering ratio(%) | | 80 | 80 | 80 | 80 |
| Corrosion suppression effect | | | A | C | A | B |
| Rate property | | | B | C | B | B |
| Initial capacity | | | C | B | A | B |
| High temperature cycle property | | | B | A | B | B |

[Table 6]

[Table 6. Results of Comparative Examples 1-1 and 1-2]

| | | | Comp. Ex. 1-1 | Comp. Ex. 1-2 |
|---|---|---|---|---|
| Coating polymer | (Meth)acrylic acid ester monomer | Type | - | - |
| | | Amount (parts) | - | - |
| | α,β-unsaturated nitrile monomer | Type | - | - |
| | | Amount (parts) | - | - |
| | Vinyl monomer having an acidic functional group | Type | - | Lithium acrylate salt |
| | | Amount (parts) | - | 100 |
| | Cross-linking agent | Type | - | - |
| | | Amount (parts) | - | - |
| | Acid value of coating polymer (mgKOH/g) | | - | 0 |
| | Tg of coating polymer (°C) | | - | 34.5 |
| | SP value of coating polymer $(cal/cm^3)^{1/2}$ | | - | 14.5 |
| | Swellability of the coating polymer with the electrolyte solution | | - | 0.0 |
| Coating polymer layer | Coating method | | Nothing used | Coagulant precipitation method |
| | Coagulant | | - | Calcium acetate |
| | pH at coagulation | | - | - |
| | Fine particles | | - | Aerosil OX50 |
| | Thickness | | - | - |
| | Covering ratio (%) | | - | 20 |
| Corrosion suppression effect | | | D | E |
| Rate property | | | E | C |
| Initial capacity | | | C | C |
| High temperature cycle property | | | D | E |

[Discussion]

As can be seen from Tables 1 to 6, since the particles of the positive electrode active material were coated with the coating polymer in Examples 1-1 to 1-23, corrosion of the current collector was more suppressed than in Comparative Examples 1-1 and 1-2. It is thus found that, according to the present invention, a lithium secondary battery having excellent rate property and high-temperature cycle property can be realized.

In the following Examples 2-1 to 2-6 and Comparative Examples 2-1 to 2-5, properties were evaluated as follows.

(Method for measuring thickness of coating material layer)

Coated active material particles (C) were dried, and then the weight of the coating material layer portion was measured. Then the surface area of the active material was calculated from the specific surface area 0.25 $m^2/g$ of the active material $LiCoO_2$, and the thickness of the coating material layer was calculated using these values.

(High-temperature cycle property)

The lithium ion secondary battery obtained in Examples and Comparative Examples was charged to 4.3 V using a 0.1 C constant current method and then discharged to 3.0 V at 0.1 C, and this cycle was repeated 100 times. The ratio of the capacity after the 100th charging-discharging relative to the initial capacity was determined as a capacity retention ratio, and this value was used as the evaluation criteria for the high-temperature cycle property. Higher value is indicative of higher high-temperature cycle property. The entire measurement of the high-temperature cycle property was performed at an environment of a temperature of 60°C. The evaluation criteria are as follows.

A: 95% or more
B: Less than 95% and 85% or more.
C: Less than 85% and 75% or more.
D: Less than 75% and 60% or more.
E: Less than 60%.

(Output property)

The lithium ion secondary battery obtained in Examples and Comparative Examples was charged to 4.3 V using a 0.1 C constant current method and then discharged to 3.0 V at 0.1 C to determine a 0.1 C discharge capacity. Then the secondary battery was charged to 4.3 V at 0.1 C and then discharged to 3.0 V at 2 C to determine a 2 C discharge capacity. This measurement was performed on 10 battery cells, and the averages of the measurement values were used as a 0.1 C discharge capacity "a" and a 2 C discharge capacity "b". A capacity retention ratio represented by the ratio of the 2 C discharge capacity "b" to the 0.1 C discharge capacity "a" ((b/a)×100, unit:%) was determined, and this value was used as the evaluation criteria for the rate property. Higher value is indicative of higher rate property. The entire measurement of the rate property was performed in an environment of a temperature of 25°C. The evaluation criteria are as follows.

A: 95% or more.
B: Less than 95% and 85% or more.
C: Less than 85% and 75% or more.
D: Less than 75% and 60% or more.
E: Less than 60%.

(Internal resistance)

The lithium ion secondary battery produced in Examples and Comparative Examples was left to stand for 24 hours and then subjected to charging-discharging operation at 4.2V and a charging-discharging rate of 0.1 C. Then the charging-discharging operation was performed in an environment of -30°C, and a voltage (ΔV) 10 seconds after the onset of discharging was measured. Smaller value is indicative of smaller internal resistance, and higher capability of fast charging and discharging.

A: Less than 0.2V.
B: 0.2 V or higher and less than 0.3 V.
C: 0.3 V or higher and less than 0.5 V.
D: 0.5V or higher and less than 0.7 V.
E: 0.7 V or higher.

(Electrode property: Peel strength)

A positive electrode having an electrode active material layer formed thereon was cut into a rectangular shape of 2.5 cm width × 10 cm length to thereby prepare a test piece, and the test piece was secured with the surface of the electrode active material layer facing upward. A cellophane tape was affixed to the surface of the electrode active material layer of the test piece, and then stress when the cellophane tape was peeled from one end of the test piece at a rate of 50 mm/min in a 180° direction was measured. The measurement was performed 10 times, and the average of the measurement values was determined, and this value was used as peel strength (N/m). The determined value was used as the evaluation criteria for the peel strength, and the evaluation was made using the following criteria. Higher value is indicative of higher binding property of the electrode.

A: 15 N/m or larger.
B: 10 N/m or larger and smaller than 15 N/m.
C: 5.0 N/m or larger and smaller than to 10 N/m.
D: Smaller than 5.0 N/m.

(Dispersion uniformity)

A positive electrode plate was cut, and the cross section was taken. The active material layer in the cross section was divided in three portions, wherein the surface of the active material layer in contact with the current collector was defined as a lower end, and a position 5 μm below the upper portion of the electrode plate was defined as an upper end. Then measurement was performed using an electron probe micro-analyzer (EPMA) at three 20 × 20 μm regions extracted from the upper 1/3 portion and three 20 × 20 μm regions extracted from the lower 1/3 portion. The average carbon containing ratio (percent by weight) for the three upper regions was denoted by X, and the average carbon containing ratio (percent by weight) for the three lower regions was denoted by Y. Then the value of dispersion uniformity = X/Y was calculated.

(Covering ratio with polymer)

Coated active material particles were dispersed in an epoxy resin, and the epoxy resin was cured. Then the epoxy resin was cooled to a temperature of -80°C and cut using a microtome to produce a thin piece. The coated portions of the thin piece were stained with vapor of an aqueous ruthenium tetroxide solution of a concentration of 0.5% for about 5 minutes and observed under a TEM (transmission electron microscope). The concentration of the coated active material was adjusted such that 5 to 20 cross sections were observable in an area of 28 μm × 35 μm (magnification: 2,000 times to 6,000 times). 100 Particles were selected, and their coated states were observed.

The observed images were visually checked. An active material in which 80% or more of its cross-sectional length was coated was ranked A, and an active material in which 50% to 79% of the cross-sectional length was coated was ranked B. The covering ratio was determined from the following formula.

Covering ratio (%) = (the number of A ranked active materials) + 0.5 * (the number of B ranked active materials)

[Example2-1]

(A) Production of water dispersion of coating polymer

A SUS-made separable flask of 1 L capacity equipped with a stirrer, a reflux cooling tube, and a thermometer was pre-charged with 250 parts of ion exchanged water and 2 parts of sodium dodecyl diphenyl ether sulfonate as an emulsifier, and the mixture was sufficiently stirred. Then the temperature of the mixture was adjusted to 70°C, and 0.2 parts of an aqueous potassium persulfate solution was added thereto.

A separate 5 MPa pressure resistant vessel equipped with a stirrer was charged with 50 parts of ion exchanged water, 0.4 parts of sodium hydrogencarbonate, 0.115 parts of sodium dodecyl diphenyl ether sulfonate of a concentration of 30% as an emulsifier, 3 parts of methacrylic acid, 47 parts of ethyl acrylate, 20 parts of butyl acrylate, and 30 parts of acrylonitrile, and the mixture was sufficiently stirred to prepare an aqueous emulsion solution.

The obtained aqueous emulsion solution was continuously added dropwise to the aforementioned separable flask over 4 hours. When the polymerization conversion rate reached 90%, the reaction temperature was adjusted to 80°C, and the reaction was further continued for 2 hours. Then the mixture was cooled to terminate the reaction, whereby a water dispersion (A) of the coating polymer was obtained. The polymerization conversion rate was 99%.

(B) Production of binder

A polymerization tank A was charged with 130 parts of ion exchanged water. Then a solution prepared by dissolving 0.8 parts of ammonium persulfate as a polymerization initiator in 10 parts of ion exchanged water was added, and the mixture was heated to 80°C.

Separately, a polymerization tank B was charged with 78 parts of 2-ethylhexyl acrylate, 20 parts of acrylonitrile, 2.0 parts of methacrylic acid, 18 parts of polyvinyl alcohol having a hydrophobic terminal group (product name: "POVAL MP-102", manufactured by KURARAY Co., Ltd.), and 377 parts of ion exchanged water. Then the mixture was stirred to produce an emulsion.

The produced emulsion in the polymerization tank B was successively added to the polymerization tank A over about. 240 minutes, and the mixture was stirred for about 30 minutes. When the amount consumed of the monomers reached 95%, the mixture was cooled to terminate the reaction, whereby a water dispersion (B) of the binder was obtained. The pH of the obtained binder was 2.5, its glass transition temperature was -32°C, and its volume average particle diameter was 150 nm.

(C) Production of coated active material particles (C)

As positive electrode active material particles, $LiCoO_2$ having a 50% cumulative particle diameter of 15 μm was used.
The concentration of the water dispersion (A) of the coating polymer obtained in the aforementioned step (A) was adjusted to prepare a 28% water dispersion.
100 Parts of the positive electrode active material particles, 2 parts (in terms of solid content) of the 28% water dispersion of the coating polymer, 2 parts of acetylene black (HS-100: DENKI KAGAKU KOGYO KABUSHIKI KAISHA, average particle diameter: 48 nm), and 400 parts of ion exchanged water were stirred and mixed in a "TK homomixer" (manufactured by PRIMIX Corporation) to obtain a slurry with a solid concentration of 20%.
This slurry was granulated by spray drying using a spray dryer (OC-16, manufactured by OHKAWARA KAKOHKI Co., Ltd.) under the conditions of a rotation speed of a rotating disk-type atomizer (diameter: 65 mm) of 25,000 rpm, a hot-air temperature of 150°C, and a temperature of a particle collection outlet port of 90°C to thereby obtain coated active material particles (C) with an average particle diameter of 15.3 μm. In the obtained coated active material particles (C), the positive electrode active material particles were coated with a coating material of the coating polymer and acetylene black.
The thickness of the coating material layer and the covering ratio of the coated active material particles (C) with the coating material layer were measured. The results are shown in Table 7.

(D) Production of composite particles for secondary battery positive electrode

The concentration of the water dispersion (B) of the binder obtained in the aforementioned step (B) was adjusted to prepare a water dispersion with a solid concentration of 40%.
100 Parts of the coated active material particles (C), 0.5 parts of acetylene black (HS-100: DENKI KAGAKU KOGYO KABUSHIKI KAISHA), 2.5 parts (in terms of solid content) of the 40% water dispersion of the binder, 0.8 parts (in terms of solid content) of an aqueous carboxymethyl cellulose solution (solid concentration: 2%) having a degree of etherification of 0.8 and as a thickener, and a proper amount of water were stirred and mixed using a "TK homomixer" (manufactured by PRIMIX Corporation) to obtain a slurry with a solid concentration of 20%.
This slurry was granulated by spray drying using a spray dryer (OC-16, manufactured by OHKAWARA KAKOHKI Co., Ltd.) under the conditions of a rotation speed of a rotating disk-type atomizer (diameter: 65 mm) of 25,000 rpm, a hot-air temperature of 150°C, and a temperature of a particle collection outlet port of 90°C to thereby obtain composite particles (D) for a secondary battery positive electrode that had an average particle diameter of 32.2 μm.

(E) Production of positive electrode plate

The composite particles (D) obtained in the aforementioned step (D) were supplied to pressing rolls (roll temperature: 100°C, pressing linear pressure: 500 kN/m) of a roll press (press-cutting rough-surface hot roll: manufactured by HIRANO GIKEN KOGYO Co., Ltd.) at a feed rate of 800 g/minutes using a constant amount feeder (NIKKA Sprayer K-V, manufactured by NIKKA LIMITED). Then a 20 μm-thick aluminum foil was inserted between the pressing rolls to cause the composite particles supplied from the constant amount feeder to adhere to the aluminum foil, and compressing was performed at a forming rate of 15 m/minute to thereby produce a positive electrode plate (E) on which a positive electrode active material layer having a thickness of 65 μm and a density of 3.2 $g/cm^3$ was formed. The peel strength of the obtained positive electrode plate (E) was measured, and its dispersion uniformity was evaluated. The results are shown in Table 7.

(F) Production of battery

The positive electrode plate (E) was cut into a disk shape with a diameter of 16 mm.
A disk-shaped porous film separator made of polypropylene having a diameter of 18 mm and a thickness of 25 μm and a negative electrode made of metal lithium having a diameter of 17 mm and a thickness of 0.5 mm were prepared.
The separator, the negative electrode, and an expanded metal were stacked in that order on the surface of the disk-shaped positive electrode on its positive electrode active material layer side. The stack was stored in a stainless steel-made coin-type outer container (diameter: 20 mm, height: 1.8 mm, thickness of stainless steel: 0.25 mm) equipped with a polypropylene-made packing. An electrolyte solution was poured into the outer container such that no air bubbles remained, and a stainless steel cap having a thickness of 0.2 mm was put on and secured to the outer container via the polypropylene-made packing to seal the battery can, whereby a lithium ion coin battery having a diameter of 20 mm and a thickness of about 2 mm was produced.

The electrolyte solution used was a solution (SP value: 10.6) prepared by dissolving $LiPF_6$ at a concentration of 1 mole/L in a solvent mixture prepared by mixing ethylene carbonate (EC) and diethyl carbonate (DEC) at EC:DEC = 1:2 (volume ratio at 20°C). The relative dielectric constant of the electrolyte solution was 29.0, and its viscosity was 1.1 cp. With this battery, output property was evaluated. The results are shown in Table 7.

[Examples 2-2 and 2-3]

Composite particles for a secondary battery positive electrode, a secondary battery, and their components were produced and evaluated in the same manner as in Example 2-1 except that, when the coating polymer was produced in step (A), the composition of the monomers used was changed as shown in Table 7. The results are shown in Table 7.

[Examples 2-4 and 2-5]

Composite particles for a secondary battery positive electrode, a secondary battery, and their components were produced and evaluated in the same manner as in Example 2-1 except that, in step (C), the adding amount (in terms of solid content) of the 28% water dispersion of the coating polymer was changed from 2 parts to 1.5 parts (Example 2-4) or to 4 parts (Example 2-5). The results are shown in Table 7.

[Example 2-6]

Composite particles for a secondary battery positive electrode, a secondary battery, and their components were produced and evaluated in the same manner as in Example 2-1 except that, in step (C), Ketjen black (EC600JD (manufactured by LION), average particle diameter: 34 nm) was used in place of acetylene black. The results are shown in Table 7.

[Example 2-7]

Composite particles for a secondary battery positive electrode, a secondary battery, and their components were produced and evaluated in the same manner as in Example 2-1 except that, when the coated active material particles (C) were produced in step (C), $LiNiO_2$ (50% cumulative particle diameter: 15 $\mu$m) was used as the positive electrode active material particles in place of $LiCoO_2$. The results are shown in Table 7.

[Example 2-8]

Composite particles for a secondary battery positive electrode, a secondary battery, and their components were produced and evaluated in the same manner as in Example 2-1 except that the following matters were changed. The results are shown in Table 8.

- In the production of the binder in step (B), the amount of 2-ethylhexyl acrylate was changed from 78 parts to 76 parts, the amount of acrylonitrile was changed from 20 parts to 21 parts, and the amount of methacrylic acid was changed from 2.0 parts to 3.0 parts. The pH of the obtained binder was 2.5, its glass transition temperature was -32°C, and its volume average particle diameter was 150 nm.
- In the production of the coated active material particles (C) in step (C), $LiMnO_2$ (50% cumulative particle diameter: 15 $\mu$m) was used as the positive electrode active material particles in place of $LiCoO_2$.
- In the production of the composite particles for a secondary battery positive electrode in step (D), acetylene black was changed from HS-100 (product name, manufactured by DENKI KAGAKU KOGYO KABUSHIKI KAISHA) to HS-101 (product name, manufactured by DENKI KAGAKU KOGYO KABUSHIKI KAISHA).

[Example2-9]

Composite particles for a secondary battery positive electrode, a secondary battery, and their components were produced and evaluated in the same manner as in Example 2-1 except that the following matters were changed. The results are shown in Table 8.

- In the production of the binder in step (B), the amount of 2-ethylhexyl acrylate was changed from 78 parts to 74 parts, the amount of acrylonitrile was changed from 20 parts to 22 parts, and the amount of methacrylic acid was changed from 2.0 parts to 4.0 parts. The pH of the obtained binder was 2.5, its glass transition temperature was -32°C, and its volume average particle diameter was 150 nm.

- In the production of the coated active material particles (C) in step (C), $LiFePO_4$ (50% cumulative particle diameter: 2 μm) was used as the positive electrode active material particles in place of $LiCoO_2$. In addition, the amount of acetylene black was changed from 2 parts to 3.5 parts.
- In the production of the composite particles for a secondary battery positive electrode in step (D), the amount of the 40% water dispersion of the binder was changed from 2.5 parts to 1.25 parts, and the amount in terms of solid content of the binder added was changed to 0.5 parts. In addition, acetylene black was changed from HS-100 (product name, manufactured by DENKI KAGAKU KOGYO KABUSHIKI KAISHA) to HS-102 (product name, manufactured by DENKI KAGAKU KOGYO KABUSHIKI KAISHA).

[Comparative Example 2-1]

(E2) Production of positive electrode plate

The concentration of the water dispersion (B) of the binder obtained in step (B) in Example 2-1 was adjusted to prepare a water dispersion with a solid concentration of 40%.
100 Parts of $LiCoO_2$ with a 50% cumulative particle diameter of 15 μm ($LiCoO_2$ used in step (C)), 0.5 parts of acetylene black (HS-100: DENKI KAGAKU KOGYO KABUSHIKI KAISHA), 2.5 parts (in terms of solid content) of the 40% water dispersion of the binder, 0.8 parts (in terms of solid content) of an aqueous carboxymethyl cellulose solution (solid concentration: 2%) having a degree of etherification of 0.8 as a thickener, and a proper amount of water were stirred in a planetary mixer to prepare a positive electrode slurry.
The prepared positive electrode slurry was applied onto a 20 μm-thick aluminum foil using a comma coater so that the thickness after drying would become about 70 μm. The layer was dried at 50°C for 20 minutes, and then subjected to heat treatment at 150°C for 2 hours to obtain a raw material electrode sheet. The raw material electrode sheet was rolled using a roll press to produce a positive electrode plate (E2) composed of the aluminum foil and the electrode active material layer and having a density of 3.2 $g/cm^3$ with the thickness being controlled to 65 μm.
The peel strength of the obtained positive electrode plate (E2) was measured, and its dispersion uniformity was evaluated. The results are shown in Table 8.

(F2) Production of battery

A secondary battery was produced and evaluated in the same manner as in step (F) in Example 2-1 except that the positive electrode plate (E2) was used in place of the positive electrode plate (E) obtained in step (E) in Example 2-1. The results are shown in Table 8.

[Comparative Examples 2-2 and 2-3]

Composite particles for a secondary battery positive electrode, a secondary battery, and their components were produced and evaluated in the same manner as in Example 2-1 except that, when the coating polymer in step (A) was produced in step (A), the composition of the monomers used was changed as shown in Table 8. The results are shown in Table 8.

[Comparative Example 2-4]

(E3) Production of positive electrode plate

The concentration of the water dispersion (B) of the binder obtained in step (B) in Example 2-1 was adjusted to prepare a water dispersion with a solid concentration of 40%.
100 Parts of the coated active material particles (C) obtained in step (C) in Example 2-1, 0.5 parts of acetylene black (HS-100: DENKI KAGAKU KOGYO KABUSHIKI KAISHA), 2.5 parts (in terms of solid content) of the 40% water dispersion of the binder, 0.8 parts (in terms of solid content) of an aqueous carboxymethyl cellulose solution (solid concentration: 2%) having a degree of etherification of 0.8 as a thickener, and a proper amount of water were stirred in a planetary mixer to prepare a positive electrode slurry.
The positive electrode slurry was applied onto a 20 μm-thick aluminum foil using a comma coater so that the thickness after drying would become about 70 μm. The layer was dried at 50°C for 20 minutes, and then subjected to heat treatment at 150°C for 2 hours to obtain a raw material electrode sheet. The raw material electrode sheet was rolled using a roll press to obtain a positive electrode plate (E3) composed of the aluminum foil and the electrode active material layer and having a density of 3.2 $g/cm^3$ with the thickness being controlled to 65 μm.
The peel strength of the obtained positive electrode plate (E3) was measured, and its dispersion uniformity was evaluated. The results are shown in Table 8.

(F3) Production of battery

A battery was produced and evaluated in the same manner as in step (F) in Example 2-1 except that the positive electrode plate (E3) was used in place of the positive electrode plate (E) obtained in step (E) in Example 2-1. The results are shown in Table 8.

[Comparative Example 2-5]

(D2) Production of composite particles for secondary battery positive electrode

$LiCoO_2$ with a 50% cumulative particle diameter of 15 μm was used as the positive electrode active material particles.
The concentration of the water dispersion (A) of the coating polymer obtained in step (A) in Example 2-1 was adjusted to prepare a 28% water dispersion.
The concentration of the water dispersion (B) of the binder obtained in step (B) in Example 2-1 was adjusted to prepare a water dispersion with a solid concentration of 40%.
100 Parts of the positive electrode active material particles, 2 parts (in terms of solid content) of the 28% water dispersion of the coating polymer, 2.5 parts of acetylene black (HS-100: DENKI KAGAKU KOGYO KABUSHIKI KAISHA), 2.5 parts (in terms of solid content) of the 40% water dispersion of the binder, 0.8 parts in terms of solid content of an aqueous carboxymethyl cellulose solution (solid concentration: 2%) having a degree of etherification of 0.8 as a thickener, and 350 parts of ion exchanged water were stirred and mixed using a "TK homomixer" (manufactured by PRIMIX Corporation) to obtain a slurry with a solid concentration of 20%.
This slurry was granulated by spray drying using a spray dryer (OC-16, manufactured by OHKAWARA KAKOHKI Co., Ltd.) under the conditions of a rotation speed of a rotating disk-type atomizer (diameter: 65 mm) of 25,000 rpm, a hot-air temperature of 150°C, and a temperature of a particle collection outlet port of 90°C to thereby obtain composite particles (D2) for a secondary battery positive electrode.

(H) Production of battery etc.

A secondary battery and its components were produced and evaluated in the same manner as in steps (E) and (F) in Example 2-1 except that the composite particles (D2) were used in place of the composite particles (D) obtained in step (D) in Example 2-1. The results are shown in Table 8.
[Table 7]

Table 7

| | Ex. 2-1 | Ex. 2-2 | Ex. 2-3 | Ex. 2-4 | Ex. 2-5 | Ex. 2-6 | Ex. 2-7 |
|---|---|---|---|---|---|---|---|
| (Meth)acrylate amount | 67 | 86 | 56 | 67 | 67 | 67 | 67 |
| EA amount | 47 | | 46 | 47 | | 47 | 47 |
| BA amount | 20 | 32 54 | 10 | 20 | 47 20 | 20 | 20 |
| 2-EHA amount | 0 | 0 | 0 | 0 | 0 | 0 | 0 |
| AN amount | 30 | 10 | 40 | 30 | 30 | 30 | 30 |
| Acidic monomer amount | 3 | 4 | 4 | 3 | 3 | 3 | 3 |
| TG | 6.9 | -26.2 | 26.8 | 6.9 | 6.9 | 6.9 | 6.9 |
| Covering ratio (%) | 81 | 85 | 83 | 81 | 82 | 83 | 81 |
| Coating polymer SP value | 11.45 | 10.57 | 11.91 | 11.45 | 11.45 | 11.45 | 11.45 |
| Coating material layer thickness | 0.3μm | 0.3μm | 0.3μm | 0.2μm | 0.5μm | 0.3μm | 0.3μm |
| Type of conducting agent C | AcB | AcB | AcB | AcB | AcB | KB | AcB |
| Particle diameter of conducting agent C | 35.0 | 35.0 | 35.0 | 35.0 | 35.0 | 40.0 | 35.0 |
| Amount of conducting agent D | 0.5 | 0.5 | 0.5 | 0.5 | 0.5 | 0.5 | 0.5 |

(continued)

| | Ex. 2-1 | Ex. 2-2 | Ex. 2-3 | Ex. 2-4 | Ex. 2-5 | Ex. 2-6 | Ex. 2-7 |
|---|---|---|---|---|---|---|---|
| Coating method | Spray | Spray | Spray | Spray | Spray | Spray | Spray |
| Dispersion uniformity | 1.2 | 1.2 | 0.8 | 1.4 | 1.2 | 1.3 | 1.2 |
| Electrode production method | Spray | Spray | Spray | Spray | Spray | Spray | Spray |
| Coated active material particle diameter | 15.3 | 15.3 | 15.3 | 15.3 | 15.3 | 15.3 | 15.3 |
| Composite particle diameter | 32.2 | 31.5 | 31.0 | 30.5 | 30.9 | 31.5 | 32.2 |
| High temperature cycle property | A | C | B | C | D | B | B |
| Output property | A | C | C | B | C | B | B |
| Internal resistance | A | B | D | B | C | B | D |
| Peel strength | A | B | B | B | B | B | B |

[Table 8]

Table 8

| | Ex. 2-8 | Ex. 2-9 | Comp. Ex. 2-1 | Comp. Ex. 2-2 | Comp. Ex. 2-3 | Comp. Ex. 2-4 | Comp. Ex. 2-5 |
|---|---|---|---|---|---|---|---|
| (Meth)acrylate amount | 67 | 67 | - | 22 | 98 | 22 | 67 |
| EA amount | 47 | 47 | - | 0 | 12 | 22 | 47 |
| BA amount | 20 | 20 | - | 22 | 0 | 22 | 20 |
| 2-EHA amount | 0 | 0 | - | 0 | 86 | 0 | 0 |
| AN amount | 30 | 30 | - | 75 | 0 | 75 | 30 |
| Acidic monomer amount | 3 | 3 | - | 3 | 2 | 3 | 3 |
| TG | 6.9 | 6.9 | - | 70.4 | -57.4 | 70.4 | 6.9 |
| Covering ratio(%) | 81 | 81 | - | 84 | 83 | 80 | - |
| Coating polymer SP value | 11.45 | 11.45 | - | 13.29 | 9.40 | 13.29 | 11.45 |
| Coating material layer thickness | 0.3μm | 0.1μm | | 0.3μm | 0.3μm | 0.3μm | 0.3μm |
| Type of conducting agent C | AcB | AcB | - | AcB | AcB | AcB | - |
| Particle diameter of conducting agent C | 35.0 | 35.0 | - | 35.0 | 35.0 | 35.0 | - |
| Amount of conducting agent D | 0.5 | 0.5 | - | 0.5 | 0.5 | 0.5 | 2.5 |
| Coating method | Spray | Spray | - | Spray | Spray | Spray | Spray |
| Dispersion uniformity | 2.2 | 3.2 | 3.9 | 1.2 | 1.5 | 4.0 | 1.4 |
| Electrode production method | Spray | Spray | Coating | Spray | Spray | Coating | Spray |
| Coated active material particle diameter | 15.3 | 15.3 | - | 15.2 | 15.3 | 15.3 | - |
| Composite particle diameter | 32.2 | 32.2 | - | 28.0 | 31.0 | 29.0 | 29.8 |
| High temperature cycle property | D | B | E | E | E | E | C |

(continued)

| | Ex. 2-8 | Ex. 2-9 | Comp. Ex. 2-1 | Comp. Ex. 2-2 | Comp. Ex. 2-3 | Comp. Ex. 2-4 | Comp. Ex. 2-5 |
|---|---|---|---|---|---|---|---|
| Output property | C | D | D | D | D | D | E |
| Internal resistance | C | A | D | D | E | E | E |
| Peel strength | B | C | D | D | D | D | C |

The meanings of the abbreviations in the tables are as follows.

(Meth)acrylate amount: The total amount (parts) of (meth)acrylic acid ester monomers (ethyl acrylate, butyl acrylate, and 2-ethylhexyl acrylate) added when the coating polymer was polymerized.
EA amount: The amount (parts) of ethyl acrylate added when the coating polymer was polymerized.
BA amount: The amount (parts) of butyl acrylate added when the coating polymer was polymerized.
2-EHA amount: The amount (parts) of 2-ethylhexyl acrylate added when the coating polymer was polymerized.
AN amount: The amount (parts) of acrylonitrile added when the coating polymer was polymerized.
Acidic monomer amount: The amount (parts) of an acidic monomer (methacrylic acid) added when the coating polymer was polymerized.
TG: The glass transition temperature (°C) of the coating polymer.
Type of conducting agent C: The type of the conducting agent used when the coated active material particles were produced (e.g., step (C)). AcB: Acetylene black, KB: Ketjen black.
Particle diameter of conducting agent C: the particle diameter (nm) of the conducting agent used when the coated active material particles were produced (e.g., step (C)).
Amount of conducting agent D: The amount (parts) of the conducting agent used when the composite particles for a secondary battery positive electrode were produced (e.g., step (D)).
Coating method: Spraying: Spraying drying method, Poor solvent: Poor solvent precipitation method.
Electrode production method: Spray: Application and rolling of spray-dried particles, Coating: Slurry coating method.
Coated active material particle diameter: The particle diameter of the coated active material particles (50% volume cumulative diameter, μm).
Composite particle diameter: The particle diameter of the composite particles (50% volume cumulative diameter, μm).

As can be seen from Tables 7 and 8, in Examples 2-1 to 2-6 satisfying the requirements of the present invention, corrosion of the current collector was suppressed, and good results were thus obtained for the evaluation items in a well-balanced manner. However, when the active material particles were not coated with the coating material and were not composite particles (Comparative Example 2-1), when the SP value of the coating polymer was less than 9.5 $(cal/cm^3)^{1/2}$ or larger than 13 $(cal/cm^3)^{1/2}$ (Comparative Examples 2-2 to 2-4), and when composite particles using uncoated active material particles were used (Comparative Example 2-5), the results for the evaluation items were poorer than those in Examples 2-1 to 2-6.

## Claims

1. A method for producing a positive electrode for a lithium secondary battery, the method comprising: forming a layer of a positive electrode slurry composition containing coated active material particles, a binder, and an aqueous medium on a current collector made of aluminum or an aluminum alloy; and drying the layer of the positive electrode slurry composition, wherein
the coated active material particle includes: a particle of a positive electrode active material containing nickel; and a layer of a polymer that coats a surface of the particle of the positive electrode active material and has an SP value of 8 $(cal/cm^3)^{1/2}$ to 13 $(cal/cm^3)^{1/2}$.

2. The method for producing a positive electrode for a lithium secondary battery according to claim 1, wherein: the polymer includes an acidic functional group; and
an acid value of the polymer is 50 mg KOH/g or less.

3. The method for producing a positive electrode for a lithium secondary battery according to claim 1 or 2, wherein the coated active material particles are obtained by: fluidizing the particles of the positive electrode active material; and spraying a liquid composition containing the polymer and an aqueous medium onto the fluidized particles of the positive electrode active material.

4. The method for producing a positive electrode for a lithium secondary battery according to claim 1 or 2, wherein the coated active material particles are obtained by spraying a liquid composition containing the particles of the positive electrode active material, the polymer, and an aqueous medium.

5. The method for producing a positive electrode for a lithium secondary battery according to claim 1 or 2, wherein the coated active material particles are obtained by: precipitating the polymer on the surface of the particles of the positive electrode active material in a liquid composition containing the particles of the positive electrode active material, an aqueous medium, the polymer, and a polyvalent metal compound; causing fine particles having a particle diameter of 5 nm to 500 nm to adhere to the particles of the positive electrode active material on the surface of which the polymer is precipitated; and drying the resultant particles of the positive electrode active material.

6. The method for producing a positive electrode for a lithium secondary battery according to claim 1 or 2, wherein the coated active material particles are obtained by: adjusting a pH of a liquid composition containing the particles of the positive electrode active material, an aqueous medium, and the polymer to precipitate the polymer on the surface of the particles of the positive electrode active material; causing fine particles having a particle diameter of 5 nm to 500 nm to adhere to the particles of the positive electrode active material on the surface of which the polymer is precipitated; and drying the resultant particles of the positive electrode active material.

7. A positive electrode for a lithium secondary battery, obtained by the production method according to any one of claims 1 to 6.

8. A lithium secondary battery comprising the positive electrode for a lithium secondary battery according to claim 7, a negative electrode, a separator, and an electrolyte.

9. A composite particle for a lithium secondary battery positive electrode, the composite particle comprising a coated active material particle and a binder, wherein
the coated active material particle includes a positive electrode active material particle and a coating material that coats a surface of the positive electrode active material particle, and
the coating material contains a coating polymer having an SP value of 9.5 to 13 $(cal/cm^3)^{1/2}$ and a conducting agent.

10. The composite particle for a lithium secondary battery positive electrode according to claim 9, wherein the conducting agent is a conductive carbon material having a diameter within the range of 1 nm to 500 nm in terms of a 50% volume cumulative diameter.

11. A method for producing the composite particle for a lithium secondary battery positive electrode according to claim 9 or 10, the method comprising:

the step of dispersing the coated active material particles, the binder, and the conducting agent in an aqueous medium to obtain a slurry composition; and
the step of granulating the slurry composition by spray-drying the slurry composition.

12. A positive electrode for a lithium secondary battery, comprising: a current collector made of aluminum or an aluminum alloy; and a positive electrode active material layer that is formed on the current collector and includes the composite particles for a lithium secondary battery positive electrode according to claim 9 or 10.

13. The positive electrode for a lithium secondary battery according to claim 12, wherein, in the positive electrode active material layer, the composite particles for a lithium secondary battery positive electrode are mutually bonded.

14. A method for producing a positive electrode for a lithium secondary battery, the method comprising
the step of compressing the composite particles for a lithium secondary battery positive electrode according to claim 9 or 10 to form a positive electrode active material layer.

15. The method for producing a positive electrode for a lithium secondary battery according to claim 14, wherein the compressing is roll compressing.

**16.** A lithium secondary battery comprising the positive electrode for a lithium secondary battery according to claim 12 or 13.

**INTERNATIONAL SEARCH REPORT**

International application No.
PCT/JP2012/063736

**A. CLASSIFICATION OF SUBJECT MATTER**
*H01M4/1391*(2010.01)i, *H01M4/131*(2010.01)i, *H01M4/36*(2006.01)i, *H01M4/525*(2010.01)i, *H01M4/66*(2006.01)i

According to International Patent Classification (IPC) or to both national classification and IPC

**B. FIELDS SEARCHED**

Minimum documentation searched (classification system followed by classification symbols)
H01M4/00-4/62, H01M10/05-10/0587

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-157836 A (Denso Corp.), 30 May 2003 (30.05.2003), paragraphs [0014], [0024] to [0066] (Family: none) | 1,7-9,12,13, 16 |
| A | JP 2002-42817 A (Denso Corp.), 08 February 2002 (08.02.2002), entire text & US 2003/0027046 A1 & FR 2824668 A | 1,7-9.12.13. 16 |
| A | JP 2002-373643 A (Matsushita Electric Industrial Co., Ltd.), 26 December 2002 (26.12.2002), claims 1, 2, 4, 6 (Family: none) | 1,9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>14 August, 2012 (14.08.12) | Date of mailing of the international search report<br>28 August, 2012 (28.08.12) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2012/063736

C (Continuation). **DOCUMENTS CONSIDERED TO BE RELEVANT**

| Category* | Citation of document, with indication, where appropriate, of the relevant passages | Relevant to claim No. |
|---|---|---|
| A | JP 11-288720 A (Nippon Zeon Co., Ltd.), 19 October 1999 (19.10.1999), paragraph [0034] (Family: none) | 1,2,9 |
| A | JP 2003-272634 A (Hitachi Maxell, Ltd.), 26 September 2003 (26.09.2003), paragraphs [0018] to [0020], [0041] to [0045] (Family: none) | 1,9 |
| A | WO 2006/115272 A1 (Nippon Zeon Co., Ltd.), 02 November 2006 (02.11.2006), claims 1 to 11; paragraph [0051] & JP 4840357 B & US 2009/0325075 A1 & CN 101160635 A & KR 10-2008-0002880 A | 1,3,4,9,11, 14,15 |
| A | JP 2002-358959 A (Showa Denko Kabushiki Kaisha), 13 December 2002 (13.12.2002), paragraphs [0068], [0069] (Family: none) | 5,6 |
| A | JP 2009-26676 A (Toyota Motor Corp.), 05 February 2009 (05.02.2009), claims 1, 2; paragraphs [0032], [0033] (Family: none) | 10 |
| P,A | WO 2011/102497 A1 (Sumitomo Chemical Co., Ltd.), 25 August 2011 (25.08.2011), claims 1 to 14 & JP 2011-192644 A | 1,2,7-9,13, 16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000294252 A
- US 6455202 B
- JP 2009076433 A
- US 2009061325 A
- JP 2010534910A W
- US 2011129729 A
- JP 2001146427 A
- CA 2320501

### Non-patent literature cited in the description

- Polymer Handbook. VII Solubility Parament Values. John Wiley & Sons, 1989, 519-559